# EUROPEAN PATENT SPECIFICATION

(11) **EP 4 373 144 B1**
(45) Date of publication and mention of the grant of the patent: **22.07.2026**
(21) Application number: 22852114.2
(22) Date of filing: 01.08.2022
(51) Int. Cl.: H04W 12/04, H04W 12/06, H04W 12/041, H04W 12/069

(54) **COMMUNICATION METHOD AND RELATED APPARATUS**
KOMMUNIKATIONSVERFAHREN UND ZUGEHÖRIGE VORRICHTUNG
PROCÉDÉ DE COMMUNICATION ET APPAREIL ASSOCIÉ

(30) Priority: 05.08.2021 CN 202110898803
(43) Date of publication of application: 22.05.2024
(73) Proprietor: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN)
(74) Representative: Isarpatent
(86) International application number: PCT/CN2022/109393
(87) International publication number: WO 2023/011401

(56) References cited:
- CN-A- 111 866 858
- CN-A- 113 163 402
- US-A1- 2021 144 548
- US-A1- 2021 212 122
- NEC: "Discussion on use of established keys for AKMA root key", vol. SA WG3, no. Stockholm (Sweden); 20190311 - 20190315, 4 March 2019 (2019-03-04), XP051697577, Retrieved from the Internet <URL:http://www.3gpp.org/ftp/tsg%5Fsa/WG3%5FSecurity/TSGS3%5F94AH%5FKista/Docs/S3%2D190640%2Ezip> [retrieved on 20190304]
- "3 rd Generation Partnership Project; Technical Specification Group Services and System Aspects; Security architecture and procedures for 5G system (Release 15)", no. 20191201, 16 December 2019 (2019-12-16), XP051841293, Retrieved from the Internet <URL:https://ftp.3gpp.org/tsg_sa/WG3_Security/TSGS3_97_Reno/SA_86/33501-f70.doc> [retrieved on 20191216]
- HUAWEI, HISILICON: "Discussion on SA3 conclusions related to storage of KAUSF", 3GPP DRAFT; C1-214689, vol. CT WG1, 12 August 2021 (2021-08-12), pages 1 - 5, XP052040661
- SA3: "Reply LS on Storage of KAUSF", 3GPP DRAFT; S3-212291, vol. SA WG3, 30 May 2021 (2021-05-30), pages 1 - 2, XP052017541
- ZTE: "Kausf storing in AUSF", 3GPP DRAFT; S3-202906, vol. SA WG3, 30 October 2020 (2020-10-30), pages 1 - 3, XP051949483

## Description

Priority is claimed to Chinese Patent Application No. 202110898803.3, filed with the China National Intellectual Property Administration on August 5, 2021 and entitled "COMMUNICATION METHOD AND RELATED APPARATUS".

### TECHNICAL FIELD

This disclosure generally relates to the field of communication technologies, and the invention in particular relates to a communication method, a related apparatus, and a computer-readable storage medium.

### BACKGROUND

As network technologies develop rapidly, network security becomes an increasingly prominent issue. With development of 5th generation mobile communication (the 5th generation, 5G), two authentication methods supported by 5G technologies are 5G authentication and key agreement (5G authentication and key agreement, 5G AKA) and improved extensible authentication protocol method for 3rd generation authentication and key agreement (improved extensible authentication protocol method for 3rd generation authentication and key agreement, EAP-AKA'). In the two authentication methods, a terminal device side and a network device side separately generate an intermediate key Kausf by using a long-term key K.

Further, the terminal device side and the network device side each need to use the intermediate key Kausf to generate another key or a security context (the security context includes but is not limited to a key, an algorithm, a counter, and other materials used for a security function). In addition, when subsequently sending data to the terminal device side, the network device side also needs to use the intermediate key Kausf to perform security protection on the data. Therefore, both the terminal device side and the network device side need to store the intermediate key Kausf.

Currently, as specified in 5G AKA, in a registration procedure of a terminal device, after receiving a non-access stratum security mode command (non-access stratum security mode command, NAS SMC) message, the terminal device stores Kausf corresponding to the NAS SMC message. As specified in EAP-AKA', after receiving an extensible authentication protocol success (EAP-Success) message, a terminal device stores Kausf corresponding to the EAP-Success message. On a network device side, an authentication server function (authentication server function, AUSF), similar to the terminal device, also needs to store Kausf.

In research, the applicant finds that, according to an existing standard, when a terminal device accesses two or more public land mobile networks (public land mobile networks, PLMNs) simultaneously, a problem that Kausf stored on a network device side is different from Kausf stored on the terminal device may occur, which is also referred to as key out-of-synchronization.

The standard change proposal by NEC: "Discussion on use of established keys for AKMA root key", 3GPP DRAFT; S3-1 90640 DISCUSSION_ON_IMPLICIT-BOOTSTRAPPING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. SA WG3, no. Stockholm (Sweden); 20190311 - 20190315 4 March 2019 (2019-03-04), XP051697577 addresses the technical problem of the potential loss of synchronization between a User Equipment (UE) and an Authentication Server Function (AUSF) in the Home Public Land Mobile Network (HPLMN) during the authentication process. The solutions proposed here suggest that the KAUSF at the AUSF side is taken into use only after the authentication response is received and by requiring that the UE always uses the active security context. Further, the AUSF should store two KAUSFs per UE until the newer one is used, ensuring that the network can handle key refresh scenarios. One aspect of the solution here is also introducing a key identifier in the message exchanges between the AUSF and the UE to detect key refresh and ensure both sides have the same keys. These measures aim to mitigate the risk of synchronization issues and ensure secure and reliable authentication procedures in 5G networks.

The 3GPP discussion paper SA3: "Reply LS on Storage of KAUSF", 3GPP Draft; S3-212291, vol. SA WG3, 30 May 2021 (2021-05-30), pages 1-2, XP052017541 also addresses the technical problem of a potential de-synchronization of the KAUSF (Key Authentication Server Function) between a User Equipment (UE) and the network, particularly when the UE receives multiple authentication requests simultaneously via different access types. The solution proposed here includes that the AMF (Access and Mobility Management Function) is mandated to initiate an SMC procedure soon after a successful primary authentication and key agreement procedure. This is specifically for 5G AKA-based authentication and not for EAP-based authentication. The proposal also includes a sequential processing of authentication requests, that is that if the UE receives more than one authentication request simultaneously via different access types (e.g., initial registration after UE powers on, UE initiating service request procedures via both NAS connections), the UE should process these authentication challenges in sequence. If the first authentication procedure is 5G-AKA, the UE should respond to the second authentication challenge after sending the Authentication Response message to the network. If the first authentication procedure is EAP-AKA', the UE should respond to the second authentication challenge after receiving the EAP Success/Failure from the network.

### SUMMARY

The object of the present invention is to provide a communication method, a related apparatus, and a computer-readable storage medium to solve this key out-of-synchronization problem. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a communication method. The method includes: A unified data management receives a plurality of authentication vector obtaining request messages from one or more authentication server functions for a same terminal device, where the plurality of authentication vector obtaining request messages are for obtaining authentication vectors corresponding to the terminal device; and the unified data management sequentially processes the plurality of authentication vector obtaining request messages.

In this embodiment of this application, the unified data management (unified data management, UDM) processes the plurality of authentication vector obtaining request messages in a sequence of receiving the plurality of authentication vector obtaining request messages. The plurality of authentication vector obtaining request messages are sequentially processed, to avoid a problem that subsequently an intermediate key Kausf stored on the UE and an intermediate key Kausf stored on a network device side are out of synchronization because the UE receives a plurality of authentication requests whose receiving time sequence is uncontrollable. The foregoing method can ensure that the intermediate key (Kausf-2) stored on the UE is consistent with the intermediate key (Kausf-2) stored on the network device side, avoiding key out-of-synchronization.

With reference to the first aspect, according to the invention of the first aspect, that the unified data management sequentially processes the plurality of authentication vector obtaining request messages includes: The unified data management sends a first authentication vector to a first authentication server function in response to a first authentication vector obtaining request message; and before the unified data management receives a first authentication result confirmation request message for the first authentication vector, the unified data management suspends processing of a second authentication vector obtaining request message, where the first authentication result confirmation request message includes an identifier of the first authentication server function, and a time point at which the unified data management receives the first authentication vector obtaining request message is earlier than a time point of receiving the second authentication vector obtaining request message.

According to the invention, when the UDM receives a plurality of authentication vector obtaining request messages, the UDM processes the plurality of authentication vector obtaining request messages in a sequence of receiving the plurality of authentication vector obtaining request messages. Before receiving the first authentication result confirmation request message corresponding to the first authentication vector, the UDM suspends processing of the second authentication vector obtaining request message. The plurality of authentication vector obtaining request messages for the UE are controlled on the UDM, to ensure that an authentication procedure of a first communication network associated with the first authentication vector obtaining request message is first performed. In the authentication procedure between the UE and the first communication network, both the UE and the network device side store a first intermediate key Kausf-1 related to the first communication network. After receiving the first authentication result confirmation request message for the first authentication vector, the UE resumes processing the second authentication vector obtaining request message, that is, resumes performing an authentication procedure of a second communication network. After the authentication procedure is completed, the intermediate keys finally stored on the UE and the network device side are both a second intermediate key Kausf-2 associated with the second communication network. The foregoing method can ensure that the intermediate key stored on the UE is always consistent with the intermediate key stored on the network device side, avoiding key out-of-synchronization.

With reference to the first aspect, in a possible implementation of the first aspect, the unified data management receives the first authentication result confirmation request message; and the unified data management stores the identifier of the first authentication server function in response to the first authentication result confirmation request message.

Specifically, the first AUSF sends the first authentication result confirmation request message for the first authentication vector to the UDM. The first authentication result confirmation request message may further carry one or more of the following information: a subscriber permanent identifier (subscriber permanent identifier, SUPI), a timestamp, an authentication result, an authentication type (authentication type), a serving network name, and the identifier of the first AUSF. Optionally, information about the authentication type indicates that an authentication method is 5G AKA. For example, the first authentication result confirmation request message may be a "Nudm_UEAuthentication_ResultConfirmation Request" message.

With reference to the first aspect, in a possible implementation of the first aspect, the unified data management sends a second authentication vector to a second authentication server function in response to the second authentication vector obtaining request message; the unified data management receives a second authentication result confirmation request message for the second authentication vector, where the second authentication result confirmation request message includes an identifier of the second authentication server function; and the unified data management stores the identifier of the second authentication server function in response to the second authentication result confirmation request message.

Specifically, the second AUSF sends, to the UDM, the second authentication result confirmation request message corresponding to the second authentication vector. The second authentication result confirmation request message carries one or more of the following information: a SUPI, a timestamp, an authentication result, an authentication type (authentication type), a serving network name, and the identifier of the second AUSF. Optionally, information about the authentication type indicates that an authentication method is 5G AKA. For example, the second authentication result confirmation request message may be a "Nudm_UEAuthentication_ResultConfirmation Request" message.

With reference to the first aspect, in a possible implementation of the first aspect, that the unified data management stores the identifier of the second authentication server function in response to the second authentication result confirmation request message is specifically: The unified data management replaces the identifier of the first authentication server function with the identifier of the second authentication server function.

Optionally, the unified data management may notify the first authentication server function to delete the first intermediate key Kausf-1. In this way, it is ensured that the network device side stores only the second intermediate key Kausf-2, thereby ensuring that the intermediate key stored on the terminal device is consistent with the intermediate key stored on the network device side.

With reference to the first aspect, in a possible implementation of the first aspect, that the unified data management sequentially processes the plurality of authentication vector obtaining request messages is specifically: The unified data management sequentially processes the plurality of authentication vector obtaining request messages in response to an authentication method of the terminal device being 5G authentication and key agreement (5G Authentication and Key Agreement, 5G AKA).

With reference to the first aspect, in a possible implementation of the first aspect, the unified data management determines, based on subscription information of the terminal device, that the authentication method corresponding to the terminal device is 5G AKA. Specifically, after receiving the first authentication vector obtaining request message, the UDM determines the authentication method of the UE based on the subscription information of the UE. In this embodiment, the UDM selects 5G AKA as the authentication method of the UE in response to the first authentication vector obtaining request message.

According to a second aspect according to the invention, the invention also provides another communication method. The method includes: A terminal device receives a first authentication request message from a first access and mobility management function (access and mobility management function, AMF) in a first communication network and a second authentication request message from a second access and mobility management function entity in a second communication network; and the terminal device sequentially processes the first authentication request message and the second authentication request message.

According to the invention, after the terminal device receives a plurality of authentication request messages (the first authentication request message and the second authentication request message), the terminal device needs to sequentially process the plurality of authentication request messages, to avoid a problem that subsequently an intermediate key Kausf stored on the UE and an intermediate key Kausf stored on a network device side are out of synchronization because the UE receives a plurality of NAS SMC messages or EAP-Success messages whose receiving time sequence is uncontrollable. The foregoing method can ensure that the intermediate key (Kausf-2) stored on the UE is consistent with the intermediate key (Kausf-2) stored on the network device side, avoiding key out-of-synchronization.

Optionally but not claimed, a first AUSF and a second AUSF are a same AUSF entity.

With reference to the second aspect, according to the invention of the second aspect, that the terminal device sequentially processes the first authentication request message and the second authentication request message includes: In response to the first authentication request message, the terminal device performs authentication verification on the first communication network and generates a first intermediate key Kausf-1; when the authentication verification performed by the terminal device succeeds, the terminal device sends, to the first access and mobility management function entity, a first authentication response message indicating that the authentication verification succeeds; the terminal device receives a first non-access stratum security mode command NAS SMC message from the first access and mobility management function, where the first NAS SMC message is associated with the first authentication request message; the terminal device stores the first intermediate key Kausf-1 in response to the first NAS SMC message, and performs authentication verification on the second communication network based on the second authentication request message and generates a second intermediate key Kausf-2; the terminal device receives a second non-access stratum security mode command NAS SMC message from the second access and mobility management function, where the second NAS SMC message is associated with the second authentication request message; and the terminal device replaces the stored first intermediate key Kausf-1 with the second intermediate key Kausf-2 in response to the second NAS SMC message.

It may be understood that the terminal device may receive, although not claimed, the first authentication request message and the second authentication request message simultaneously or at adjacent moments.

For understanding of "simultaneously", it may be considered that the UE receives two messages at a same moment or at close moments. Specifically, if the UE receives the first authentication request message and the second authentication request message at a same moment, the UDM randomly selects one of the messages for processing. In this application, it is assumed that the UE selects the first authentication request message for processing. If the UE receives the first authentication request message and the second authentication request message at close moments, the UE processes the first authentication request message and the second authentication request message in a sequence of receiving the messages.

A specific understanding of a close moment is as follows: When the UE receives the first authentication request message, the UE may just receive the request message and has not processed the first authentication vector obtaining request message yet; may receive the request message and start processing, but has not sent the response message corresponding to the first authentication request message; or may have processed the first authentication vector obtaining request message and sent the response message corresponding to the first authentication request message, but has not received the NAS SMC message corresponding to the first authentication request message. Regardless of whether the UE randomly selects an authentication request message or sequentially processes the authentication request messages, it may be understood that the UE first processes one of the authentication request messages and suspends the other authentication request message.

According to the invention, after the terminal device receives the plurality of authentication request messages, the terminal device needs to process a next authentication request message after receiving a NAS SMC message corresponding to a previous authentication request message, to avoid a problem that subsequently an intermediate key Kausf stored on the UE and an intermediate key Kausf stored on a network device side are out of synchronization because the UE receives a plurality of NAS SMC messages or EAP-Success messages whose receiving time sequence is uncontrollable. The foregoing method can ensure that the intermediate key (Kausf-2) stored on the UE is consistent with the intermediate key (Kausf-2) stored on the network device side, avoiding key out-of-synchronization.

With reference to the second aspect, according to the invention of the second aspect, that the terminal device stores the first intermediate key Kausf-1 in response to the first NAS SMC message includes: The terminal device determines, after receiving the first NAS SMC message, whether the first NAS SMC message is associated with the first authentication request message; and when the first NAS SMC message is associated with the first authentication request message, the terminal device stores the first intermediate key Kausf-1 from a first storage space to a second storage space.

Specifically, although not claimd, the UE determines, based on information carried in the first NAS SMC message, whether the first NAS SMC message is from the first AMF. First, whether the first NAS SMC message is associated with the first authentication request message (from the first AMF) is detected. For example, whether the first NAS SMC message is from the first AMF is determined based on the information carried in the first NAS SMC message. For another example, whether the first NAS SMC message is from the first AMF is determined based on an underlying message (for example, an RRC message or a Wi-Fi AP message) that carries the first NAS SMC. A determining method is not limited in this application.

After the UE determines that the first NAS SMC message is associated with the first AMF, the UE stores the first intermediate key Kausf-1 in response to the first NAS SMC message. The first intermediate key Kausf-1 generated by the UE in response to the first authentication request message is stored in a buffer area. In this embodiment of this application, a buffer area in which the terminal device stores an intermediate key Kausf is referred to as the first storage space.

After responding to the second NAS SMC message, the UE stores, in a long-term storage space, the second intermediate key Kausf-2 that is stored in the first storage space (the buffer area). Because the first intermediate key Kausf-1 is already stored in the long-term storage space, the UE replaces the first intermediate key Kausf-1 in the second storage space with the second intermediate key Kausf-2 in the first storage space. The UE performs authentication and communication by using the second intermediate key Kausf-2 in the second storage space (the long-term storage space).

With reference to the second aspect, according to the invention of the second aspect, before that the terminal device receives a first NAS SMC message, the method further includes: The terminal device suspends processing of the second authentication request message.

With reference to the second aspect, in a possible implementation of the second aspect, before that the terminal device suspends processing of the second authentication request message, the method further includes: The terminal device determines that an authentication method used by the terminal device to perform authentication verification on the first communication network/the second communication network is 5G authentication and key agreement 5G AKA.

With reference to the second aspect, in a possible implementation of the second aspect, that the terminal device sequentially processes the first authentication request message and the second authentication request message includes: In response to the first authentication request message, the terminal device performs authentication verification on the first communication network and generates a first intermediate key Kausf-1; when the authentication verification performed by the terminal device succeeds, the terminal device sends, to the first access and mobility management function entity, a first authentication response message indicating that the authentication verification succeeds; the terminal device receives a first extensible authentication protocol success EAP-success message from the first access and mobility management function, where the first EAP-success message is associated with the first authentication request message; the terminal device stores the first intermediate key Kausf-1 in response to the first EAP-success message, and performs authentication verification on the second communication network based on the second authentication request message and generates a second intermediate key Kausf-2; the terminal device receives a second extensible authentication protocol success EAP-success message from the second access and mobility management function, where the second EAP-success message is associated with the second authentication request message; and the terminal device replaces the stored first intermediate key Kausf-1 with the second intermediate key Kausf-2 in response to the second EAP-success message.

Specifically, although not claimed, the UE determines, based on information carried in the first EAP-success message, whether the first EAP-success message is from the first AMF. First, whether the first EAP-success message is associated with the first authentication request message (from the first AMF) is detected. For example, whether the first EAP-success message is from the first AMF is determined based on the information carried in the first EAP-success message. For another example, whether the first EAP-success message is from the first AMF is determined based on an underlying message (for example, an RRC message or a Wi-Fi AP message) that carries the first EAP-success. A determining method is not limited in this application.

With reference to the second aspect, in a possible but not claimed implementation of the second aspect, that the terminal device stores the first intermediate key Kausf-1 in response to the first EAP-success message includes: The terminal device determines, after receiving the first EAP-success message, whether the first EAP-success message is associated with the first authentication request message; and when the first EAP-success message is associated with the first authentication request message, the terminal device stores the first intermediate key Kausf-1 from a first storage space to a second storage space.

After the UE determines that the first EAP-success message is associated with the first AMF, the UE stores the first intermediate key Kausf-1 in response to the first EAP-success message. The first intermediate key Kausf-1 generated by the UE in response to the first authentication request message is stored in a buffer area. In this embodiment of this application, a buffer area in which the terminal device stores an intermediate key Kausf is referred to as the first storage space.

After responding to the second EAP-success message, the UE stores, in a long-term storage space, the second intermediate key Kausf-2 that is stored in the first storage space (the buffer area). Because the first intermediate key Kausf-1 is already stored in the long-term storage space, the UE replaces the first intermediate key Kausf-1 in the second storage space with the second intermediate key Kausf-2 in the first storage space. The UE performs authentication and communication by using the second intermediate key Kausf-2 in the second storage space (the long-term storage space).

With reference to the second aspect, in a possible implementation of the second aspect, before that the terminal device receives a first EAP-success message, the method further includes: The terminal device suspends processing of the second authentication request message.

With reference to the second aspect, in a possible implementation of the second aspect, before that the terminal device suspends processing of the second authentication request message, the method further includes: The terminal device determines that an authentication method used by the terminal device to perform authentication verification on the first communication network/the second communication network is an improved extensible authentication protocol method for 3rd generation authentication and key agreement EAP-AKA'.

With reference to the second aspect, in a possible implementation of the second aspect, the UE may determine, by detecting an information element carried in the first authentication request message, whether an authentication method corresponding to the first authentication request message is 5G AKA or EAP-AKA'.

For example, determining is performed based on indication information carried in the first authentication request message. The indication information may be header information, and the header information indicates a 5G AKA authentication method, an EAP-AKA' authentication method, or even another KAP-AKA' authentication method. The UE determines, based on the indication information in the header information, whether the authentication method corresponding to the first authentication request message is 5G AKA or EAP-AKA'. The indication information may also be the message itself. For example, if there is no EAP field, the 5G AKA authentication method is used; if there is an EAP field, the EAP-AKA' authentication method is used. For another example, one or more of the following information elements (or information) are detected: a key identifier in 5G (Key Set Identifier in 5G, ngKSI) or a location carried in an anti-bidding down between architectures (anti-bidding down between architectures, ABBA) parameter. For example, if an AV is in an EAP message, KAP-AKA' is used; otherwise, the UE determines that the authentication method corresponding to the first authentication request message is 5G AKA.

With reference to the second aspect, in a possible implementation of the second aspect, the terminal device accesses the first communication system by using a first access technology, and the terminal device accesses the second communication network by using a second access technology, where, although not claimed, the first access technology is a 3GPP access technology and the second access technology is a non-3GPP access technology; or the first access technology is a non-3GPP access technology and the second access technology is a 3GPP access technology.

With reference to the second aspect, in a possible but not claimed implementation of the second aspect, that the terminal device sequentially processes the first authentication request message and the second authentication request message includes: The terminal device generates a first receiving order record, where the first receiving order record indicates that the first authentication request message is earlier than the second authentication request message; in response to the first authentication request message, the terminal device performs authentication verification on the first communication network and generates a first intermediate key Kausf-1; when the authentication verification performed by the terminal device succeeds, the terminal device sends, to the first access and mobility management function, a first authentication response message indicating that the authentication verification succeeds; in response to the second authentication request message, the terminal device performs authentication verification on the second communication network and generates a second intermediate key Kausf-2; when the authentication verification performed by the terminal device succeeds, the terminal device sends, to the second access and mobility management function, a second authentication response message indicating that the authentication verification succeeds; the terminal device receives a non-access stratum security mode command NAS SMC message; and the terminal device detects a source of the NAS SMC message based on the first receiving order record; if the source of the NAS SMC message is the first access and mobility management function, the terminal device skips storing the first intermediate key Kausf-1 in response to the NAS SMC message; and if the source of the NAS SMC message is the second access and mobility management function, the terminal device stores the second intermediate key Kausf-2 in response to the NAS SMC message.

In this embodiment of this application, after the terminal device receives the plurality of authentication request messages, the terminal device needs to generate the first receiving order record, where the first receiving order record indicates a receiving order of the plurality of authentication request messages received by the terminal device. After the terminal device receives the NAS SMC message, the terminal device detects the source of the NAS SMC message. When the NAS SMC message is from the second AMF, because the latest (or latest) authentication request message in the first receiving order record is from the second AMF, the UE stores the second intermediate key Kausf-2 in response to the NAS SMC message. The foregoing method can ensure that the intermediate key (Kausf-2) stored on the UE is consistent with the intermediate key (Kausf-2) stored on the network device side, avoiding key out-of-synchronization.

According to a third aspect, where this aspect and any of its implementations and options below are not claimed, an embodiment of this application provides a communication method. The method includes:

A terminal device receives a first authentication request message from a first access and mobility management function in a first communication network and a second authentication request message from a second access and mobility management function in a second communication network; in response to the first authentication request message, the terminal device performs authentication verification on the first communication network and generates a first intermediate key Kausf-1; when the authentication verification performed by the terminal device succeeds, the terminal device sends, to the first access and mobility management function, a first authentication response message indicating that the authentication verification succeeds; in response to the second authentication request message, the terminal device performs authentication verification on the second communication network and generates a second intermediate key Kausf-2; when the authentication verification performed by the terminal device succeeds, the terminal device sends, to the second access and mobility management function, a second authentication response message indicating that the authentication verification succeeds; the terminal device receives a non-access stratum security mode command NAS SMC message; and the terminal device stores, in response to the NAS SMC message, the first intermediate key Kausf-1 or the second intermediate key Kausf-2 corresponding to the NAS SMC message; and the terminal device sends a response message of the NAS SMC message, where the response message of the NAS SMC message indicates the terminal device to store the first intermediate key Kausf-1 or the second intermediate key Kausf-2.

In this embodiment of this application, after the terminal device receives the NAS SMC message, the terminal device stores the intermediate key in response to the NAS SMC message. After the terminal device stores the intermediate key, the terminal device notifies the AMF that sends the NAS SMC message of an intermediate key stored in the terminal device. Further, the AMF notifies a UDM to store an identifier of an AUSF corresponding to the intermediate key. The UDM indicates another AUSF to delete the intermediate key. The foregoing method can ensure that the intermediate key (Kausf-2) stored on the UE is consistent with the intermediate key (Kausf-2) stored on the network device side, avoiding key out-of-synchronization.

With reference to the third aspect, in a possible implementation of the third aspect, the first authentication request message is earlier than the second authentication request message. That the terminal device stores, in response to the NAS SMC message, the first intermediate key Kausf-1 or the second intermediate key Kausf-2 corresponding to the NAS SMC message includes: The terminal device determines, after receiving the NAS SMC message, whether the NAS SMC message is associated with the second authentication request message; and when the NAS SMC message is associated with the second authentication request message, the terminal device stores the second intermediate key Kausf-2 from a first storage space to a second storage space, where the second storage space is a long-term storage space.

Specifically, the UE determines, based on information carried in a first NAS SMC message, whether the first NAS SMC message is from the first AMF. First, whether the first NAS SMC message is associated with the first authentication request message (from the first AMF) is detected. For example, whether the first NAS SMC message is from the first AMF is determined based on the information carried in the first NAS SMC message. For another example, whether the first NAS SMC message is from the first AMF is determined based on an underlying message (for example, an RRC message or a Wi-Fi AP message) that carries the first NAS SMC. A determining method is not limited in this application.

After the UE determines that the first NAS SMC message is associated with the first AMF, the UE stores the first intermediate key Kausf-1 in response to the first NAS SMC message. The first intermediate key Kausf-1 generated by the UE in response to the first authentication request message is stored in a buffer area. In this embodiment of this application, a buffer area in which the terminal device stores an intermediate key Kausf is referred to as the first storage space.

After responding to a second NAS SMC message, the UE stores, in a long-term storage space, the second intermediate key Kausf-2 that is stored in the first storage space (the buffer area). Because the first intermediate key Kausf-1 is already stored in the long-term storage space, the UE replaces the first intermediate key Kausf-1 in the second storage space with the second intermediate key Kausf-2 in the first storage space. The UE performs authentication and communication by using the second intermediate key Kausf-2 in the second storage space (the long-term storage space).

With reference to the third aspect, in a possible implementation of the third aspect, that the terminal device stores, in response to the NAS SMC message, the first intermediate key Kausf-1 or the second intermediate key Kausf-2 corresponding to the NAS SMC message includes: The terminal device stores, in response to the NAS SMC message, the first intermediate key or the second intermediate key from the first storage space to the second storage space, where the second storage space is a long-term storage space.

Specifically, the UE stores the first intermediate key Kausf-1 or the second intermediate key Kausf-2 in response to the NAS SMC message. The first intermediate key Kausf-1 or the second intermediate key Kausf-2 generated by the UE in response to the first authentication request message is stored in the buffer area. In this embodiment of this application, a buffer area in which the terminal device stores an intermediate key Kausf is referred to as the first storage space.

After responding to the NAS SMC message, the UE stores, in the long-term storage space, the first intermediate key Kausf-1 or the second intermediate key Kausf-2 that is stored in the first storage space (the buffer area). The UE performs authentication and communication by using the intermediate key (Kausf-1 or Kausf-2) in the second storage space (the long-term storage space).

With reference to the third aspect, in a possible implementation of the third aspect, the terminal device accesses the first communication system by using a first access technology, and the terminal device accesses the second communication network by using a second access technology, where the first access technology is a 3GPP access technology and the second access technology is a non-3GPP access technology; or the first access technology is a non-3GPP access technology and the second access technology is a 3GPP access technology.

According to a fourth aspect, the invention provides a communication apparatus for carrying out the method of the first aspect, including but not claimed as such the following non claimed implementations:
a transceiver module, configured to receive a plurality of authentication vector obtaining request messages from one or more authentication server functions for a same terminal device, where the plurality of authentication vector obtaining request messages are for obtaining authentication vectors corresponding to the terminal device; and
a processing module, configured to sequentially process the plurality of authentication vector obtaining request messages.

In a possible implementation, the transceiver module is further configured to send a first authentication vector to a first authentication server function in response to a first authentication vector obtaining request message.

The processing module is further configured to: before a first authentication result confirmation request message for the first authentication vector is received, suspend processing of a second authentication vector obtaining request message, where the first authentication result confirmation request message includes an identifier of the first authentication server function, and a time point at which the unified data management receives the first authentication vector obtaining request message is earlier than a time point of receiving the second authentication vector obtaining request message.

In a possible implementation, the transceiver module is further configured to receive the first authentication result confirmation request message.

The processing module is further configured to store the identifier of the first authentication server function in response to the first authentication result confirmation request message.

In a possible implementation,
the transceiver module is further configured to send a second authentication vector to a second authentication server function in response to the second authentication vector obtaining request message.

The transceiver module is further configured to receive a second authentication result confirmation request message for the second authentication vector, where the second authentication result confirmation request message includes an identifier of the second authentication server function.

The processing module is further configured to store the identifier of the second authentication server function in response to the second authentication result confirmation request message.

In a possible implementation,
the processing module is specifically configured to replace the identifier of the first authentication server function with the identifier of the second authentication server function.

In a possible implementation,
the processing module is specifically configured to sequentially process the plurality of authentication vector obtaining request messages in response to an authentication method of the terminal device being 5G AKA.

In a possible implementation,
the processing module is further configured to determine, based on subscription information of the terminal device, that the authentication method corresponding to the terminal device is 5G AKA.

According to a fifth aspect, the invention also provides another communication apparatus for carrying out the method of the second aspect, including the following not claimed features and not claimed implementations:
a transceiver module, configured to receive a first authentication request message from a first access and mobility management function entity in a first communication network and a second authentication request message from a second access and mobility management function entity in a second communication network; and
a processing module, configured to sequentially process the first authentication request message and the second authentication request message.

In a possible implementation,
the processing module is specifically configured to: in response to the first authentication request message, perform authentication verification on the first communication network and generate a first intermediate key Kausf-1.

The transceiver module is specifically configured to: when the authentication verification performed by the terminal device succeeds, send, to the first access and mobility management function entity, a first authentication response message indicating that the authentication verification succeeds.

The transceiver module is specifically configured to receive a first non-access stratum security mode command NAS SMC message from the first access and mobility management function, where the first NAS SMC message is associated with the first authentication request message.

The processing module is specifically configured to: store the first intermediate key Kausf-1 in response to the first NAS SMC message, and perform authentication verification on the second communication network based on the second authentication request message and generate a second intermediate key Kausf-2.

The transceiver module is specifically configured to receive a second non-access stratum security mode command NAS SMC message from the second access and mobility management function, where the second NAS SMC message is associated with the second authentication request message.

The processing module is specifically configured to replace the stored first intermediate key Kausf-1 with the second intermediate key Kausf-2 in response to the second NAS SMC message.

In a possible implementation,
the processing module is specifically configured to determine, after the first NAS SMC message is received, whether the first NAS SMC message is associated with the first authentication request message.

The transceiver module is specifically configured to: when the first NAS SMC message is associated with the first authentication request message, store the first intermediate key Kausf-1 from a first storage space to a second storage space.

In a possible implementation,
the processing module is further configured to suspend processing of the second authentication request message.

In a possible implementation,
the processing module is further configured to determine that an authentication method used by the terminal device to perform authentication verification on the first communication network/the second communication network is 5G authentication and key agreement 5G AKA.

In a possible implementation,
the transceiver module is specifically configured to access the first communication system by using a first access technology.

The transceiver module is specifically configured to access the second communication network by using a second access technology.

The first access technology is a 3GPP access technology and the second access technology is a non-3GPP access technology; or the first access technology is a non-3GPP access technology and the second access technology is a 3GPP access technology.

According to a sixth aspect, where this aspect and any of its implementations and options below are not claimed, an embodiment of this application provides a communication apparatus, including:
a transceiver module, configured to receive a first authentication request message from a first access and mobility management function in a first communication network and a second authentication request message from a second access and mobility management function in a second communication network; and
a processing module, configured to sequentially process the first authentication request message and the second authentication request message.

In a possible implementation, the processing module is configured to generate a first receiving order record, where the first receiving order record indicates that the first authentication request message is earlier than the second authentication request message.

The processing module is further configured to: in response to the first authentication request message, perform authentication verification on the first communication network and generate a first intermediate key Kausf-1.

The transceiver module is further configured to: when the authentication verification succeeds, send, to the first access and mobility management function, a first authentication response message indicating that the authentication verification succeeds.

The processing module is further configured to: in response to the second authentication request message, perform authentication verification on the second communication network and generate a second intermediate key Kausf-2.

The transceiver module is further configured to: when the authentication verification succeeds, send, by the terminal device, to the second access and mobility management function, a second authentication response message indicating that the authentication verification succeeds.

The transceiver module is further configured to receive a non-access stratum security mode command NAS SMC message.

The processing module is further configured to: detect a source of the NAS SMC message based on the first receiving order record;
if the source of the NAS SMC message is the first access and mobility management function, skip storing the first intermediate key Kausf-1 in response to the NAS SMC message; and
if the source of the NAS SMC message is the second access and mobility management function, store, by the terminal device, the second intermediate key Kausf-2 in response to the NAS SMC message.

In a possible implementation, that the terminal device stores the second intermediate key Kausf-2 in response to the NAS SMC message includes:
the transceiver module is further configured to determine, after receiving the NAS SMC message, whether the NAS SMC message is associated with the second authentication request message.

The processing module is further configured to: when the NAS SMC message is associated with the second authentication request message, store the second intermediate key Kausf-2 from a first storage space to a second storage space, where the second storage space is a long-term storage space.

In a possible implementation, the processing module is specifically configured to: in response to the first authentication request message, perform authentication verification on the first communication network and generate a first intermediate key Kausf-1.

The transceiver module is specifically configured to: when the authentication verification performed by the terminal device succeeds, send, to the first access and mobility management function entity, a first authentication response message indicating that the authentication verification succeeds.

The transceiver module is specifically configured to receive a first extensible authentication protocol success EAP-success message from the first access and mobility management function, where the first EAP-success message is associated with the first authentication request message.

The processing module is specifically configured to: store the first intermediate key Kausf-1 in response to the first EAP-success message, and perform authentication verification on the second communication network based on the second authentication request message and generate a second intermediate key Kausf-2.

The transceiver module is specifically configured to receive a second extensible authentication protocol success EAP-success message from the second access and mobility management function, where the second EAP-success message is associated with the second authentication request message.

The processing module is specifically configured to replace the stored first intermediate key Kausf-1 with the second intermediate key Kausf-2 in response to the second EAP-success message.

In a possible implementation, the processing module is specifically configured to determine, after the first EAP-success message is received, whether the first EAP-success message is associated with the first authentication request message.

The transceiver module is specifically configured to: when the first EAP-success message is associated with the first authentication request message, store the first intermediate key Kausf-1 from a first storage space to a second storage space.

In a possible implementation, the processing module is further configured to suspend processing of the second authentication request message.

In a possible implementation, the processing module is further configured to determine that an authentication method used by the terminal device to perform authentication verification on the first communication network/the second communication network is an improved extensible authentication protocol method for 3rd generation authentication and key agreement EAP-AKA'.

In a possible implementation,
the transceiver module is further configured to: access the first communication system by using a first access technology, and access the second communication network by using a second access technology.

The first access technology is a 3GPP access technology and the second access technology is a non-3GPP access technology; or the first access technology is a non-3GPP access technology and the second access technology is a 3GPP access technology.

According to a seventh aspect, where this aspect and any of its implementations and options below are not claimed, an embodiment of this application provides a communication apparatus, including:
a transceiver module, configured to receive a first authentication request message from a first access and mobility management function in a first communication network and a second authentication request message from a second access and mobility management function in a second communication network; and
a processing module, configured to: in response to the first authentication request message, perform authentication verification on the first communication network and generate a first intermediate key Kausf-1.

The transceiver module is further configured to: when the authentication verification succeeds, send, to the first access and mobility management function, a first authentication response message indicating that the authentication verification succeeds.

The processing module is further configured to: in response to the second authentication request message, perform authentication verification on the second communication network and generate a second intermediate key Kausf-2.

The transceiver module is further configured to: when the authentication verification succeeds, send, to the second access and mobility management function, a second authentication response message indicating that the authentication verification succeeds.

The transceiver module is further configured to receive a non-access stratum security mode command NAS SMC message.

The processing module is further configured to store, in response to the NAS SMC message, the first intermediate key Kausf-1 or the second intermediate key Kausf-2 corresponding to the NAS SMC message.

The transceiver module is further configured to send a response message of the NAS SMC message, where the response message of the NAS SMC message indicates the terminal device to store the first intermediate key Kausf-1 or the second intermediate key Kausf-2.

In a possible implementation,
the transceiver module is further configured to determine, after receiving the NAS SMC message, whether the NAS SMC message is associated with the second authentication request message.

The processing module is further configured to: when the NAS SMC message is associated with the second authentication request message, store the second intermediate key Kausf-2 from a first storage space to a second storage space, where the second storage space is a long-term storage space.

In a possible implementation,
the processing module is further configured to store, in response to the NAS SMC message by the terminal device, the first intermediate key or the second intermediate key Kausf-2 from the first storage space to the second storage space, where the second storage space is a long-term storage space.

In a possible implementation, the terminal device accesses the first communication system by using a 3GPP access technology, and the terminal device accesses the second communication network by using a non-3GPP access technology.

According to an eighth aspect, where this aspect and any of its implementations and options below are not claimed, an embodiment of this application provides a communication apparatus. The communication apparatus may implement functions performed by the terminal device and the network device in the methods in the first aspect and the second aspect. The communication apparatus includes a processor, a memory, a receiver connected to the processor, and a transmitter connected to the processor. The memory is configured to store program code, and transmit the program code to the processor. The processor is configured to drive, based on instructions in the program code, the receiver and the transmitter to perform the methods in the first aspect, the second aspect, and the third aspect. The receiver and the transmitter are separately connected to the processor, to perform operations performed by the terminal device and the network device in the methods in the foregoing aspects. Specifically, the transmitter may perform a sending operation, and the receiver may perform a receiving operation. Optionally, the receiver and the transmitter may be radio frequency circuits, and the radio frequency circuits receive and send messages by using antennas. Alternatively, the receiver and the transmitter may be communication interfaces, the processor is connected to the communication interfaces by using a bus, and the processor receives or sends messages by using the communication interfaces.

According to a ninth aspect, where this aspect and any of its implementations and options below are not claimed, an embodiment of this application provides a communication apparatus. The communication apparatus may include an entity such as a network device or a chip, or the communication apparatus may include an entity such as a terminal device or a chip. The communication apparatus includes a processor and a memory. The memory is configured to store instructions. The processor is configured to execute the instructions in the memory, so that the communication apparatus performs the method according to any one of the first aspect, the second aspect, or the third aspect.

According to a tenth aspect according to the invention, the invention also provides a computer-readable storage medium storing one or more computer-executable instructions. When the computer-executable instructions are executed by a processor, the processor performs any one of the possible implementations of the first aspect, the second aspect, or the third aspect.

According to an eleventh aspect, where this aspect and any of its implementations and options below are not claimed, an embodiment of this application provides a computer program product (or referred to as a computer program) that stores one or more computer-executable instructions. When the computer-executable instructions are executed by a processor, the processor performs any one of the possible implementations of the first aspect, the second aspect, or the third aspect.

According to a twelfth aspect, where this aspect and any of its implementations and options below are not claimed, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete component.

According to a thirteenth aspect, where this aspect and any of its implementations and options below are not claimed, this application provides a communication system. The communication system includes the communication apparatus according to the fourth aspect, the fifth aspect, the sixth aspect, or the seventh aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

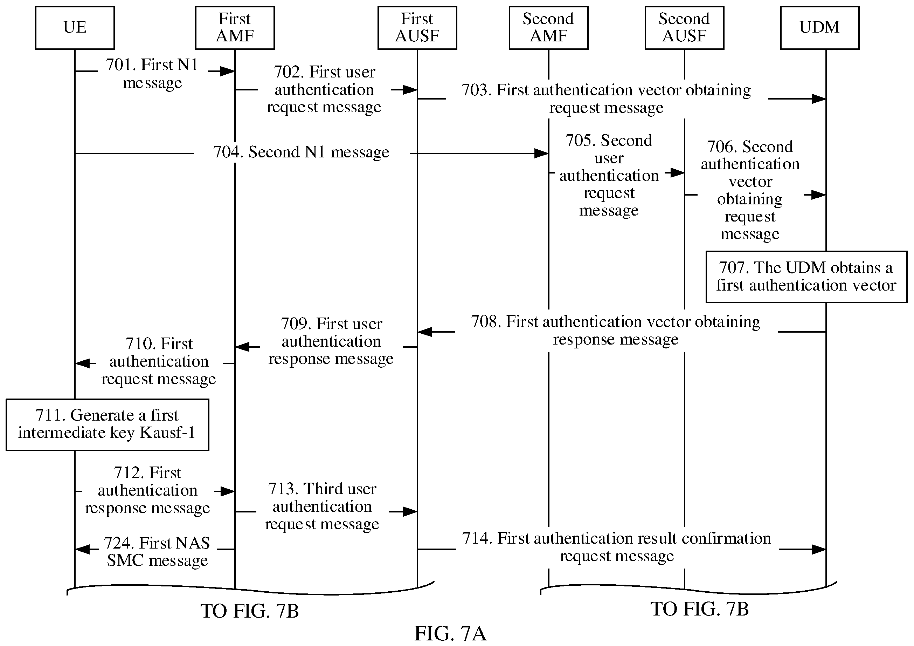

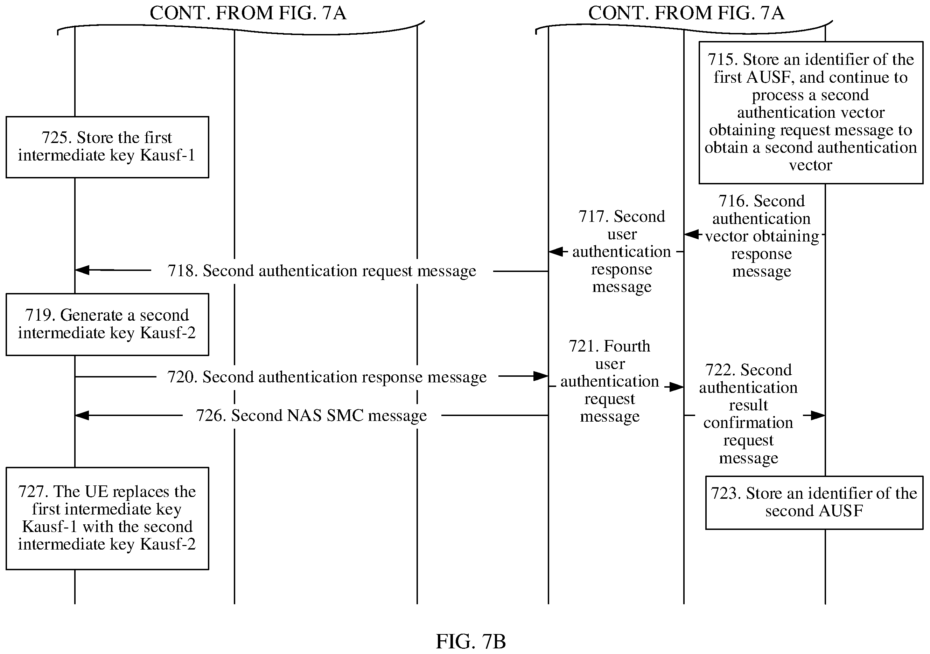

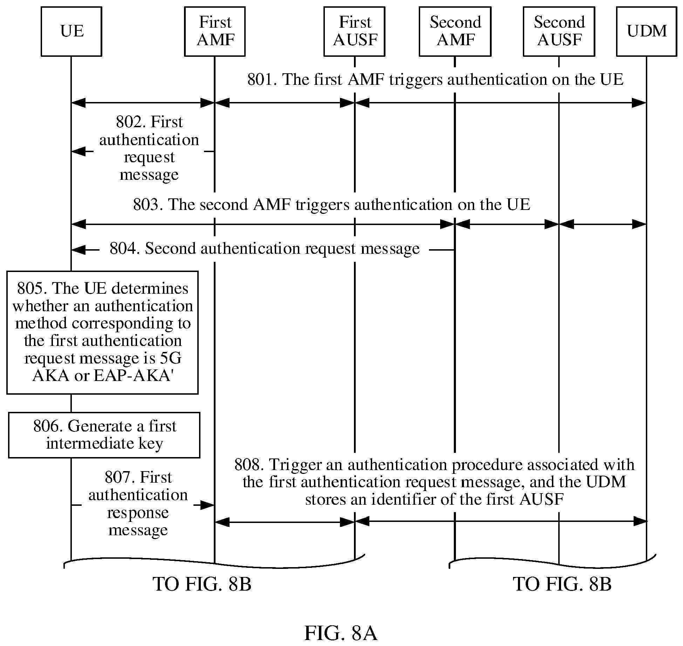

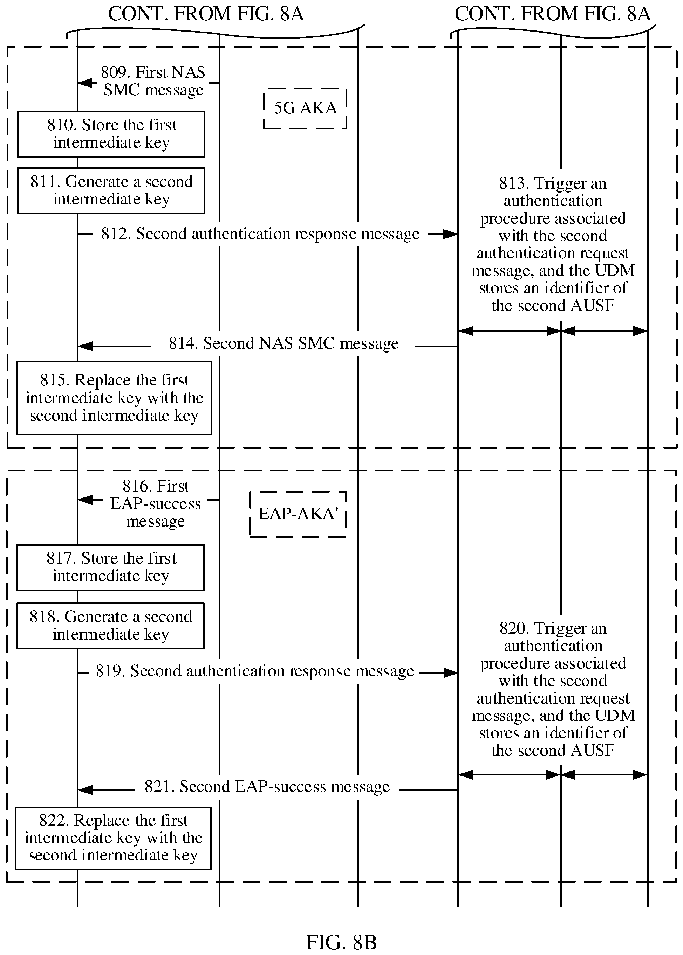

The subject matter claimed in the attached independent claims is explained and illustrated in particular in the embodiments shown and described in FIG. 7A, FIG. 7B and FIG. 8A, FIG. 8B.

### BRIEF DESCRIPTION OF DRAWINGS

FIG. 1 is a schematic diagram of a network architecture of a communication system;
FIG. 2 is a schematic diagram of a hardware structure of a communication apparatus according to an embodiment of this application;
FIG. 3 is a schematic diagram of a key architecture according to an embodiment of this application;
FIG. 4 is a schematic diagram of an authentication procedure;
FIG. 5 is a schematic diagram of a NAS SMC procedure according to an embodiment of this application;
FIG. 6A and FIG. 6B are a schematic diagram of an authentication procedure of a terminal device in a multi-access scenario;
FIG. 7A and FIG. 7B are a schematic diagram of an embodiment of a communication method according to an embodiment of this application;
FIG. 8A and FIG. 8B are a schematic diagram of an embodiment of a communication method according to an embodiment of this application;
FIG. 9A and FIG. 9B are a schematic diagram of an embodiment of a communication method according to an embodiment of this application;
FIG. 10A and FIG. 10B are a schematic diagram of an embodiment of a communication method according to an embodiment of this application; and
FIG. 11 is a schematic diagram of an embodiment of a communication apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, NR, a future 6th generation communication system.

Some of the various communication systems operated by an operator may be referred to as an operator network. The operator network may also be referred to as a public land mobile network (public land mobile network, PLMN), is a network established and operated by a government or an operator approved by the government for a purpose of providing a land mobile communication service for the public, and is mainly a public network in which a mobile network operator (mobile network operator, MNO) provides a mobile broadband access service for a user. The operator network or the PLMN network described in embodiments of this application may be a network that meets a requirement of a 3rd generation partnership project (3rd generation partnership project, 3GPP) standard, which is referred to as a 3GPP network. Generally, a 3GPP network is operated by an operator, and includes but is not limited to a 5th generation (5th-generation, 5G) mobile communication network (5G network for short), a 4th generation (4th-generation, 4G) mobile communication network (4G network for short), or a 3rd generation (3rd-generation, 3G) mobile communication technology network (3G network for short). The 3GPP network further includes a future 6G network. For ease of description, an operator network (for example, a mobile network operator (mobile network operator, MNO) network) is used as an example for description in embodiments of this application.

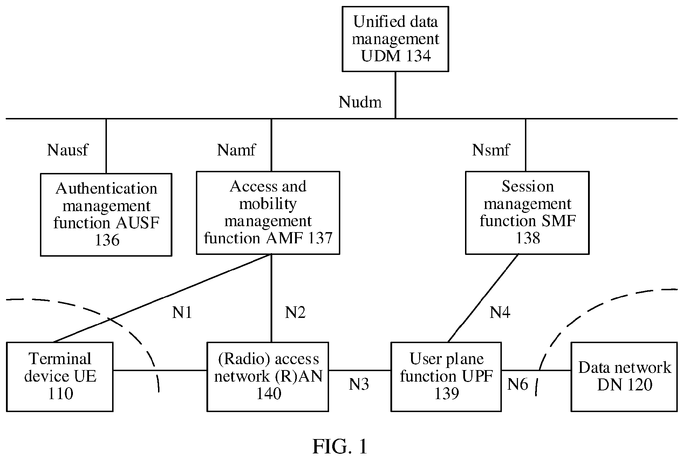

To facilitate understanding of embodiments of this application, a 5G network architecture shown in FIG. 1 is used as an example to describe an application scenario used in this application. It may be understood that an architecture of another communication network is similar to that of the 5G network, and therefore details are not described. Refer to FIG. 1. FIG. 1 is a schematic diagram of a network architecture of a communication system. The network architecture may include a terminal device (also referred to as a user equipment part, an operator network part, and a data network (data network, DN) part).

The terminal device part includes a terminal device 110, and the terminal device 110 may also be referred to as user equipment (user equipment, UE). The terminal device 110 in embodiments of this application is a device having a wireless transceiver function, and may communicate with one or more core networks (core networks, CNs) by using an access network device that is in a (radio) access network ((radio) access network, (R)AN) 140. The terminal device 110 may also be referred to as an access terminal, a terminal, a subscriber unit, a subscriber station, a mobile station, a mobile console, a remote station, a remote terminal, a mobile device, a user terminal, a wireless network device, a user agent, a user apparatus, or the like. The terminal device 110 may be deployed on land, including an indoor device, an outdoor device, a handheld device, or a vehicle-mounted device; or may be deployed on water (for example, a ship); or may be deployed in the air (for example, an airplane, a balloon, or a satellite). The terminal device 110 may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, or a personal digital assistant (personal digital assistant, PDA), or may be a handheld device with a wireless communication function, a computing device or another device connected to a wireless modem, a vehicle-mounted device, a wearable device, a drone device, a terminal in an internet of things or an internet of vehicles, a terminal in a fifth generation (fifth generation, 5G) mobile communication network, a terminal in any form in a future network, a relay user device, a terminal in a future evolved public land mobile network (public land mobile network, PLMN), or the like. The relay user device may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application. For ease of description, in embodiments of this application, an example in which the terminal device 110 includes an unmanned aerial vehicle and an unmanned aerial vehicle remote controller is used for description.

It should be noted that the unmanned aerial vehicle in embodiments of this application may further include a vehicle (vehicle) that can travel autonomously, or a vehicle that can travel according to control instructions of a remote controller, a ship (shipping) that can travel autonomously, a ship that can travel according to control instructions of a remote controller, or the like.

The operator network may include a unified data management (unified data management, UDM) 134, an authentication server function (authentication server function, AUSF) 136, an access and mobility management function (access and mobility management function, AMF) 137, a session management function (session management function, SMF) 138, a user plane function (user plane function, UPF) 139, an (R)AN 140, and the like. In the operator network, a part other than the (R)AN 140 part may be referred to as a core network (core network, CN) part. For ease of description, in embodiments of this application, an example in which the (R)AN 140 is a RAN is used for description.

The data network DN 120 may also be referred to as a protocol data network (protocol data network, PDN), and is usually a network located outside an operator network, for example, a third-party network. The operator network may access a plurality of data networks DNs 120. A plurality of services may be deployed on the data network DN 120, and the data network DN 120 may provide services such as data and/or voice for the terminal device 110. For example, the data network DN 120 may be a private network of a smart factory, a sensor installed in a workshop of the smart factory may be the terminal device 110, a control server of the sensor is deployed in the data network DN 120, and the control server may provide a service for the sensor. The sensor may communicate with the control server, to obtain instructions of the control server, transmit collected sensor data to the control server according to the instructions, and so on. For another example, the data network DN 120 may be an internal office network of a company, a mobile phone or a computer of an employee of the company may be the terminal device 110, and the mobile phone or the computer of the employee may access information, data resources, and the like on the internal office network of the company.

The terminal device 110 may establish a connection to the operator network through an interface (for example, N1) provided by the operator network, and use the services such as data and/or voice provided by the operator network. The terminal device 110 may further access the data network DN 120 through the operator network, and use an operator service deployed in the data network DN 120 and/or a service provided by a third party. The third party may be a service provider other than the operator network and the terminal device 110, and may provide another service such as data and/or voice for the terminal device 110. A specific representation form of the third party may be specifically determined based on an actual application scenario, and is not limited herein.

The following briefly describes a network function in the operator network.

The (R)AN 140 may be considered as a sub-network of the operator network, and is an implementation system between a service node in the operator network and the terminal device 110. To access the operator network, the terminal device 110 first passes through the (R)AN 140, and then may be connected to the service node in the operator network by using the (R)AN 140. The access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a transmission and reception point (transmitting and receiving point, TRP), a transmission point (transmitting point, TP), a pico (pico), a mobile switching center, or a network device in a future network. In systems using different radio access technologies, devices with an access network device function may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The access and mobility management function AMF (which may also be referred to as an AMF network element, an AMF network function, or an AMF network function entity) 137 is a control plane network function provided by the operator network, and is responsible for access control and mobility management when the terminal device 110 accesses the operator network, for example, including functions such as mobility status management, temporary user identifier assignment, and user authentication and authorization.

The session management function SMF (which may also be referred to as an SMF network element, an SMF network function, or an SMF network function entity) 138 is a control plane network function provided by the operator network, and is responsible for managing a protocol data unit (protocol data unit, PDU) session of the terminal device 110. The PDU session is a channel for transmitting a PDU, and the terminal device needs to transmit the PDU to the data network DN 120 through the PDU session. The SMF network function 138 is responsible for establishment, maintenance, deletion, and the like of the PDU session. The SMF network function 138 includes session related functions such as session management (for example, session establishment, modification, and release, including maintenance of a tunnel between the user plane function UPF 139 and the (R)AN 140), selection and control of the UPF network function 139, service and session continuity (service and session continuity, SSC) mode selection, and roaming.

The user plane function UPF (which may also be referred to as a UPF network element, a UPF network function, or a UPF network function entity) 139 is a gateway provided by an operator, and is a gateway for communication between the operator network and the data network DN 120. The UPF network function 139 includes user plane related functions such as data packet routing and transmission, data packet detection, service usage reporting, quality of service (quality of service, QoS) processing, lawful interception, uplink data packet detection, and downlink data packet storage.

The unified data management network element UDM (which may also be referred to as a UDM network element, a UDM network function, or a UDM network function entity) 134 is a control plane function provided by an operator, and is responsible for storing information such as a subscriber permanent identifier (subscriber permanent identifier, SUPI) in the operator network, a generic public subscription identifier (generic public subscription identifier, GPSI), and a credential (credential). The SUPI is first ciphered during transmission, and a ciphered SUPI is referred to as a subscription concealed identifier (subscription concealed identifier, SUCI). The information stored in the UDM 134 may be used for authentication and authorization for the terminal device 110 to access the operator network. The subscriber in the operator network may be specifically a user using a service provided by the operator network, for example, a user using a SIM card of China Telecom, or a user using a SIM card of China Mobile. A credential of the subscriber may be a long-term key stored in the SIM card or a stored small file such as information related to ciphering of the SIM card, for authentication and/or authorization. It should be noted that the permanent identifier, the credential, a security context, authentication data (cookie), a token, and other information related to verification/authentication and authorization are not differentiated or limited in embodiments of this application for ease of description.

The authentication server function (authentication server function, AUSF) (which may also be referred to as an AUSF network element, an AUSF network function, or an AUSF network function entity) 136 is a control plane function provided by an operator, and is usually used for primary authentication, that is, authentication between the terminal device 110 (a subscriber) and the operator network. After receiving an authentication request initiated by the subscriber, the AUSF 136 may perform authentication and/or authorization on the subscriber by using authentication information and/or authorization information stored in the UDM network function 134, or generate authentication and/or authorization information of the subscriber by using the UDM network function 134. The AUSF network function 136 may feed back the authentication information and/or the authorization information to the subscriber.

In FIG. 1, Nausf, Nudm, Namf, Nsmf, N1, N2, N3, N4, and N6 are interface sequence numbers. For meanings of these interface sequence numbers, refer to meanings defined in the 3GPP standard protocol. Details are not described herein. It should be noted that in FIG. 1, only an example in which the terminal device 110 is UE is used for description. Names of interfaces between network functions in FIG. 1 are merely examples. In specific implementation, the names of the interfaces in the system architecture may be other names. This is not specifically limited in embodiments of this application.

For ease of description, in embodiments of this application, an example in which a mobility management network function is the AMF network function 137 is used for description. Alternatively, the mobility management network function may be another network function having a function of the AMF network function 137 in a future communication system. Alternatively, the mobility management network function in this application may be a mobility management network entity (Mobility Management Entity, MME) in LTE, or the like.

Further, the AMF network function 137 is referred to as an AMF for short, and the terminal device 110 is referred to as UE. In other words, in embodiments of this application, all AMFs described below may be replaced with the mobility management network function, and all UEs may be replaced with the terminal device.

In embodiments of this application, an example in which an authentication server function is the AUSF 136 is used for description. Alternatively, the authentication server function may be another network function having a function of the AUSF 136 in a future communication system. Further, the AUSF 136 is referred to as an AUSF for short. In other words, all AUSFs described below in embodiments of this application may be replaced with the authentication server function.

In embodiments of this application, an example in which a unified data management is the UDM 134 is used for description. Alternatively, the unified data management may be another network function having a function of the UDM 134 in a future communication system. Further, the UDM 134 is referred to as a UDM for short. In other words, all UDMs described below in embodiments of this application may be replaced with the unified data management.

In addition, embodiments of this application are also applicable to another future-oriented communication technology, for example, 6G. A network architecture and a service scenario described in this application are intended to describe the technical solutions in this application more clearly, and do not constitute a limitation on the technical solutions provided in this application. A person of ordinary skill in the art may know that: With evolution of the network architecture and emergence of new service scenarios, network functions in this application may change, and the technical solutions provided in this application are also applicable to similar technical problems.

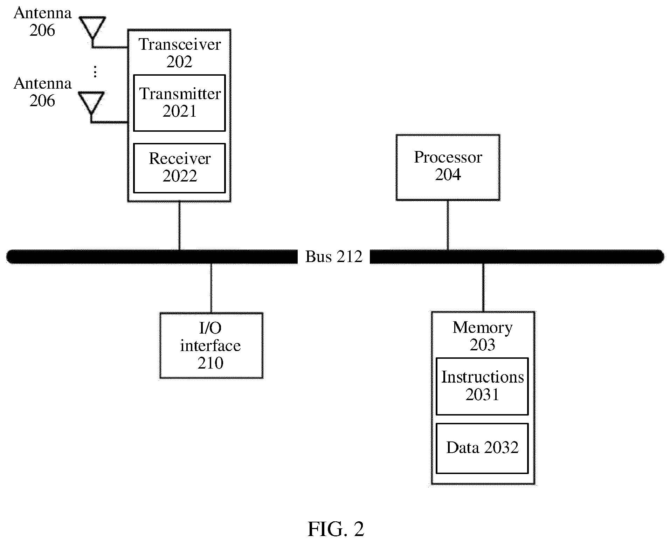

FIG. 2 is a schematic diagram of a hardware structure of a communication apparatus according to an embodiment of this application. The communication apparatus may be a possible implementation of a network device or a terminal device in embodiments of this application. As shown in FIG. 2, the communication apparatus includes at least a processor 204, a memory 203, and a transceiver 202. The memory 203 is further configured to store instructions 2031 and data 2032. Optionally, the communication apparatus may further include antennas 206, an I/O (input/output, Input/Output) interface 210, and a bus 212. The transceiver 202 further includes a transmitter 2021 and a receiver 2022. In addition, the processor 204, the transceiver 202, the memory 203, and the I/O interface 210 are communicatively connected to each other through the bus 212, and the antennas 206 are connected to the transceiver 202.

The processor 204 may be a general-purpose processor, for example, but not limited to, a central processing unit (Central Processing Unit, CPU), or may be a dedicated processor, for example, but not limited to, a digital signal processor (Digital Signal Processor, DSP), an application-specific integrated circuit (Application-Specific Integrated Circuit, ASIC), or a field programmable gate array (Field Programmable Gate Array, FPGA). Alternatively, the processor 204 may be a neural processing unit (neural processing unit, NPU). In addition, the processor 204 may alternatively be a combination of a plurality of processors. In particular, in the technical solutions provided in embodiments of this application, the processor 204 may be configured to perform related steps of a communication method in subsequent method embodiments. The processor 204 may be a processor that is specially designed to perform the foregoing steps and/or operations, or may be a processor that performs the foregoing steps and/or operations by reading and executing the instructions 2031 stored in the memory 203. The processor 204 may need to use the data 2032 in a process of performing the foregoing steps and/or operations.

The transceiver 202 includes the transmitter 2021 and the receiver 2022. In an optional implementation, the transmitter 2021 is configured to send a signal by using the antenna 206. The receiver 2022 is configured to receive a signal by using at least one of the antennas 206. In particular, in the technical solutions provided in embodiments of this application, the transmitter 2021 may be specifically configured to perform, by using at least one of the antennas 206, for example, the operation performed by a receiving module or a sending module in a network device or a terminal device when a communication method in the subsequent method embodiments is applied to the network device or the terminal device.

In this embodiment of this application, the transceiver 202 is configured to support the communication apparatus in performing the foregoing receiving function and sending function. A processor having a processing function is considered as the processor 204. The receiver 2022 may also be referred to as an input port, a receiver circuit, or the like. The transmitter 2021 may be referred to as a transmitter, a transmitter circuit, or the like.

The processor 204 may be configured to execute the instructions stored in the memory 203, to control the transceiver 202 to receive a message and/or send a message, to complete functions of the communication apparatus in the method embodiments of this application. In an implementation, it may be considered that a function of the transceiver unit 202 is implemented by using a transceiver circuit or a dedicated transceiver chip. In this embodiment of this application, that the transceiver 202 receives a message may be understood as that the transceiver 202 inputs a message, and that the transceiver 202 sends a message may be understood as that the transceiver 202 outputs a message.

The memory 203 may be various types of storage media, for example, a random access memory (Random Access Memory, RAM), a read-only memory (Read-Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 203 is specifically configured to store the instructions 2031 and the data 2032. The processor 204 may perform the steps and/or the operations in the method embodiments of this application by reading and executing the instructions 2031 stored in the memory 203. The data 2032 may need to be used in a process of performing the operations and/or the steps in the method embodiments of this application.

Optionally, the communication apparatus may further include the I/O interface 210. The I/O interface 210 is configured to receive instructions and/or data from a peripheral device, and output instructions and/or data to the peripheral device.

The following describes definitions of some terms in embodiments of this application.

### (1) Key architecture

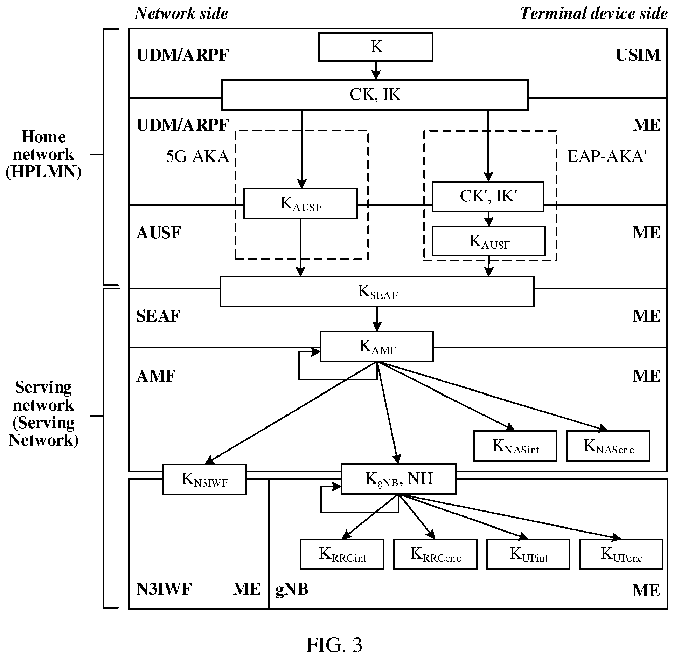

Refer to FIG. 3. FIG. 3 is a schematic diagram of a key architecture according to an embodiment of this application. UE (or a USIM) and a UDM (or an authentication credential repository and processing function (Authentication credential Repository and Processing Function, ARPF) or a unified data repository (Unified Data Repository, UDR)) store a long-term key K of the UE.

On a network device side, the UDM or the ARPF generates a key CK (cipher Key) and a key IK (integrity key) based on the long-term key K of the UE. A manner of generating an intermediate key Kausf varies according to an authentication mode selected by the UDM. When the authentication mode selected by the UDM is 5G authentication and key agreement (5G Authentication and Key Agreement, 5G AKA), the UDM or the ARPF generates an intermediate key Kausf based on the key CK and the key IK. The UDM sends the generated intermediate key Kausf to the AUSF. When the authentication mode selected by the UDM is an extensible authentication protocol method for 3rd generation authentication and key agreement (Extensible Authentication Protocol Method for 3rd Generation Authentication and Key Agreement, EAP-AKA'), the UDM or the ARPF generates a key CK' and a key IK' based on the key CK and the key IK. The UDM sends the generated key CK' and key IK' to the AUSF. The AUSF generates an intermediate key Kausf based on the key CK' and the key IK'.

A variety of keys may be derived based on the intermediate key Kausf. In this embodiment of this application, the security context includes a key derived based on the intermediate key Kausf, an algorithm, a counter, and the like. The security context includes but is not limited to Kseaf, Kamf, Kaf, Kakma, K_{NASint}, K_{NASenc}, K_{gNB}, K_{RRCint}, a K_{RRCenc}, or K_{N3IWF}.

For example, the AUSF generates a key Kseaf based on the intermediate key Kausf, and sends the key Kseaf to the SEAF. The SEAF generates the key Kamf based on the key Kseaf, and sends the key Kamf to the AMF. The AMF generates a non-access stratum (non-access stratum, NAS) key and an access stratum (access stratum, AS) intermediate key K_{gNB} based on the key Kamf. The AMF transfers K_{gNB} to a base station, and the base station further generates an AS security context based on K_{gNB}, such as K_{RRCint} and K_{RRCenc}.

On a terminal device side, a universal mobile telecommunications system subscriber identity module (universal mobile telecommunications system subscriber identity module, UMTS) first generates a key CK and a key IK based on the long-term key K of the UE. The USIM sends the key CK and the key IK to mobile equipment (mobile equipment, ME). Secondly, similar to the network device side, a mode of generating an intermediate key Kausf in different authentication modes differs. When the used authentication mode is 5G AKA, the UE generates an intermediate key Kausf based on the key CK and the key IK. When the used authentication mode is EAP-AKA', the UE generates a key CK' and a key IK' based on the key CK and the key IK. The UE generates an intermediate key Kausf based on the key CK' and the key IK'.

The UE generates a key Kseaf based on the intermediate key Kausf. The UE generates a key Kamf based on the key Kseaf. The UE generates a NAS key and K_{gNB} based on the key Kamf. Then, the UE further generates K_{RRCint} and K_{RRCenc} based on K_{gNB}.

### (2) Authentication procedure

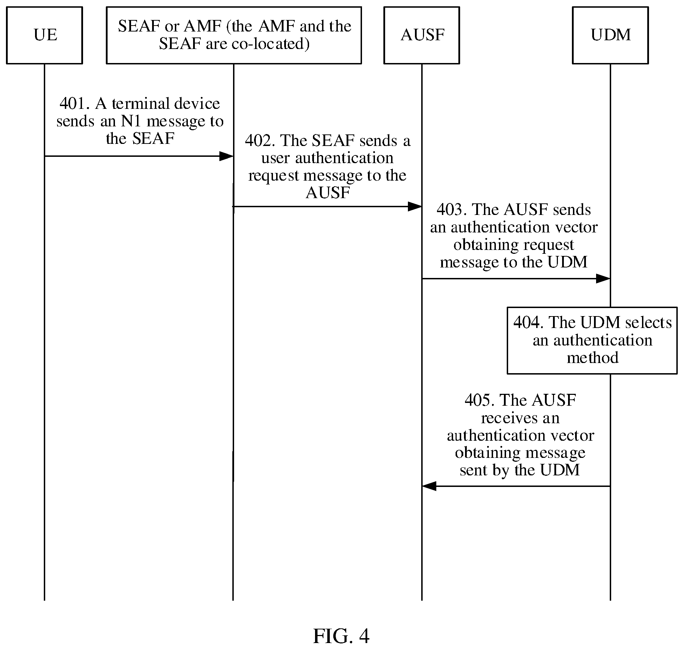

For ease of understanding, refer to FIG. 4. FIG. 4 is a schematic diagram of an authentication procedure.

401. A terminal device sends an N1 message to a security anchor function (security anchor function, SEAF) network element.

In step 401, the UE and a core network perform a primary authentication (Primary authentication) procedure. An authentication vector (authentication vector, AV) is required in the primary authentication procedure. The authentication vector is for transmitting a verification parameter in the primary authentication procedure.

In this embodiment of this application, the primary authentication procedure is also referred to as an authentication procedure. This is not limited herein.

In step 401, first, the terminal device sends the N1 message (N1 message) to the security anchor function (security anchor function, SEAF) network element, where the N1 message carries a SUCI of the UE or a 5G-globally unique temporary UE identity (5G-globally unique temporary UE identity, 5G-GUTI). It may be understood that the N1 message may be a registration request message. The SEAF may be co-located with the AMF (that is, the SEAF is a part of the AMF), or the SEAF may be an independent network element.

402. The SEAF sends a user authentication request message to an AUSF.

Then, the SEAF (or the AMF co-located with the SEAF) sends the user authentication request message to the AUSF, where the user authentication request message is, for example, "Nausf_UEAuthentication_Authentication Request". The message carries a SUCI (or a SUPI) and a serving network name (serving network name, SN-name). If the N1 message received by the SEAF (or the AMF co-located with the SEAF) from the terminal device carries the SUCI, the user authentication request message sent by the SEAF to the AUSF carries the SUCI. If the N1 message received by the SEAF (or the AMF co-located with the SEAF) from the terminal device carries the 5G-GUTI, the SEAF first obtains a SUPI based on the 5G-GUTI, and the user authentication request message sent by the SEAF to the AUSF carries the SUPI.

403. The AUSF sends an authentication vector obtaining request message to a UDM.

In step 403, the AUSF sends the authentication vector obtaining request message to the UDM, where the authentication vector obtaining request message is, for example, "Numd_UEAuthentication Get Request". The authentication vector obtaining request message is for requesting an authentication vector from the UDM. The authentication vector obtaining request message carries the SUPI (or the SUCI) and the SN-name. Specifically, when the user authentication request message sent by the SEAF (or the AMF co-located with the SEAF) to the AUSF carries the SUPI, the authentication vector obtaining request message carries the SUPI; or when the user authentication request message sent by the SEAF (or the AMF co-located with the SEAF) to the AUSF carries the SUCI, the authentication vector obtaining request message carries the SUCI.

The SUCI may be understood as a ciphering form of the SUPI. For a specific method for generating the SUCI, refer to the 3GPP standard TS 33.501. In summary, a part in the SUPI except a mobile country code (mobile country code, MCC) may be ciphered and calculated by a universal mobile telecommunications system subscriber identity module (universal mobile telecommunications system subscriber identity module, UMTS) or mobile equipment (mobile equipment, ME) to obtain a ciphered part in the SUCI. In addition to the ciphered part, the SUCI further includes a routing indicator RID (routing indicator, RID), an MCC, an MNC, and other content.

404. The UDM selects an authentication method.

In this embodiment, after receiving the authentication vector obtaining request message, the UDM selects an authentication method (or referred to as an authentication algorithm). For example, the UDM determines to select a 5G AKA authentication method or an EAP-AKA' authentication method. Specifically, the UDM selects the authentication method based on the SUPI in the authentication vector obtaining request message. When the authentication vector obtaining request message carries the SUCI, the UDM deciphers the SUCI to obtain the SUPI.

405. The AUSF receives an authentication vector obtaining response message sent by the UDM.

In step 405, after the UDM receives the authentication vector obtaining request message in step 403, the UDM determines a corresponding authentication vector based on the selected authentication method. The UDM sends the authentication vector obtaining response message to the AUSF, where the authentication vector obtaining response message carries the authentication vector. For example, the authentication vector obtaining response message is "Num_UEAuthentication_Get Response".

### (3) 5G AKA

In a 5G AKA authentication procedure, a UDM creates an authentication vector (authentication vector, AV). Then, the UDM sends an authentication request message to a terminal device via an AUSF and an SEAF (or an AMF, where the AMF and the SEAF are co-located).

Specifically, the authentication request (Authentication Request) message sent by the SEAF (or the AMF, where the AMF and the SEAF are co-located) to the UE carries one or more of the following information elements: a key identifier in 5G (Key Set Identifier in 5G, ngKSI) and an anti-bidding down between architectures (anti-bidding down between architectures, ABBA) parameter.

After receiving the authentication request message, the terminal device completes local authentication. When the authentication succeeds, an intermediate key Kausf is generated, and an authentication response (Authentication response) message is sent to the SEAF (or the AMF, where the AMF and the SEAF are co-located).

After receiving the authentication response message from the terminal device, the SEAF generates a response (RES*). The SEAF sends the response (RES*) to the AUSF.

The AUSF performs verification (verification) based on the response (RES*) from the SEAF. If the verification succeeds, the AUSF stores the intermediate key Kausf. Kausf corresponds to the authentication request message sent by the SEAF to the UE.

After the verification succeeds, the AUSF sends an authentication result confirmation request message to the UDM. The authentication result confirmation request message may further carry one or more of the following information: a SUPI, a timestamp, an authentication result, an authentication type (authentication type), an AUSF identifier, and a serving network name. Information about the authentication type indicates that an authentication method is 5G AKA. For example, the authentication result confirmation request message may be an "Nudm_UEAuthentication_ResultConfirmation Request" message.

The UDM stores an authentication result of the terminal device based on the authentication result confirmation request message, and replies the AUSF with a message. For example, the replied message may be an "Nudm_UEAuthentication_ ResultConfirmation Response" message.

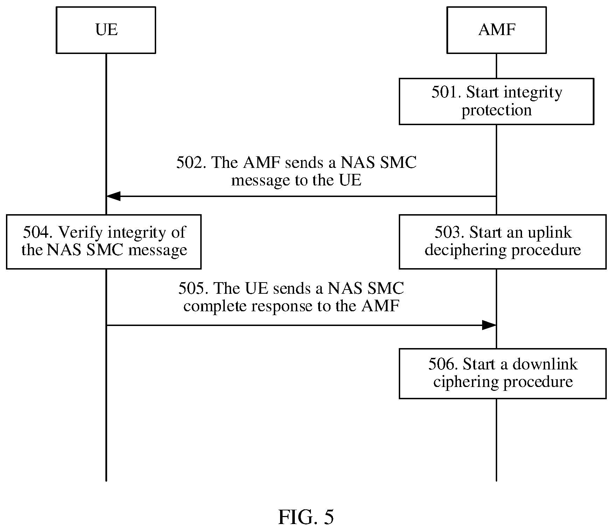

After receiving an authentication success indication from the AUSF, the AMF performs a subsequent NAS SMC procedure. For details, refer to the following "(5) Procedure of storing an intermediate key Kausf" and related descriptions of FIG. 5.

### (4) EAP-AKA'

In an EAP-AKA' authentication procedure, a UDM creates an authentication vector (authentication vector, AV). Then, the UDM sends an authentication request message to a terminal device via an AUSF and an SEAF (or an AMF, where the AMF and the SEAF are co-located).

Specifically, the authentication request (Authentication Request) message sent by the SEAF (or the AMF, where the AMF and the SEAF are co-located) to the UE carries one or more of the following information elements: "EAP request/AKA'-Challenge", a key identifier in 5G (Key Set Identifier in 5G, ngKSI), and an anti-bidding down between architectures (ABBA) parameter.

After receiving the authentication request message, the terminal device completes local authentication. When the authentication succeeds, an intermediate key Kausf is generated, and an authentication response (Authentication response) message is sent to the SEAF (or the AMF, where the AMF and the SEAF are co-located). The authentication response message carries one or more of the following information elements: "EAP Response/AKA'-Challenge".

After receiving the authentication response message from the terminal device, the SEAF forwards the received information element "EAP Response/AKA'-Challenge" to the AUSF.

The AUSF performs verification (verification) based on the information element "EAP Response/AKA'-Challenge" from the SEAF. If the verification succeeds, the AUSF stores the intermediate key Kausf. Kausf corresponds to the authentication request message sent by the SEAF to the UE.

The procedure is similar to that in (3) 5G AKA. After the verification succeeds, the AUSF sends an authentication result confirmation request message to the UDM. The authentication result confirmation request message may further carry one or more of the following information: a SUPI, a timestamp, an authentication result, an authentication type (authentication type), an AUSF identifier, and a serving network name. Information about the authentication type indicates that an authentication method is EAP-AKA'. For example, the authentication result confirmation request message may be an "Nudm_UEAuthentication_ResultConfirmation Request" message.

The UDM stores an authentication result of the terminal device based on the authentication result confirmation request message, and replies the AUSF with a message. For example, the replied message may be an "Nudm_UEAuthentication_ ResultConfirmation Response" message.

### (5) Procedure of storing an intermediate key Kausf

Kausf is generated in an AUSF in a primary authentication procedure, or is sent to the AUSF after being generated by a UDM. On a UE side, the UE may generate same Kausf by using a method consistent with that used by the AUSF or the UDM. After determining that the authentication succeeds, the AUSF stores new Kausf, and an opportunity for storing Kausf on the UE side varies with an authentication method. If a 5G-AKA authentication method is used, the UE side stores Kausf after receiving a non-access stratum security mode command (Non-access stratum security mode command, NAS SMC) message. If an EAP-AKA' authentication method is used, the UE side stores Kausf after receiving an EAP-Success message. The UDM stores an identifier of the AUSF, for example, stores an instance identifier (instance ID) of the AUSF.

First, the primary authentication procedure (such as (2) authentication procedure, (3) 5G AKA, or (4) EAP-AKA') is performed, and then the NAS SMC procedure is performed.

When the 5G-AKA procedure is used, the NAS SMC procedure needs to be mandatorily performed after the primary authentication procedure, and idle time between the primary authentication procedure and the NAS SMC procedure needs to be as short as possible. After the terminal device receives a NAS SMC message from the AMF (for different authentication methods, information elements carried in the NAS SMC message may be different), the terminal device stores Kausf generated after the authentication request message from the SEAF is received.

Specifically, the terminal device performs authentication after receiving the authentication request message from the SEAF (or the AMF, where the AMF and the SEAF are co-located), and generates Kausf when the authentication succeeds. In this case, Kausf is buffered in the terminal device. After the terminal device receives the NAS SMC message from the AMF, the terminal device stores buffered Kausf on mobile equipment (mobile equipment, ME) of the terminal device.

The NAS SMC message may be a "NAS security mode command" message.

For the 5G AKA authentication method, the NAS SMC message includes one or more of the following information elements: information elements such as a selected ciphering algorithm, a selected integrity protection algorithm, and a security capability of the UE.

For the EAP-AKA' authentication method, the NAS SMC message may further include one or more of the following information elements: an EAP-Success message.

For ease of understanding, refer to FIG. 5. FIG. 5 is a schematic diagram of a NAS SMC procedure according to an embodiment of this application. The NAS SMC procedure includes the following steps.

501. Start integrity protection.

In step 501, the AMF starts an integrity protection procedure.

502. The AMF sends a NAS SMC message to UE.

In step 502, for different authentication methods, the NAS SMC message sent by the AMF to the UE carries different information elements. The terminal device may determine a currently used authentication method based on an information element carried in the NAS SMC message.

For a 5G AKA authentication method, the NAS SMC message includes one or more of the following information elements: information elements such as a selected ciphering algorithm, a selected integrity protection algorithm, and a security capability of the UE.

For an EAP-AKA' authentication method, the NAS SMC message may further include one or more of the following information elements: EAP-Success information.

It should be noted that, for the EAP-AKA' authentication method, the AMF may further send an EAP-Success message to the UE in another message. In this case, the EAP-Success message is used as an information element of the another message. The UE stores an intermediate key Kausf in response to the another message.

503. Start an uplink deciphering procedure.

In step 503, the AMF starts the uplink deciphering procedure.

504. Verify integrity of the NAS SMC message.

In step 504, the UE verifies integrity of the NAS SMC message. Specifically, if the verification succeeds, the UE starts uplink ciphering, downlink deciphering, integrity protection, and the like.

505. The UE sends a NAS SMC complete response to the AMF.

In step 505, after the UE completes verification of the NAS SMC message, the UE sends the NAS SMC complete response to the AMF. The NAS SMC complete response may be a NAS message.

506. Start a downlink ciphering procedure.

In step 506, the AMF verifies integrity of the NAS SMC message. Specifically, if the verification succeeds, the AMF starts the downlink ciphering procedure.

### (6) Multi-access scenario

In a 5G network architecture, an access technology (for example, LTE or 5G RAN) defined by a 3GPP standard group is supported to access a core network (5G core network) device side, and a non-3GPP (non-3GPP) access technology is also supported to access the core network device side. For example, the non-3GPP access technology may be for accessing the core network device side by using a non-3GPP interworking function (non-3GPP interworking function, N3IWF) or a next generation packet data gateway (next generation packet data gateway, ngPDG). A radio technology defined by the 3GPP standard group is also referred to as a 3GPP access technology.

Specifically, in a multi-access scenario, a terminal device may simultaneously access different visited networks by using the 3GPP access technology and the non-3GPP access technology. Although the accessed visited networks are different, home networks are the same.

The terminal device may alternatively access a same visited network by using the 3GPP access technology and the non-3GPP access technology.

For example, in the multi-access scenario, an example in which the terminal device separately accesses a first communication network and a second communication network is used for description. A network function that provides a service in the first communication network includes a first AMF and a first AUSF, and a network function that provides a service in the second communication network includes a second AMF and a second AUSF.

In a possible implementation, the terminal device establishes a communication connection to another network function such as the first AMF and the first AUSF by using the RAN. In other words, the terminal device accesses the first communication network by using the 3GPP access technology. The terminal device establishes a communication connection to another network function such as the second AMF and the second AUSF by using the N3IWF (or the ngPDG). In other words, the terminal device accesses the second communication network by using the non-3GPP access technology. In this embodiment of this application, the foregoing implementation is used as an example for description. It may be understood that the first communication network may alternatively be a communication network accessed by using the non-3GPP access technology, and the second communication network may alternatively be a communication network accessed by using the 3GPP access technology. This is not limited herein.

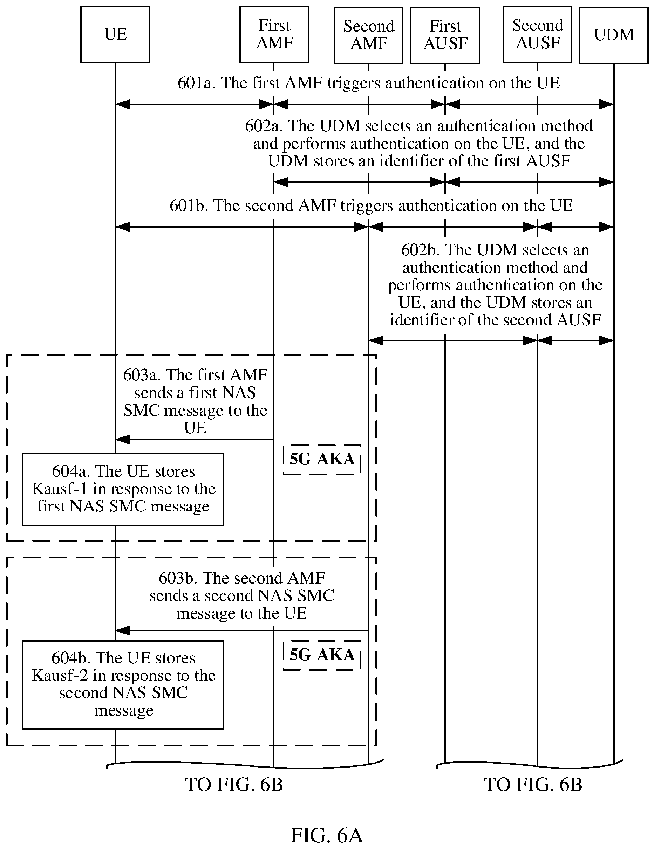

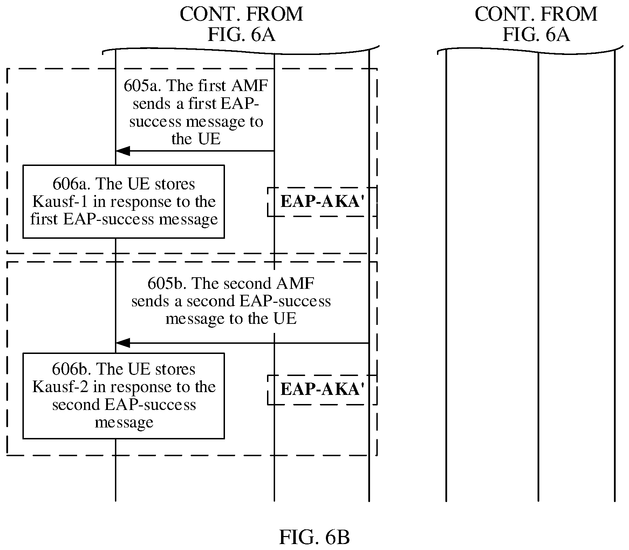

Specifically, refer to FIG. 6A and FIG. 6B. FIG. 6A and FIG. 6B are a schematic diagram of an authentication procedure of a terminal device in a multi-access scenario. For example, a first communication network includes a first AMF, and a second communication network includes a second AMF. The first communication network further includes another network function, and the second communication network further includes another network function. The first communication network and the second communication network simultaneously establish a communication connection to a UDM. For example, the first communication network may be a visited public land mobile network (visited plmn, VPLMN), and the second communication network may be another VPLMN or a home public land mobile network (home plmn, HPLMN). For the first communication network and the second communication network, the terminal device performs independent maintenance and uses different 5G security contexts, and each communication network (PLMN) corresponds to one set of 5G security contexts. A 5G security context maintained by the terminal device includes a complete 5G parameter, to be specific, includes a NAS context parameter of a 3GPP type and a NAS context parameter of a non-3GPP type of each PLMN. For example, two pairs of NAS counts (NAS COUNT) are maintained, which are for 3GPP access and non-3GPP access respectively. Each 5G security context needs to be established separately through a successful authentication procedure. It should be noted that the communication network herein is specifically a VPLMN. For the UE, there is only one Kausf. In other words, although each communication network (PLMN) of the terminal corresponds to one set of 5G security contexts, the UE and the UDM finally store Kausf for only one communication network.

It may be understood that the first AUSF and the second AUSF may be a same AUSF, or may be different AUSFs.

The following describes a specific authentication procedure.

First, the terminal device separately accesses the first communication network and the second communication network, and at a same moment, the terminal device establishes communication connections to the first communication network and the second communication network. The terminal device accesses the first communication network by using a first access technology, and the terminal device accesses the second communication network by using a second access technology. In a possible implementation, the first access technology is a 3GPP access technology, and the second access technology is a non-3GPP access technology. In another possible implementation, the first access technology is a non-3GPP access technology, and the second access technology is a 3GPP access technology.

For example, the terminal device may access the first communication network by using a RAN, and the terminal device may access the second communication network by using an N3IWF (or an ngPDG).

601a. The first AMF triggers authentication on the UE.

In step 601a, the first AMF in the first communication network triggers authentication on the UE. The first AMF may trigger authentication on the UE according to a local policy, and the authentication may occur at any moment. The first AMF may alternatively trigger authentication on the UE in a service request procedure. A specific authentication procedure is consistent with the authentication procedure shown in FIG. 4, or is consistent with step 402 to step 405 in the procedure shown in FIG. 4. The first AMF (the first AMF and an SEAF are co-located) requests the first AUSF to perform authentication on the UE.

601b. The second AMF triggers authentication on the UE.

In step 601b, the second AMF in the second communication network triggers authentication on the UE. The second AMF may trigger authentication on the UE according to a local policy, and the authentication may occur at any moment. The second AMF may alternatively trigger authentication on the UE in a service request procedure. A specific authentication procedure is consistent with the authentication procedure shown in FIG. 4, or is consistent with step 402 to step 405 in the procedure shown in FIG. 4. The second AMF (the second AMF and the SEAF are co-located) requests an authentication vector to request authentication on the UE from the second AUSF. Specifically, the second AMF sends a user authentication request message to the second AUSF.

It should be noted that, in this embodiment, an execution sequence of step 601a and step 601b is that step 601a is performed before step 601b. However, it may be understood that step 601b may alternatively be performed before step 601a.

602a. The UDM selects an authentication method, and performs authentication on the UE; and if the authentication succeeds, the first AUSF stores Kausf-1, and the UDM stores an identifier of the first AUSF.

In step 602a, after step 601a, the first AUSF sends an authentication vector obtaining request message to the UDM in response to the user authentication request message. In response to the authentication vector obtaining request message of the first AUSF, the UDM generates an authentication vector and selects an authentication method. Then, the UDM and another network function (for example, the first AMF and the first AUSF) of the first communication network complete authentication on the UDM.

When the authentication method selected by the UDM is 5G AKA, a specific authentication procedure is consistent with steps described in "(3) 5G AKA".

When the authentication method selected by the UDM is EAP-AKA', a specific authentication procedure is consistent with steps described in "(4) EAP-AKA'".

After the authentication is completed according to the foregoing procedure, if the authentication succeeds, the first AUSF stores an intermediate key Kausf. In this embodiment of this application, for ease of description, the intermediate key Kausf generated in the authentication procedure triggered by the first communication network is referred to as Kausf-1.

If the authentication succeeds, the first AUSF sends an authentication result confirmation request message to the UDM. The authentication result confirmation request message may be an "Nudm_UEAuthentication_ResultConfirmation Request" message. The authentication result confirmation request message includes a SUPI, a timestamp, an authentication result, an authentication type, an AUSF identifier, a serving network name, and the like. In response to the authentication result confirmation request message, the UDM stores the identifier of the first AUSF. For example, the UDM stores an instance identifier (instance ID) of the first AUSF.

602b. The UDM selects an authentication method, and performs authentication on the UE; and if the authentication succeeds, the second AUSF stores Kausf-2, and the UDM stores an identifier of the second AUSF.

In step 602b, after step 601b, the second AUSF sends an authentication vector obtaining request message to the UDM in response to the user authentication request message. In response to the authentication vector obtaining request message of the second AUSF, the UDM generates an authentication vector and selects an authentication method. Then, the UDM and another network function (for example, the second AMF and the second AUSF) of the second communication network complete authentication on the UDM.

When the authentication method selected by the UDM is 5G AKA, a specific authentication procedure is consistent with steps described in "(3) 5G AKA".

When the authentication method selected by the UDM is EAP-AKA', a specific authentication procedure is consistent with steps described in "(4) EAP-AKA'".

After the authentication is completed according to the foregoing procedure, if the authentication succeeds, the second AUSF stores an intermediate key Kausf. In this embodiment of this application, for ease of description, the intermediate key Kausf generated in the authentication procedure triggered by the second communication network is referred to as Kausf-2.

If the authentication succeeds, the second AUSF sends an authentication result confirmation request message to the UDM. The authentication result confirmation request message may be an "Nudm_UEAuthentication_ResultConfirmation Request" message. The authentication result confirmation request message includes a SUPI, a timestamp, an authentication result, an authentication type, an AUSF identifier, a serving network name, and the like. In response to the authentication result confirmation request message, the UDM stores the identifier of the second AUSF. For example, the UDM stores an instance identifier (instance ID) of the second AUSF.

The first communication network first performs authentication on the UE, and then the second communication network performs authentication on the UE. Therefore, the UDM first stores the identifier of the first AUSF and then stores the identifier of the second AUSF. When the UDM stores the identifier of the second AUSF, the UDM deletes the identifier of the first AUSF, and then stores the identifier of the second AUSF. In this case, the UDM stores only the identifier of the second AUSF that is last generated. Correspondingly, if the second communication network first performs authentication on the UE, and then the first communication network performs authentication on the UE, the UDM first stores the identifier of the second AUSF and then stores the identifier of the first AUSF. When the UDM stores the identifier of the first AUSF, the UDM deletes the identifier of the second AUSF, and then stores the identifier of the first AUSF. In this case, the UDM stores only the identifier of the first AUSF that is last generated.

The following separately describes authentication procedures of different authentication methods. The authentication methods include 5G AKA and EAP-AKA'. 5G AKA corresponds to steps 603a and 604a and steps 603b and 604b. EAP-AKA' corresponds to steps 605a and 606a and steps 605b and 606b.

First, 5G-AKA authentication is described as follows:
603a. The first AMF sends a first NAS SMC message to the UE.

In step 603a, a NAS SMC procedure is mandatorily performed after a 5G-AKA primary authentication procedure. Therefore, when the authentication succeeds in step 602a, the first AMF sends a NAS SMC message to the UE. In this embodiment of this application, the NAS SMC message sent by the first communication network is referred to as the first NAS SMC message.

For an information element carried in the first NAS SMC message, refer to the descriptions of the foregoing "(5) Procedure of storing an intermediate key Kausf". Details are not described herein again.

604a. The UE stores Kausf-1 in response to the first NAS SMC message.

In step 604a, in response to the first NAS SMC message, the UE finally stores Kausf-1 that is buffered in step 602a. For details, refer to the descriptions of the foregoing "(5) Procedure of storing an intermediate key Kausf". Details are not described herein again.

603b. The second AMF sends a second NAS SMC message to the UE.

In step 603b, a NAS SMC procedure is mandatorily performed after a primary authentication procedure. Therefore, when the authentication succeeds in step 602b, the second AMF sends a NAS SMC message to the UE. In this embodiment of this application, the NAS SMC message sent by the second communication network is referred to as the second NAS SMC message.

For different authentication methods, information elements carried in the second NAS SMC message may be inconsistent, and refer to the descriptions of the foregoing "(5) Procedure of storing an intermediate key Kausf". Details are not described herein again.

604b. The UE stores Kausf-2 in response to the second NAS SMC message.

In step 604b, in response to the second NAS SMC message, the UE finally stores Kausf-2 that is buffered in step 602b. For details, refer to the descriptions of the foregoing "(5) Procedure of storing an intermediate key Kausf". Details are not described herein again.

If the UE already stores Kausf-1, the UE deletes Kausf-1, and stores new Kausf-2.

Then, EAP-AKA' authentication is described as follows:

605a. The first AMF sends a first EAP-success message to the UE.

In step 605a, when the authentication succeeds in step 602a, the first AMF sends an EAP-success message to the UE. In this embodiment of this application, the EAP-success message sent by the first communication network is referred to as the first EAP-success message.

For an information element carried in the first EAP-success message, refer to the descriptions of the foregoing "(5) Procedure of storing an intermediate key Kausf". Details are not described herein again.

In a possible implementation, the EAP-success message is also a NAS SMC message, and an information element included in the NAS SMC message is an EAP-success message.

606a. The UE stores Kausf-1 in response to the first EAP-success message.

In step 606a, in response to the first EAP-success message, the UE finally stores Kausf-1 that is buffered in step 602a. For details, refer to the descriptions of the foregoing "(5) Procedure of storing an intermediate key Kausf". Details are not described herein again.

605b. The second AMF sends a second EAP-success message to the UE.

In step 605b, an EAP-success procedure is mandatorily performed after a primary authentication procedure. Therefore, when the authentication succeeds in step 602b, the second AMF sends an EAP-success message to the UE. In this embodiment of this application, the EAP-success message sent by the second communication network is referred to as the second EAP-success message.

For different authentication methods, information elements carried in the second EAP-success messages may be inconsistent, and refer to the descriptions of the foregoing "(5) Procedure of storing an intermediate key Kausf". Details are not described herein again.

606b. The UE stores Kausf-2 in response to the second EAP-success message.

In step 606b, in response to the second EAP-success message, the UE finally stores Kausf-2 that is buffered in step 602b. For details, refer to the descriptions of the foregoing "(5) Procedure of storing an intermediate key Kausf". Details are not described herein again.

If the UE already stores Kausf-1, the UE deletes Kausf-1, and stores new Kausf-2.

In the scenario described in FIG. 6A and FIG. 6B, the terminal device separately receives the authentication request message of the first communication network and the authentication request message of the second communication network. The terminal device needs to complete an authentication procedure according to a sequence of receiving the authentication request messages. On a network device side, an authentication procedure also needs to be completed based on an authentication operation triggered by an AMF. For example, in the scenario shown in FIG. 6A and FIG. 6B, the first AMF first sends an authentication request message 1 to the terminal device, and then the second AMF sends an authentication request message 2 to the terminal device. The terminal device stores an intermediate key Kausf-1 in response to the authentication request message 1, and the terminal device stores an intermediate key Kausf-2 in response to the authentication request message 2. On the network device side, in response to an authentication operation of the first AMF, the first AUSF stores the intermediate key Kausf-1, and the UDM stores the identifier of the first AUSF; and in response to an authentication operation of the second AMF, the second AUSF stores the intermediate key Kausf-2, and the UDM stores the identifier of the second AUSF. The terminal device side and the network device side complete a subsequent procedure.

However, because quality of communication on the terminal device and the network device side may be unstable, or working capabilities of network functions in different communication systems are different (for example, capabilities of network functions for processing signaling or messages are different), an AUSF corresponding to an AUSF identifier stored in the UDM is inconsistent with an AUSF corresponding to an intermediate key Kausf stored in the terminal device, which is also referred to as key out-of-synchronization.

The following uses a steer of roaming (steer of roaming, SoR) procedure and a UE parameters update (ue parameters update, UPU) procedure as examples to describe a problem caused by key out-of-synchronization.

When key out-of-synchronization occurs (that is, an intermediate key used on the network device side is inconsistent with an intermediate key (Kausf) used on the UE side), the UDM triggers an SoR procedure and a UPU procedure. After performing security protection on data by using the intermediate key, the network device side sends a security protection result to the UE. The intermediate key stored in the UE is inconsistent with the intermediate key used on the network device side. Therefore, the UE cannot verify information from the network device side, or the UE cannot parse information from the network device side. As a result, the SoR procedure and the UPU procedure fail, and a UE configuration is incorrect. In this case, the UE may fail to access a network or cannot access the network as required by an operator. This causes negative impact on the operator and the UE. For example, roaming charging increases, and UE network access optimization fails.

For example, in the scenario shown in FIG. 6A and FIG. 6B, if the UDM selects the 5G-AKA authentication method in both the two communication systems, the first AMF in the first communication system first triggers authentication on the UE, and the first AMF sends the authentication request message 1 to the UE. Then, the second AMF in the second communication system triggers authentication on the UE, and the second AMF sends the authentication request message 2 to the UE. In the authentication procedure triggered by the first communication system, the UDM stores the identifier of the first AUSF in the first communication system. After the authentication procedure triggered by the second communication system, the UDM finally stores the identifier of the second AUSF in the second communication system. Because communication quality is unstable, the terminal device does not receive the first NAS SMC message sent by the first AMF. Therefore, the first AMF is triggered to resend the first NAS SMC message to the terminal device. On the terminal device side, the second NAS SMC message from the second AMF is first received, and then the first NAS SMC message (the first NAS SMC message is resent by the first AMF) sent by the first AMF is received. Therefore, the terminal device finally stores the intermediate key Kausf-1 corresponding to the first NAS SMC message. However, the network device side, is not affected by unstable communication quality, and the AUSF identifier finally stored by the UDM is the identifier of the second AUSF. In the subsequent SoR or UPU procedure, the intermediate key (Kausf-1) used by the terminal device is inconsistent with the intermediate key (Kausf-2) used by the network device side, causing key out-of-synchronization, and affecting normal service execution.

This problem may also occur in the EAP-AKA' authentication procedure. It is assumed that the UDM selects the EAP-AKA' authentication method in both communication systems. According to the descriptions in step 9 in section 6.1.3.1 in the standard TS 33.501, before the AUSF sends EAP Success to the SEAF, the AUSF may exchange some optional EAP messages with the UE. On a UDM side, the UDM finally stores the identifier of the second AUSF in the second communication system. However, because the first AUSF in the first communication system exchanges an optional EAP message with the UE, but the first AUSF in the second communication system does not exchange an optional EAP message with the UE, the UE first receives EAP-Success sent by the second communication system, and then receives EAP-Success sent by the AUSF in the first communication system. Finally, the intermediate key (Kausf-1) used by the UE is inconsistent with the intermediate key (Kausf-2) used by the network device side, causing key out-of-synchronization, and affecting normal service execution.

Based on this, an embodiment of this application provides a communication method. Refer to FIG. 7A and FIG. 7B. FIG. 7A and FIG. 7B are a schematic diagram of an embodiment of a communication method according to an embodiment of this application. In the embodiment shown in FIG. 7A and FIG. 7B, a UDM processes a plurality of authentication vector obtaining request messages in a sequence of receiving the plurality of authentication vector obtaining request messages. The communication method provided in this embodiment of this application includes the following steps.

701. UE sends a first N1 message to a first AMF.

In step 701, the UE accesses a first communication network to which the first AMF belongs, and triggers a primary authentication procedure for the UE. First, the UE sends the first N1 message (N1 message) to an AMF (the AMF and an SEAF are co-located) or the SEAF. The first N1 message carries a SUCI of the UE or a 5G-globally unique temporary UE identity (5G-globally unique temporary UE identity, 5G-GUTI). The N1 message may be a service request message or a registration request message.

The first communication network is similar to the first communication network in the scenario shown in FIG. 6A and FIG. 6B. Details are not described herein again.

702. The first AMF sends a first user authentication request message to a first AUSF.

In step 702, the first AMF triggers an authentication procedure for the terminal device in response to the first N1 message, and the first AMF sends the first user authentication request message to the first AUSF, where the first user authentication request message is for requesting an authentication vector (authentication vector, AV) about the terminal device.

For example, the first user authentication request message is "Nausf_UEAuthentication_Authentication Request". The message carries a SUCI (or a SUPI).

In a possible implementation, if the first N1 message received by the first AMF from the terminal device carries the SUCI, the first user authentication request message sent by the first AMF to the AUSF carries the SUCI. If the N1 message received by the first AMF from the terminal device carries the 5G-GUTI, the first AMF first obtains a SUPI based on the 5G-GUTI, and the first user authentication request message sent by the first AMF to the AUSF carries the SUPI.

It should be noted that the first AMF may send the first user authentication request message to the first AUSF in response to the first N1 message, or the first AMF may actively trigger sending of the first user authentication request message to the first AUSF. In other words, step 701 is optional. This is because after receiving the first N1 message, the first AMF may not trigger authentication on the UE. Therefore, in this case, authentication on the UE does not need to be triggered based on the first N1 message. In addition, because the AMF may initiate authentication on the UE at any time according to a policy, the AMF may send the first user authentication request message to the first AUSF after receiving the first N1 message and before the UE returns to an idle mode. In this case, there is no direct relationship between the first N1 message in step 701 and step 702. In other words, step 701 is performed before step 702, and it is very likely that the AMF has completed an entire procedure corresponding to step 701. For example, the first AMF initiates step 702 only after sending a service complete message to the UE.

703. The first AUSF sends a first authentication vector obtaining request message to the UDM. Correspondingly, the UDM receives the first authentication vector obtaining request message.

In step 703, after the first AUSF responds to the first user authentication request message from the first AMF, the first AUSF sends the first authentication vector obtaining request message to the UDM. The first authentication vector obtaining request message is for obtaining an authentication vector of the UE.

For example, the first authentication vector obtaining request message is "Numd_UEAuthentication Get Request". The first authentication vector obtaining request message carries a SUPI (or a SUCI). Specifically, when the first user authentication request message sent by the first AMF to the first AUSF carries the SUPI, the first authentication vector obtaining request message carries the SUPI; or when the first user authentication request message sent by the first AMF to the first AUSF carries the SUCI, the first authentication vector obtaining request message carries the SUCI.

704. The UE sends a second N1 message to a second AMF.

In step 704, the UE accesses a second communication network to which the second AMF belongs.

The second communication network is similar to the scenario shown in FIG. 6A and FIG. 6B. Details are not described herein again.

705. The second AMF sends a second user authentication request message to a second AUSF.

706. The second AUSF sends a second authentication vector obtaining request message to the UDM.

Correspondingly, the UDM receives the second authentication vector obtaining request message. Steps 704 to 706 are similar to steps 701 to 703. Details are not described herein again.

Both the first authentication vector obtaining request message and the second authentication vector obtaining request message are authentication vector obtaining request messages for same UE. Because the first AMF and the second AMF belong to two different networks, steps 701 to 703 and steps 704 to 706 may be performed simultaneously or at adjacent time moments. Therefore, it may be understood that the UDM may receive both the first authentication vector obtaining request message and the second authentication vector obtaining request message.

For descriptions of "simultaneously" and "at close moments", refer to the content part of the present invention. Details are not described herein again.

In this application, it is assumed that the UDM selects the first authentication vector obtaining request message for processing, and performs step 707. If the UDM receives the first authentication vector obtaining request message and the second authentication vector obtaining request message at close moments, the UDM processes the first authentication vector obtaining request message and the second authentication vector obtaining request message in a sequence of receiving the messages.

In another possible implementation, after receiving the first authentication vector obtaining request message, the UDM prepares to start processing, but has not performed step 707.

In another possible implementation, alternatively, the UDM may have processed the first authentication vector obtaining request message and have performed step 707.

In another possible implementation, step 707 may have been performed, but the UDM has not received a first authentication result confirmation request message for a first authentication vector in step 714.

Regardless of whether an authentication vector request message is randomly selected or is sequentially processed, it may be understood as that the UDM first processes one authentication vector request message, and suspends the other authentication vector request message. The UDM starts to process the other suspended authentication vector request message only after processing a primary authentication procedure corresponding to the 1^{st} authentication vector request message or determining that UE authentication succeeds. After receiving the authentication result confirmation message, the UDM may consider that the primary authentication procedure ends, or UE authentication succeeds. Further, when receiving the authentication result confirmation message and determining that the message is related to another primary authentication procedure of the SUPI, the UDM may consider that the primary authentication procedure ends; or after updating a locally stored authentication status corresponding to the UE, the UDM considers that the primary authentication procedure ends. How the UDM considers that the primary authentication procedure ends is not specifically limited in this application.

Specific content of processing the first authentication vector obtaining request message and the second authentication vector obtaining request message by the UDM is as follows:

707. The UDM obtains the first authentication vector in response to the first authentication vector obtaining request message.

In step 707, from a perspective of the UDM, the UDM randomly selects the first authentication vector obtaining request message, or first receives the first authentication vector obtaining request message from the first AUSF in step 703 (the first authentication vector obtaining request message is related to the first AMF, and is considered as an authentication message related to the first communication network). The UDM then receives the second authentication vector obtaining request message of the second AUSF in step 706 (the second authentication vector obtaining request message is related to the second AMF, and is considered as an authentication message related to the second communication network).

Both the first authentication vector obtaining request message and the second authentication vector obtaining request message are authentication vector obtaining request messages for same UE. That the UDM sequentially processes the plurality of authentication vector obtaining request messages includes: The UDM processes the first authentication vector obtaining request message and the second authentication vector obtaining request message based on a randomly selected method or a method based on a receiving order. First, steps 707 to 714 are performed, and then steps 715 to 719 are performed.

Specifically, in response to the first authentication vector obtaining request message, the UDM selects an authentication method of the UE, and obtains the first authentication vector related to the UE. A specific method is similar to step 404. Details are not described herein again.

After receiving the first authentication vector obtaining request message, the UDM determines the authentication method of the UE based on subscription information of the UE. In this embodiment, an example in which the UDM selects 5G AKA as the authentication method of the UE in response to the first authentication vector obtaining request message is used for description.

Before the UDM processes the first authentication vector obtaining request message and the second authentication vector obtaining request message based on the randomly selected method or the method based on the receiving order, the UDM first needs to determine whether the SUPI is authenticated on a network device side. Specifically, when the UDM receives the second authentication vector request message, the UDM determines whether a SUPI carried in the second authentication vector request message or a corresponding SUPI obtained after the SUCI is deciphered is being authenticated. In other words, when the UDM receives the second authentication vector request message, the UDM needs to check, based on the SUPI, whether the UDM further receives the first authentication vector request message. The UDM may determine, by using the following methods, whether the UE is being authenticated:

Method 1: The UDM determines, based on status information stored in a database, whether the UE is being authenticated.

For example, if a recorded time moment at which authentication on the UE is completed is very close to a current time moment in a record of the UDM, it may be determined that the UE is not being authenticated at the current time moment. For another example, if a list is created for the UE in a record of the UDM, but an authentication result of the UE is not marked, the UDM may determine that the UE is being authenticated, and start a timer. An authentication request message that is just received is not processed before the timer expires. In this case, the UDM detects a subsequently received authentication result confirmation message. If a SUPI carried in an authentication result confirmation message is consistent with a SUPI carried in a currently received authentication request message, the UDM may stop the timer, and start to process a suspended authentication vector request message.

Method 2: The UDM records which UEs are being authenticated. For example, when the UDM receives an authentication request message, the UDM creates a list of UEs that are being authenticated, or checks, based on a list that is already created, whether the SUPI is in the list. If the SUPI is in the list, it is determined that the UE is being authenticated. If the SUPI is not in the list, the UDM adds the UE to the list and responds with an authentication vector request message. The UDM removes the UE from the list when considering that a primary authentication procedure ends. When the UDM determines that the UE is being authenticated by a network, the UDM suspends an authentication vector request message that is just received.

708. The UDM sends a first authentication vector obtaining response message to the first AUSF. The first authentication vector obtaining response message carries the first authentication vector.

After step 707, step 708 is performed. After determining a corresponding authentication vector based on the selected authentication method (5G AKA), the UDM sends the first authentication vector obtaining response message to the first AUSF. The first authentication vector obtaining response message carries the first authentication vector. For example, the first authentication vector obtaining response message is "Nudm_UEAuthentication_Get Response".

709. The first AUSF sends a first user authentication response message to the first AMF.

In step 709, the first AUSF sends the first user authentication response message to the first AMF. The first user authentication response message carries a first authentication vector *. The first authentication vector * may be a part of the first authentication vector, or may be obtained through calculation by the AUSF based on a part or all of content of the first authentication vector. This is not limited herein.

For example, the first user authentication response message is "Nausf_UEAuthentication_Authenticate Response".

In a 5G AKA authentication procedure, after receiving the first user authentication response message from the first AUSF again, the first AMF triggers a NAS SMC procedure, so that the UE stores Kausf. In other words, step 724 is performed. The first AMF sends a first NAS SMC message to the UE. Specific content is described in step 724.

710. The first AMF sends a first authentication request message to the UE.

In step 710, the first AMF sends the first authentication request message to the UE in response to the first user authentication response message. The first authentication request message carries one or more of the following information elements: a key identifier in 5G (Key Set Identifier in 5G, ngKSI) and an anti-bidding down between architectures (ABBA) parameter.

The first authentication request message may be an authentication request (Authentication Request) message.

711. In response to the first authentication request message, the UE performs authentication verification on the first communication network and generates a first intermediate key Kausf-1.

In step 711, the UE locally performs authentication verification on the first communication network in response to the first authentication request message, for example, compares whether a message authentication code (message Authentication code, MAC) carried in the first authentication vector * is consistent with an expected message authentication code (expected message authentication code, XMAC) indicated by the UE based on content in the first authentication vector *. If the codes are the same, an authentication verification result indicates that the first communication network is real, and the authentication verification succeeds.

A response is calculated after the authentication succeeds. When the authentication verification succeeds, an intermediate key corresponding to the first communication network is generated. In this embodiment of this application, the intermediate key corresponding to the first communication network is referred to as the first intermediate key. The first intermediate key may be Kausf-1.

The first intermediate key Kausf-1 generated by the UE in response to the first authentication request message is stored in a buffer area. In this embodiment of this application, a buffer area in which the terminal device stores an intermediate key Kausf is referred to as a first storage space.

It should be noted that the first intermediate key Kausf-1 may be generated when the terminal device successfully performs authentication verification, may be generated before the terminal device performs authentication verification, or may be generated in a process in which the terminal device performs authentication verification. In this embodiment of this application, an occasion at which the terminal device generates the first intermediate key Kausf-1 is not limited.

It may be understood that when the terminal device generates Kausf-1 before performing the authentication verification, or generates the first intermediate key Kausf-1 in the process of performing the authentication verification, if the authentication verification fails, the terminal device may further delete the generated first intermediate key Kausf-1.

712. The UE sends a first authentication response message to the first AMF.

In step 712, when the authentication verification performed by the UE on the first communication network succeeds, the UE sends the first authentication response message to the first AMF, where the first authentication response message may be "Authentication response".

713. The first AMF sends a third user authentication request message corresponding to the first authentication response message to the first AUSF.

In step 713, the first AMF responds to the first authentication response message. For example, in a 5G-AKA procedure, a response (HRES*) is generated, and the third user authentication request message corresponding to the first authentication response message is sent to the first AUSF. The third user authentication request message may be "Nausf_UEAuthentication_Authenticate Request".

714. The first AUSF sends a first authentication result confirmation request message for the first authentication vector to the UDM.

In step 714, the first AUSF verifies the third user authentication request message in response to the third user authentication request message corresponding to the first authentication response message. If the verification succeeds, the first AUSF stores the first intermediate key Kausf-1. Kausf-1 may be generated after the AUSF successfully verifies the third user authentication request message, or may be generated after the AUSF receives the first authentication vector.

The first AUSF sends a third user authentication response message to the first AMF (or the SEAF associated with the first AMF), where the third user authentication response message carries a verification result (for example, indicating that the authentication verification performed by the UE succeeds). The third user authentication response message may be "Nausf_UEAuthentication_Authenticate Response".

The first AUSF sends the first authentication result confirmation request message for the first authentication vector to the UDM. The first authentication result confirmation request message may further carry one or more of the following information: a SUPI, a timestamp, an authentication result, an authentication type (authentication type), a serving network name, and an identifier of the first AUSF. Optionally, information about the authentication type indicates that an authentication method is 5G AKA. For example, the first authentication result confirmation request message may be a "Nudm_UEAuthentication_ResultConfirmation Request" message.

715. The UDM stores the identifier of the first AUSF in response to the first authentication result confirmation request message, and continues to process the second authentication vector obtaining request message to obtain a second authentication vector.

In step 715, the UDM receives the first authentication result confirmation request message from the first AUSF, and stores the identifier of the first AUSF.

Before the UDM receives the first authentication result confirmation request message from the first AUSF, the UDM suspends processing of the second authentication vector obtaining request message. After the UDM receives the first authentication result confirmation request message from the first AUSF, the UDM resumes processing the second authentication vector obtaining request message.

The UDM obtains the second authentication vector in response to the second authentication vector obtaining request message. Specifically, in response to the second authentication vector obtaining request message, the UDM selects the authentication method of the UE, and obtains the authentication vector related to the UE. A specific method is similar to step 404. Details are not described herein again.

In this embodiment, an example in which the UDM selects 5G AKA as the authentication method of the UE in response to the second authentication vector obtaining request message is used for description.

716. The UDM sends a second authentication vector obtaining response message to the second AUSF. The second authentication vector obtaining response message includes the second authentication vector.

717. The second AUSF sends a second user authentication response message to the second AMF.

The second user authentication response message includes a second authentication vector *. The second authentication vector * may be a part of the second authentication vector or may be obtained through calculation by the AUSF based on a part or all of content of the second authentication vector.

718. The second AMF sends a second authentication request message to the UE.

In step 718, the second AMF sends the second authentication request message to the UE in response to the second user authentication response message. The second authentication request message carries one or more of the following information elements: a key identifier in 5G (Key Set Identifier in 5G, ngKSI) and an anti-bidding down between architectures (ABBA) parameter.

The second authentication request message may be an authentication request (Authentication Request) message.

719. In response to the second authentication request message, the UE performs authentication verification on the second communication network and generates a second intermediate key Kausf-2.

Step 719 is similar to step 711. It should be noted that the second intermediate key Kausf-2 may be generated when the terminal device successfully performs authentication verification, may be generated before the terminal device performs authentication verification, or may be generated in a process in which the terminal device performs authentication verification. In this embodiment of this application, an occasion at which the terminal device generates the second intermediate key Kausf-2 is not limited.

It may be understood that when the terminal device generates Kausf-2 before performing the authentication verification, or generates the intermediate key Kausf-2 in the process of performing the authentication verification, if the authentication verification fails, the terminal device may further delete the generated Kausf-2.

720. The UE sends a second authentication response message to the second AMF.

721. The second AMF sends a fourth user authentication request message corresponding to the second authentication response message to the second AUSF.

In step 721, the second AMF generates a response in response to the second authentication response message, and sends the fourth user authentication request message corresponding to the second authentication response message to the second AUSF. The fourth user authentication request message may be "Nausf_UEAuthentication_Authenticate Request".

722. The second AUSF sends a second authentication result confirmation request message for a second authentication vector to the UDM.

In step 722, the second AUSF verifies the fourth user authentication request message in response to the fourth user authentication request message corresponding to the second authentication response message. If the verification succeeds, the second AUSF stores the second intermediate key Kausf-2. Kausf-2 may be generated after the AUSF successfully verifies the fourth user authentication request message, or may be generated after the AUSF receives the second authentication vector.

The second AUSF sends a fourth user authentication response message to the second AMF (or the SEAF associated with the second AMF), where the fourth user authentication response message carries a verification result (for example, indicating that the authentication verification performed by the UE succeeds). The fourth user authentication response message may be "Nausf_UEAuthentication_Authenticate Response".

The second AUSF sends the second authentication result confirmation request message for the second authentication vector to the UDM. The second authentication result confirmation request message may further carry one or more of the following information: a SUPI, a timestamp, an authentication result, an authentication type (authentication type), a serving network name, and an identifier of the second AUSF. For example, information about the authentication type indicates that an authentication method is 5G AKA. For example, the second authentication result confirmation request message may be a "Nudm_UEAuthentication_ResultConfirmation Request" message.

723. The UDM stores the identifier of the second AUSF in response to the second authentication result confirmation request message.

Specifically, the UDM receives the second authentication result confirmation request message from the second AUSF, and stores the identifier of the second AUSF. Specifically, the UDM replaces the identifier of the first AUSF with the identifier of the second AUSF.

Optionally, the UDM may notify the first AUSF to delete the first intermediate key Kausf-1. In this way, it is ensured that the network device side stores only the second intermediate key Kausf-2, thereby ensuring that the intermediate key stored on the terminal device is consistent with the intermediate key stored on the network device side.

724. The first AMF sends the first NAS SMC message to the UE.

In step 714, after the first AMF (or the SEAF associated with the first AMF) receives the third user authentication response message from the first AUSF, step 724 is performed. In step 724, the first AMF sends the first NAS SMC message to the UE, where the first NAS SMC message includes one or more of the following information: a key identifier in 5G (ngKSI), a UE security capabilities (UE sec capabilities), a ciphering algorithm (Ciphering Algorithm), an integrity algorithm (Integrity Algorithm), a Kamf change flag (K_AMF_change_flag), an ABBA parameter, or a request initial NAS message flag (request Initial NAS message flag).

725. The UE stores the first intermediate key Kausf-1 in response to the first NAS SMC message.

In step 725, after receiving the first NAS SMC message from the first AMF, the UE stores, in a long-term storage space, the first intermediate key Kausf-1 that is stored in the first storage space (the buffer area). In this embodiment of this application, the long-term storage space of the terminal device is referred to as a second storage space. For example, the second storage space may be ME in the terminal device.

After the UE stores the first intermediate key Kausf-1 in the second storage space, the UE sends a response message of the first NAS SMC message to the first AMF. The response message may be "NAS Security Mode Complete".

Optionally, after receiving the first NAS SMC message from the first AMF, the UE first detects whether the first NAS SMC message is associated with the first authentication request message (from the first AMF). Specifically, it is determined, based on information carried in the first NAS SMC message, whether the first NAS SMC message is from the first AMF. First, whether the first NAS SMC message is associated with the first authentication request message (from the first AMF) is detected. For example, whether the first NAS SMC message is from the first AMF is determined based on the information carried in the first NAS SMC message. For another example, whether the first NAS SMC message is from the first AMF is determined based on an underlying message (for example, an RRC message or a Wi-Fi AP message) that carries the first NAS SMC. A determining method is not limited in this application. After the UE determines that the first NAS SMC message is associated with the first AMF, the UE stores the first intermediate key Kausf-1 in response to the first NAS SMC message.

726. The second AMF sends a second NAS SMC message to the UE.

In step 726, after receiving the second NAS SMC message from the second AMF, the UE first detects whether the second NAS SMC message is associated with the second authentication request message (from the second AMF). For details, refer to related descriptions in step 725.

727. The UE replaces the first intermediate key Kausf-1 with the second intermediate key Kausf-2 in response to the second NAS SMC message.

In step 727, after the UE determines that the second NAS SMC message is associated with the second AMF, the UE stores the second intermediate key Kausf-2 in response to the second NAS SMC message.

Specifically, after responding to the second NAS SMC message, the UE stores, in the long-term storage space, the second intermediate key Kausf-2 that is stored in the first storage space (the buffer area). Because the first intermediate key Kausf-1 is already stored in the long-term storage space, the UE replaces the first intermediate key Kausf-1 in the second storage space with the second intermediate key Kausf-2 in the first storage space. The UE performs authentication and communication by using the second intermediate key Kausf-2 in the second storage space (the long-term storage space).

After the UE stores the second intermediate key Kausf-2 in the second storage space, the UE sends a response message of the second NAS SMC message to second first AMF. The response message may be "NAS Security Mode Complete".

In this embodiment of this application, the UDM processes the plurality of authentication vector obtaining request messages in the sequence of receiving the plurality of authentication vector obtaining request messages. Before receiving the first authentication result confirmation request message corresponding to the first authentication vector, the UDM suspends processing of the second authentication vector obtaining request message. The plurality of authentication vector obtaining requests for the UE are controlled on the UDM, to ensure that an authentication procedure of a first communication network associated with the first authentication vector obtaining request message is first performed. In the authentication procedure between the UE and the first communication network, both the UE and the network device side store a first intermediate key Kausf-1 related to the first communication network. After receiving the first authentication result confirmation request message for the first authentication vector, the UE resumes processing the second authentication vector obtaining request message, that is, resumes performing an authentication procedure of a second communication network. After the authentication procedure is completed, the intermediate keys finally stored on the UE and the network device side are both a second intermediate key Kausf-2 associated with the second communication network. The foregoing method can ensure that the intermediate key stored on the UE is always consistent with the intermediate key stored on the network device side, avoiding key out-of-synchronization.

Based on the embodiment shown in FIG. 7A and FIG. 7B, the following describes an application scenario provided in an embodiment of this application. According to the procedure in the embodiment shown in FIG. 7A and FIG. 7B, an intermediate key finally stored in the terminal device by the second intermediate key Kausf-2, an intermediate key finally stored on the network device side is the second intermediate key Kausf-2, and the intermediate key stored in the terminal device is consistent with the intermediate key stored on the network device side.

In an application scenario, steer of roaming (steer of roaming, SoR) is used as an example for description. In SoR, the UDM determines the second AUSF based on the identifier of the second AUSF stored in the UDM. The UDM sends roaming network selection information to the second AUSF, and the second AUSF stores the second intermediate key Kausf-2. The second AUSF performs security protection (for example, integrity protection) on the roaming network selection information by using the second intermediate key Kausf-2. The second AUSF sends a result of the security protection to the UDM. After receiving the result of the security protection, the UDM sends the result of the security protection to the UE via an AMF. The UE verifies the result of the security protection by using the second intermediate key Kausf-2 stored in the UE. Because the terminal device side and the network device side use a same intermediate key (Kausf-2), the foregoing SoR procedure can be successfully performed.

In another application scenario, UE parameters update (ue parameters update, UPU) is used as an example for description. The UPU procedure is for updating subscription data or configuration data of the UE, for example, updating a UE route selection policy (ue route selection policy, URSP). In UPU, the UDM determines the second AUSF based on the identifier of the second AUSF stored in the UDM. The UDM sends the subscription data or the configuration data of the UE to the second AUSF, and the second AUSF stores the second intermediate key Kausf-2. The second AUSF performs security protection (for example, integrity protection) on the subscription data or the configuration data of the UE by using the second intermediate key Kausf-2. The second AUSF sends a result of the security protection to the UDM. After receiving the result of the security protection, the UDM sends the result of the security protection to the UE via an AMF. The UE verifies the result of the security protection by using the second intermediate key Kausf-2 stored in the UE. Because the terminal device side and the network device side use a same intermediate key (Kausf-2), the foregoing UPU procedure can be successfully performed.

In the embodiment shown in FIG. 7A and FIG. 7B, a special scenario is: The first AUSF and the second AUSF are a same AUSF, that is, the first AUSF and the second AUSF have a same function.

In a possible implementation, the AUSF sequentially processes first user authentication request messages from different AMFs. After receiving a response to a previous user authentication request message, the AUSF starts to process a next first user authentication request message.

In another possible implementation, the AUSF generates a receiving order record of a plurality of received user authentication request messages. The AUSF simultaneously processes the plurality of user authentication request messages. Herein, "simultaneously" may also be processing in a specific sequence. This is not limited. The AUSF sequentially sends authentication result confirmation request messages corresponding to the plurality of user authentication request messages to the UDM based on the receiving order record. The foregoing method can ensure that the intermediate key (Kausf-2) stored on the UE is consistent with the intermediate key (Kausf-2) stored on the network device side, avoiding key out-of-synchronization.

Based on the foregoing embodiment, refer to FIG. 8A and FIG. 8B. FIG. 8A and FIG. 8B are a schematic diagram of an embodiment of a communication method according to an embodiment of this application. In the embodiment shown in FIG. 8A and FIG. 8B, after a terminal device receives a plurality of authentication request messages, the terminal device needs to process a next authentication request message after receiving a NAS SMC or EAP-Success message corresponding to a previous authentication request message. Specifically, the terminal device separately accesses a first communication network and a second communication network. The first communication network includes a first AMF, the second communication network includes a second AMF, and the first communication network and the second communication network are similar to the first communication network and the second communication network that are shown in FIG. 6A and FIG. 6B. The communication method provided in this embodiment of this application includes the following steps.

801. The first AMF triggers authentication on the UE.

In step 801, the UE accesses a first communication network to which the first AMF belongs, and triggers a primary authentication procedure for the UE. Alternatively, the first AMF triggers authentication on the UE according to a local policy.

The procedure of step 801 is specifically as follows:

Step 801a. The UE sends an N1 message (N1 message) to an AMF (the AMF and an SEAF are co-located) or the SEAF. The N1 message carries a SUCI of the UE or a 5G-globally unique temporary UE identity (5G-globally unique temporary UE identity, 5G-GUTI). If the AMF triggers authentication on the UE according to the local policy, the procedure corresponding to this step may have ended.

Step 801b. The first AMF sends a first user authentication request message to a first AUSF, where the first user authentication request message is for requesting an authentication vector (authentication vector, AV) about the terminal device. This step may be that the first AMF triggers authentication on the terminal device in response to the N1 message, or may be triggered according to a local policy.

For example, the first user authentication request message is "Nausf_UEAuthentication_Authentication Request". The message carries a SUCI (or a SUPI) and a serving network name (serving network name, SN-name).

If the N1 message received by the first AMF from the terminal device carries the SUCI, the first user authentication request message sent by the first AMF to the AUSF carries the SUCI. If the N1 message received by the first AMF from the terminal device carries the 5G-GUTI, the first AMF first obtains a SUPI based on the 5G-GUTI, and the first user authentication request message sent by the first AMF to the AUSF carries the SUPI. If the authentication is triggered according to a local policy, the first user authentication request message sent by the AMF carries the SUPI.

Step 801c. After the first AUSF responds to the first user authentication request message from the first AMF, the first AUSF sends a first authentication vector obtaining request message to a UDM. The first authentication vector obtaining request message is for obtaining the authentication vector of the UE.

For example, the first authentication vector obtaining request message is "Numd_UEAuthentication Get Request". The first authentication vector obtaining request message carries a SUPI (or a SUCI) and an SN-name. Specifically, when the first user authentication request message sent by the first AMF to the first AUSF carries the SUPI, the first authentication vector obtaining request message carries the SUPI; or when the first user authentication request message sent by the first AMF to the first AUSF carries the SUCI, the first authentication vector obtaining request message carries the SUCI.

Step 801d. In response to the first authentication vector obtaining request message, the UDM selects an authentication method of the UE, and obtains a first authentication vector related to the UE. A specific method is similar to step 404. Details are not described herein again.

Step 801e. After determining a corresponding authentication vector based on the selected authentication method (5G AKA), the UDM sends a first authentication vector obtaining response message to the first AUSF. The first authentication vector obtaining response message carries the first authentication vector. For example, the first authentication vector obtaining response message is "Num_UEAuthentication_Get Response".

Step 801f. The first AUSF stores and verifies an expected response (eXpected response, XRES or XRES*) in response to the first authentication vector obtaining response message. The first AUSF sends a first user authentication response message to the first AMF. The first user authentication response message carries an authentication vector, for example, "5G SE AV".

For example, the first user authentication response message is "Nausf_UEAuthentication_Authenticate Response".

802. The UE receives a first authentication request message from the first AMF.

In step 802, the first AMF sends the first authentication request message to the UE in response to the first user authentication response message. The first authentication request message carries one or more of the following information elements: a key identifier in 5G (Key Set Identifier in 5G, ngKSI) and an anti-bidding down between architectures (ABBA) parameter.

The first authentication request message may be an authentication request (Authentication Request) message.

After step 802, step 805 or step 806 is performed.

803. The second AMF triggers authentication on the UE.

The procedure of step 803 is specifically as follows:

Step 803a. The UE sends an N1 message (N1 message) to an AMF (the AMF and an SEAF are co-located) or the SEAF. The N1 message carries a SUCI of the UE or a 5G-globally unique temporary UE identity (5G-globally unique temporary UE identity, 5G-GUTI).

Step 803b. The second AMF triggers authentication on the terminal device, and the second AMF sends a second user authentication request message to a second AUSF, where the second user authentication request message is for requesting an authentication vector (authentication vector, AV) about the terminal device.

For example, the second user authentication request message is "Nausf_UEAuthentication_Authentication Request". The message carries a SUCI (or a SUPI) and a serving network name (serving network name, SN-name).

If the N1 message received by the second AMF from the terminal device carries the SUCI, the second user authentication request message sent by the second AMF to the AUSF carries the SUCI. If the N1 message received by the second AMF from the terminal device carries the 5G-GUTI, the second AMF first obtains a SUPI based on the 5G-GUTI, and the second user authentication request message sent by the second AMF to the AUSF carries the SUPI.

Step 803c. After the second AUSF responds to the second user authentication request message from the second AMF, the second AUSF sends a second authentication vector obtaining request message to the UDM. The second authentication vector obtaining request message is for obtaining the authentication vector of the UE.

For example, the second authentication vector obtaining request message is "Numd_UEAuthentication Get Request". The second authentication vector obtaining request message carries a SUPI (or a SUCI) and an SN-name. Specifically, when the second user authentication request message sent by the second AMF to the second AUSF carries the SUPI, the second authentication vector obtaining request message carries the SUPI; or when the second user authentication request message sent by the second AMF to the second AUSF carries the SUCI, the second authentication vector obtaining request message carries the SUCI.

Step 803d. In response to the second authentication vector obtaining request message, the UDM selects an authentication method of the UE, and obtains the authentication vector related to the UE. A specific method is similar to step 404. Details are not described herein again.

Step 803e. After determining a corresponding authentication vector based on the selected authentication method (5G AKA), the UDM sends a second authentication vector obtaining response message to the second AUSF. The second authentication vector obtaining response message carries the authentication vector. For example, the second authentication vector obtaining response message is "Num_UEAuthentication_Get Response".

Step 803f. The second AUSF stores and verifies an expected response (eXpected response, XRES or XRES*) in response to the second authentication vector obtaining response message. The second AUSF sends the second user authentication response message to the second AMF. The second user authentication response message carries an authentication vector, for example, "5G SE AV".

For example, the second user authentication response message is "Nausf_UEAuthentication_Authenticate Response".

804. The UE receives a second authentication request message from the second AMF.

It should be noted that step 802 and step 804 may occur simultaneously or at adjacent time moments. Therefore, it may be understood that the UE may receive both the first authentication request message and the second authentication request message. For understanding of "simultaneously", it may be considered that the UE receives two messages at a same moment or at close moments. Specifically, if the UE receives the first authentication request message and the second authentication request message at a same moment, the UDM randomly selects one of the messages for processing. In this application, it is assumed that the UE selects the first authentication request message for processing. If the UE receives the first authentication request message and the second authentication request message at close moments, the UE processes the first authentication request message and the second authentication request message in a sequence of receiving the messages. A specific understanding of a close moment is as follows: When the UE receives the first authentication request message, the UE may just receive the request message and has not processed the first authentication vector obtaining request message yet; may receive the request message and start processing, but has not sent the response message corresponding to the first authentication request message; or may have processed the first authentication vector obtaining request message and sent the response message corresponding to the first authentication request message, but has not received the NAS SMC or EAP-Success message corresponding to the first authentication request message. Regardless of whether the UE randomly selects an authentication request message or sequentially processes the authentication request messages, it may be understood that the UE first processes one of the authentication request messages and suspends the other authentication request message.

In this embodiment, it is assumed that the UE first receives the first authentication request message from the first AMF, and then the UE receives the second authentication request message from the second AMF. That is, step 802 is first performed, and step 804 is then performed.

After the UE determines that two different authentication request messages are received by using different access technologies (for example, a 3GPP access technology and a non-3GPP access technology), the UE does not process a result of comparing sequence numbers (sequence number, SQN) in the authentication vector, or does not need to perform SQN comparison. Specifically, if the UE first receives an authentication request message with a larger SQN, and then receives an authentication request message with a smaller SQN, the UE does not discard the 2^{nd} authentication request message because the SQN of the message is smaller. However, for two authentication request messages with different SQNs received by using a same access technology, if the UE first receives an authentication request message with a larger SQN and then receives an authentication request message with a smaller SQN, the UE processes only the authentication request message with the larger SQN, and discards the authentication request message with the smaller SQN. Based on this, regardless of whether the UE receives two authentication request messages simultaneously by using different access technologies or a same access technology, if the UE first receives an authentication request message with a smaller SQN and then receives an authentication request message with a larger SQN, the UE may process the two received authentication request messages in ascending order of the SQNs.

805. The UE determines whether an authentication method corresponding to the first authentication request message is 5G AKA or EAP-AKA'.

Optionally, if the authentication method corresponding to the first authentication request message is 5G-AKA, processing of the second authentication request message is suspended before the NAS SMC corresponding to the first authentication request message is received.

Optionally, if the authentication method corresponding to the first authentication request message is EAP-AKA', processing of the second authentication request message is suspended before the EAP-success message corresponding to the first authentication request message is received.

When the authentication method corresponding to the first authentication request message is 5G AKA, steps 806 to 815 are performed.

When the authentication method corresponding to the first authentication request message is EAP-AKA', steps 806, 807, 808, and 816 to 822 are performed.

There are a plurality of triggering scenarios in step 805, which are separately described below.

In a possible implementation, after the UE receives the first authentication request message in step 802, the UE determines whether the authentication method corresponding to the first authentication request message is 5G AKA. If the authentication method is 5G AKA, when receiving an authentication request message from another AMF after receiving the first authentication request message, the UE suspends processing of the authentication request message that is from the another AMF.

In another possible implementation, step 806 and/or step 807 are not performed yet after step 802. To be specific, when the UE has not responded to the first authentication request message, the UE receives the second authentication request message from the second AMF. In this case, the UE triggers step 805. The UE determines whether the authentication method corresponding to the first authentication request message is 5G AKA. If the authentication method is 5G AKA, the UE suspends processing of the second authentication request message.

In another possible implementation, in a process of performing step 807 or when step 806 and/or step 807 have/has been performed but step 809 has not been performed, to be specific, in a process in which the UE performs authentication verification on the first communication network in response to the first authentication request message, if the UE receives the second authentication request message from the second AMF, the UE triggers step 805. The UE determines whether the authentication method corresponding to the first authentication request message is 5G AKA or EAP-AKA'. Then, the UE determines when to respond to the second authentication request message. The UE may suspend processing of the second authentication request message before determining, or may suspend processing of the second authentication request message after determining. Alternatively, the UE may first process the second authentication request message, but determine, based on a determining result, when to send an authentication response message corresponding to the second authentication request message.

Specifically, the UE may determine, by detecting an information element carried in the first authentication request message, whether the authentication method corresponding to the first authentication request message is 5G AKA or EAP-AKA'. For example, determining is performed based on indication information carried in the first authentication request message. The indication information may be header information, and the header information indicates a 5G AKA authentication method, an EAP-AKA' authentication method, or even another KAP-AKA' authentication method. The UE determines, based on the indication information in the header, whether the authentication method corresponding to the first authentication request message is 5G AKA or KAP-AKA'. The indication information may also be the message itself. For example, if there is no EAP field, the 5G AKA authentication method is used; if there is an EAP field, the EAP-AKA' authentication method is used. For another example, one or more of the following information elements (or information) are detected: a key identifier in 5G (Key Set Identifier in 5G, ngKSI) or a location carried in an anti-bidding down between architectures (ABBA) parameter. For example, if an AV is in an EAP message, KAP-AKA' is used; otherwise, the UE determines that the authentication method corresponding to the first authentication request message is 5G AKA.

806. In response to the first authentication request message, the UE performs authentication verification on the first communication network and generates a first intermediate key Kausf-1.

Step 806 is consistent with step 711. Details are not described herein again.

807. If the authentication verification succeeds, the UE sends a first authentication response message to the first AMF.

The first authentication response message may be "Authentication response".

808. Trigger an authentication procedure associated with the first authentication request message, and the UDM stores an identifier of the first AUSF.

In step 808, after receiving the first authentication response message from the UE, the first AMF triggers the authentication procedure associated with the first authentication request message. In this procedure, the UDM stores the identifier of the first AUSF.

A specific authentication procedure in step 808 is as follows:

Step 808a. The first AMF sends a third user authentication request message corresponding to the first authentication response message to the first AUSF in response to the first authentication response message, where the third user authentication request message may be "Nausf_UEAuthentication_Authenticate Request". The third user authentication request message carries a parameter for verifying the UE by a network.

Step 808b. The first AUSF verifies, in response to the third user authentication request message corresponding to the first authentication response message, the carried parameter for verifying the UE by the network. If the verification succeeds, the first AUSF stores the first intermediate key Kausf-1.

Step 808c. The first AUSF feeds back a third user authentication response message to the first AMF (or an SEAF associated with the first AMF), where the third user authentication response message carries a verification result (for example, indicating that the verification on the UE succeeds). The third user authentication response message may be "Nausf_UEAuthentication_Authenticate Response". The third user authentication response message is a response message of the third user authentication request message.

Step 808d. The first AUSF sends a first authentication result confirmation request message for the first authentication vector to the UDM. The first authentication result confirmation request message may further carry one or more of the following information: a SUPI, a timestamp, an authentication result, an authentication type (authentication type), the identifier of the first AUSF, and a serving network name. Information about the authentication type indicates that an authentication method is 5G AKA. For example, the first authentication result confirmation request message may be a "Nudm_UEAuthentication_ResultConfirmation Request" message.

Step 808e. The UDM receives the first authentication result confirmation request message from the first AUSF, and stores the identifier of the first AUSF.

First, a procedure in which the authentication method corresponding to the first authentication request message is 5G AKA is described.

809. The first AMF sends a first NAS SMC message to the UE.

In step 801f, the first AUSF sends the first user authentication response message to the first AMF. When the first AMF receives the first user authentication response message, the first AMF sends the first NAS SMC message to the UE. The first NAS SMC message includes one or more of the following information: a key identifier in 5G (ngKSI), a UE security function (UE sec capabilities), a ciphering algorithm (Ciphering Algorithm), an integrity algorithm (Integrity Algorithm), a Kamf change flag (K_AMF_change_flag), an ABBA parameter, or a request initial NAS message flag (request Initial NAS message flag).

810. The UE stores the first intermediate key Kausf-1 in response to the first NAS SMC message.

In step 809, after the UE receives the first NAS SMC message from the first AMF, the UE stores the first intermediate key Kausf-1 in response to the first NAS SMC message.

Specifically, after responding to the first NAS SMC message, the UE stores, in a long-term storage space, the first intermediate key Kausf-1 that is stored in a first storage space (a buffer area). In this embodiment of this application, the long-term storage space of the terminal device is referred to as a second storage space. For example, the second storage space may be ME in the terminal device.

After the UE stores the first intermediate key Kausf-1 in the second storage space, the UE sends a response message of the first NAS SMC message to the first AMF. The response message may be "NAS Security Mode Complete".

Optionally, after receiving the first NAS SMC message from the first AMF, the UE first detects whether the first NAS SMC message is associated with the first authentication request message (from the first AMF). Specifically, it is determined, based on information carried in the first NAS SMC message, whether the first NAS SMC message is from the first AMF. First, whether the first NAS SMC message is associated with the first authentication request message (from the first AMF) is detected. For example, whether the first NAS SMC message is from the first AMF is determined based on the information carried in the first NAS SMC message. For another example, whether the first NAS SMC message is from the first AMF is determined based on an underlying message (for example, an RRC message or a Wi-Fi AP message) that carries the first NAS SMC. A determining method is not limited in this application. After the UE determines that the first NAS SMC message is associated with the first AMF, the UE stores the first intermediate key Kausf-1 in response to the first NAS SMC message.

811. The UE receives the first NAS SMC message, and resumes processing the second authentication request message, that is, performs authentication verification on the second communication network and generates a second intermediate key Kausf-2.

In step 811, after step 809, in response to the first NAS SMC message, the UE performs authentication verification on the second communication network based on the second authentication request message, and generates the second intermediate key Kausf-2, that is, resumes processing the second authentication request message.

812. If the authentication verification succeeds, the UE sends a second authentication response message to the second AMF.

In step 812, if the authentication verification succeeds, the UE sends the second authentication response message to the second AMF in response to the second authentication request message. The second authentication response message may be "Authentication response".

813. Trigger an authentication procedure associated with the second authentication request message, and the UDM stores an identifier of the second AUSF.

In step 813, after receiving the second authentication response message from the UE, the second AMF triggers the authentication procedure associated with the second authentication request message. In this procedure, the UDM stores the identifier of the second AUSF.

A specific authentication procedure in step 813 is as follows:
Step 813a. The second AMF responds to the second authentication response message and sends a fourth user authentication request message corresponding to the second authentication response message to the second AUSF. The fourth user authentication request message may be "Nausf_UEAuthentication_Authenticate Request". The fourth user authentication request message carries a parameter for verifying the UE by the network.

Step 813b. The second AUSF verifies, in response to the fourth user authentication request message corresponding to the second authentication response message, the parameter for verifying the UE by the network. If the verification succeeds, the second AUSF stores the second intermediate key Kausf-2.

Step 813c. The second AUSF feeds back a fourth user authentication response message to the second AMF (or an SEAF associated with the second AMF), where the fourth user authentication response message carries a verification result (for example, indicating that the verification on the UE succeeds). The fourth user authentication response message may be "Nausf_UEAuthentication_Authenticate Response". The fourth user authentication response message is a response message of the fourth user authentication request message.

Step 813d. The second AUSF sends a second authentication result confirmation request message for a second authentication vector to the UDM. The second authentication result confirmation request message may further carry one or more of the following information: a SUPI, a timestamp, an authentication result, an authentication type (authentication type), the identifier of the second AUSF, and a serving network name. For example, information about the authentication type indicates that an authentication method is 5G AKA. For example, the second authentication result confirmation request message may be a "Nudm_UEAuthentication_ResultConfirmation Request" message.

Step 813e. The UDM receives the second authentication result confirmation request message from the second AUSF, and stores the identifier of the second AUSF. Specifically, the UDM replaces the identifier of the first AUSF with the identifier of the second AUSF.

Optionally, after the UDM stores the identifier of the second AUSF, the UDM may notify the first AUSF to delete the first intermediate key Kausf-1.

814. The second AMF sends a second NAS SMC message to the UE.

In step 814, after receiving the second NAS SMC message from the second AMF, optionally, the UE first detects whether the second NAS SMC message is associated with the second authentication request message (from the second AMF). Specifically, it is determined, based on information carried in the second NAS SMC message, whether the second NAS SMC message is from the second AMF.

The second NAS SMC message includes one or more of the following information: a key identifier in 5G (ngKSI), a UE security function (UE sec capabilities), a ciphering algorithm (Ciphering Algorithm), an integrity algorithm (Integrity Algorithm), a Kamf change flag (K_AMF_change_flag), an ABBA parameter, or a request initial NAS message flag (request Initial NAS message flag).

815. The UE replaces the first intermediate key Kausf-1 with the second intermediate key Kausf-2 in response to the second NAS SMC message.

Specifically, after responding to the second NAS SMC message, the UE stores, in the long-term storage space, the second intermediate key Kausf-2 that is stored in the first storage space (the buffer area). In this embodiment of this application, the long-term storage space of the terminal device is referred to as a second storage space. For example, the second storage space may be ME in the terminal device.

After the UE stores the second intermediate key Kausf-2 in the second storage space, the UE sends a response message of the second NAS SMC message to second first AMF. The response message may be "NAS Security Mode Complete".

Optionally, after receiving the second NAS SMC message from the second AMF, the UE first detects whether the second NAS SMC message is associated with the second authentication request message (from the second AMF). Specifically, it is determined, based on information carried in the second NAS SMC message, whether the second NAS SMC message is from the second AMF. First, whether the second NAS SMC message is associated with the second authentication request message (from the second AMF) is detected. For example, it is determined, based on information carried in the second NAS SMC message, whether the second NAS SMC message is from the second AMF. For another example, whether the second NAS SMC message is from the second AMF is determined based on an underlying message (for example, an RRC message or a Wi-Fi AP message) that carries the second NAS SMC. A determining method is not limited in this application. After the UE determines that the second NAS SMC message is associated with the second AMF, the UE stores the second intermediate key Kausf-2 in response to the second NAS SMC message. Specifically, after responding to the second NAS SMC message, the UE stores, in the long-term storage space, the second intermediate key Kausf-2 that is stored in the first storage space (the buffer area). Because the first intermediate key Kausf-1 is already stored in the long-term storage space, the UE replaces the first intermediate key Kausf-1 in the second storage space with the second intermediate key Kausf-2 in the first storage space.

Then, a procedure in which the authentication method corresponding to the first authentication request message is EAP-AKA' is described.

816. The first AMF sends a first EAP-success message to the UE.

In step 801f, the first AUSF sends the first user authentication response message to the first AMF. When the first AMF receives the first user authentication response message, the first AMF sends the first EAP-success message to the UE. The first EAP-success message indicates that the authentication succeeds.

817. The UE stores a first intermediate key Kausf-1 in response to the first EAP-success message.

In step 816, after the UE receives the first EAP-success message from the first AMF, the UE stores the first intermediate key Kausf-1 in response to the first EAP-success message.

Specifically, after responding to the first EAP-success message, the UE stores, in a long-term storage space, the first intermediate key Kausf-1 that is stored in the first storage space (the buffer area). In this embodiment of this application, the long-term storage space of the terminal device is referred to as a second storage space. For example, the second storage space may be ME in the terminal device.

In a possible implementation, the first EAP-success message is an information element of the NAS SMC message. To be specific, the first AMF sends the first EAP-success message to the UE in the NAS SMC message. After the UE stores the second intermediate key Kausf-2 in the second storage space, the UE sends a response message of the first EAP-success message to the first AMF. The response message may be "NAS Security Mode Complete".

In another possible implementation, the first AMF sends the first EAP-success message to the UE by using an authentication result "Authentication result" message. After the UE stores the first intermediate key Kausf-1 in the second storage space, the UE may not send a response message of the first EAP-success message to the first AMF.

Optionally, after receiving the first EAP-success message from the first AMF, the UE first detects whether the first EAP-success message is associated with the first authentication request message (from the first AMF). Specifically, whether the first EAP-success message is from the first AMF is determined based on information carried in the first EAP-success message. First, whether the first EAP-success message is associated with the first authentication request message (from the first AMF) is detected. For example, whether the first EAP-success message is from the first AMF is determined based on the information carried in the first EAP-success message. For another example, whether the first EAP-success message is from the first AMF is determined based on an underlying message (for example, an RRC message or a Wi-Fi AP message) that carries the first EAP-success. A determining method is not limited in this application. After the UE determines that the first EAP-success message is associated with the first AMF, the UE stores the first intermediate key Kausf-1 in response to the first EAP-success message.

818. The UE receives the first EAP-success message, and resumes processing the second authentication request message, that is, performs authentication verification on the second communication network and generates a second intermediate key Kausf-2.

In step 818, after step 816, in response to the first EAP-success message, the UE performs authentication verification on the second communication network based on the second authentication request message, and generates the second intermediate key Kausf-2, that is, resumes processing the second authentication request message.

819. If the authentication verification succeeds, the UE sends a second authentication response message to the second AMF.

In step 819, if the authentication verification succeeds, the UE sends the second authentication response message to the second AMF in response to the second authentication request message. The second authentication response message may be "Authentication response".

820. Trigger an authentication procedure associated with the second authentication request message, and the UDM stores an identifier of the second AUSF.

In step 820, after receiving the second authentication response message from the UE, the second AMF triggers the authentication procedure associated with the second authentication request message. In this procedure, the UDM stores the identifier of the second AUSF.

A specific authentication procedure in step 820 is as follows:
Step 820a. The second AMF responds to the second authentication response message and sends a fourth user authentication request message corresponding to the second authentication response message to the second AUSF. The fourth user authentication request message may be "Nausf_UEAuthentication_Authenticate Request". The fourth user authentication request message carries a parameter for verifying the UE by the network.

Step 820b. The second AUSF verifies, in response to the fourth user authentication request message corresponding to the second authentication response message, the parameter for verifying the UE by the network. If the verification succeeds, the second AUSF generates and stores the second intermediate key Kausf-2.

Step 820c. The second AUSF feeds back a fourth user authentication response message to the second AMF (or an SEAF associated with the second AMF), where the fourth user authentication response message carries a verification result (for example, indicating that the verification on the UE succeeds). The fourth user authentication response message may be "Nausf_UEAuthentication_Authenticate Response". The fourth user authentication response message is a response message of the fourth user authentication request message.

Step 820d. The second AUSF sends a second authentication result confirmation request message for a second authentication vector to the UDM. The second authentication result confirmation request message may further carry one or more of the following information: a SUPI, a timestamp, an authentication result, an authentication type (authentication type), the identifier of the second AUSF, and a serving network name. For example, information about the authentication type indicates that an authentication method is EAP-AKA'. For example, the second authentication result confirmation request message may be a "Nudm_UEAuthentication_ResultConfirmation Request" message.

Step 820e. The UDM receives the second authentication result confirmation request message from the second AUSF, and stores the identifier of the second AUSF. Specifically, the UDM replaces the identifier of the first AUSF with the identifier of the second AUSF.

Optionally, after the UDM stores the identifier of the second AUSF, the UDM may notify the first AUSF to delete the first intermediate key Kausf-1.

821. The second AMF sends a second EAP-success message to the UE.

In step 821, after receiving the second EAP-success message from the second AMF, optionally, the UE first detects whether the second EAP-success message is associated with the second authentication request message (from the second AMF). Specifically, whether the second EAP-success message is from the second AMF is determined based on information carried in the second EAP-success message.

822. The UE replaces the first intermediate key Kausf-1 with the second intermediate key Kausf-2 in response to the second EAP-success message.

Specifically, after responding to the second EAP-success message, the UE stores, in a long-term storage space, the second intermediate key Kausf-2 that is stored in the first storage space (the buffer area). In this embodiment of this application, the long-term storage space of the terminal device is referred to as a second storage space. For example, the second storage space may be ME in the terminal device.

In a possible implementation, the second EAP-success message is an information element of the NAS SMC message. To be specific, the second AMF sends the second EAP-success message to the UE in the NAS SMC message. After the UE stores the second intermediate key Kausf-2 in the second storage space, the UE sends a response message of the second EAP-success message to the second AMF. The response message may be "NAS Security Mode Complete".

In another possible implementation, the second AMF sends the second EAP-success message to the UE by using an authentication result "Authentication result" message. After the UE stores the second intermediate key Kausf-2 in the second storage space, the UE may not send a response message of the second EAP-success message to the second AMF.

Optionally, after receiving the second EAP-success message from the second AMF the UE first detects whether the second EAP-success message is associated with the second authentication request message (from the second AMF). Specifically, whether the second EAP-success message is from the second AMF is determined based on information carried in the second EAP-success message. First, whether the second EAP-success message is associated with the second authentication request message (from the second AMF) is detected. For example, whether the second EAP-success message is from the second AMF is determined based on information carried in the second EAP-success message. For another example, whether the second EAP-success message is from the second AMF is determined based on an underlying message (for example, an RRC message or a Wi-Fi AP message) that carries the second EAP-success. A determining method is not limited in this application. After the UE determines that the second EAP-success message is associated with the second AMF, the UE stores the second intermediate key Kausf-2 in response to the second EAP-success message. Specifically, after responding to the second EAP-success message, the UE stores, in a long-term storage space, the second intermediate key Kausf-2 that is stored in the first storage space (the buffer area). Because the first intermediate key Kausf-1 is already stored in the long-term storage space, the UE replaces the first intermediate key Kausf-1 in the second storage space with the second intermediate key Kausf-2 in the first storage space.

In this embodiment of this application, after a terminal device receives a plurality of authentication request messages, the terminal device needs to process a next authentication request message after receiving a NAS SMC or EAP-Success message corresponding to a previous authentication request message, to ensure that an authentication procedure of the first communication network associated with the first authentication request message is first performed, and the UE first stores the first intermediate key Kausf-1 related to the first communication network. The authentication procedure of the second communication network associated with the second authentication request message is then performed, and the UE finally stores the second intermediate key Kausf-2 related to the second communication network. The foregoing method can ensure that the intermediate key (Kausf-2) stored on the UE is consistent with the intermediate key (Kausf-2) stored on the network device side, avoiding key out-of-synchronization.

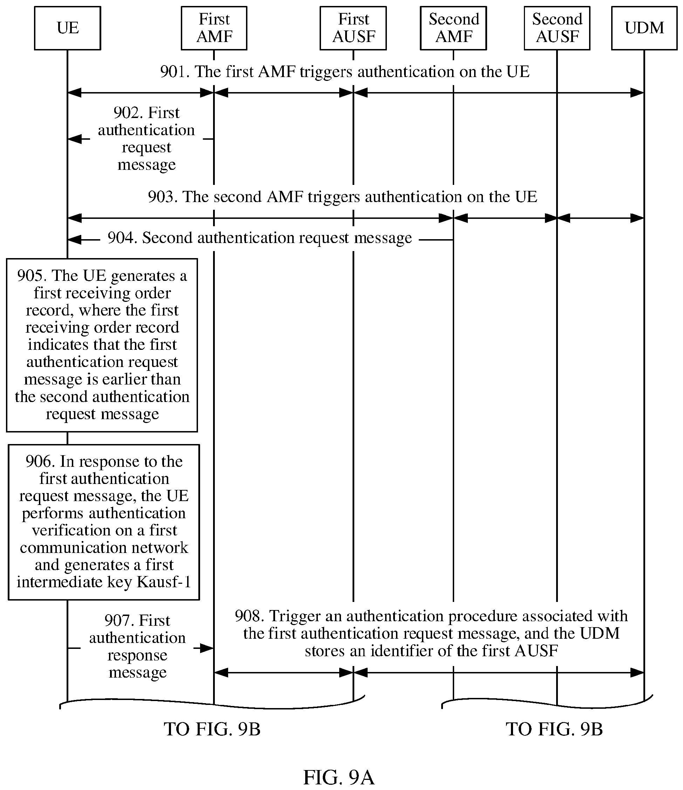

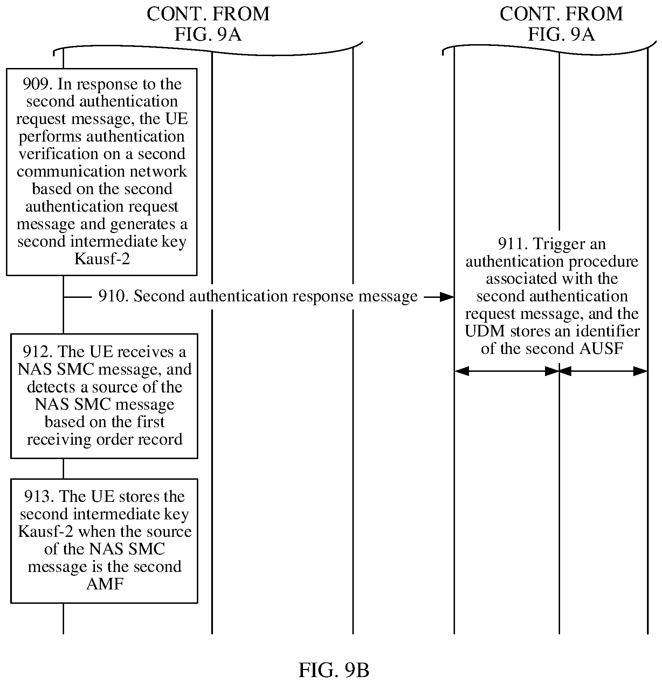

Based on the foregoing embodiment, refer to FIG. 9A and FIG. 9B. FIG. 9A and FIG. 9B are a schematic diagram of an embodiment of a communication method according to an embodiment of this application. In the embodiment shown in FIG. 9A and FIG. 9B, after a terminal device receives a plurality of authentication request messages, the terminal device generates a receiving order record of the plurality of authentication request messages. After receiving a NAS SMC message, the terminal device detects a source of the NAS SMC message based on the receiving order record. When the NAS SMC message is from an AMF that sends a latest authentication request message, the terminal device stores an intermediate key Kausf corresponding to the NAS SMC. The communication method provided in this embodiment of this application includes the following steps.

901. A first AMF triggers authentication on the UE.

902. The UE receives a first authentication request message from the first AMF.

903. A second AMF triggers authentication on the UE.

904. The UE receives a second authentication request message from the second AMF.

Steps 901 to 904 are similar to steps 801 to 804. Details are not described herein again.

905. The UE generates a first receiving order record, where the first receiving order record indicates that the first authentication request message is earlier than the second authentication request message.

In step 905, the UE generates the first receiving order record based on a time moment at which the first authentication request message is received and a time moment at which the second authentication request message is received. The first receiving order record indicates that the time moment at which the UE receives the first authentication request message is earlier than the time moment at which the UE receives the second authentication request message.

906. In response to the first authentication request message, the UE performs authentication verification on a first communication network and generates a first intermediate key Kausf-1.

Step 906 is similar to step 806. Details are not described herein again.

907. If the authentication verification succeeds, the UE sends a first authentication response message to the first AMF.

908. Trigger an authentication procedure associated with the first authentication request message, and the UDM stores an identifier of the first AUSF.

Steps 907 and 908 are similar to steps 807 and 808. Details are not described herein again.

909. In response to the second authentication request message, the UE performs authentication verification on a second communication network based on the second authentication request message and generates a second intermediate key Kausf-2.

910. If the authentication verification succeeds, the UE sends a second authentication response message to the second AMF.

911. Trigger an authentication procedure associated with the second authentication request message, and the UDM stores an identifier of the second AUSF.

Steps 909 to 911 are similar to steps 811 to 813. Details are not described herein again.

912. The UE receives a NAS SMC message, and detects a source of the NAS SMC message based on the first receiving order record.

In step 912, after the UE receives the NAS SMC message, the UE needs to detect the source of the NAS SMC message based on the first receiving order record.

Specifically, the UE determines, based on the first receiving order record, whether the received NAS SMC message is from the first AMF or the second AMF.

913. When the source of the NAS SMC is the second AMF, the UE stores the second intermediate key Kausf-2.

In step 913, the UE determines the source of the NAS SMC message based on an information element or an identifier in the NAS SMC message. When the NAS SMC message is from the first AMF, the UE does not store the first intermediate key Kausf-1 in response to the NAS SMC message.

When the NAS SMC message is from the second AMF, the UE stores the second intermediate key Kausf-2 in response to the NAS SMC message.

In other words, the UE stores the second intermediate key Kausf-2 in response to the NAS SMC message only when the NAS SMC message is from the second AMF (that is, the second AMF that sends the latest authentication request message in the first receiving order). Specifically, the UE stores the second intermediate key Kausf-2 from a first storage space to a second storage space, where the second storage space is a long-term storage space.

After the UE stores the second intermediate key Kausf-2 in the second storage space, the UE sends a response message of the NAS SMC message to the second AMF. The response message may be "NAS Security Mode Complete".

In this embodiment of this application, after the terminal device receives the plurality of authentication request messages, the terminal device needs to generate the first receiving order record, where the first receiving order record indicates a receiving order of the plurality of authentication request messages received by the terminal device. After the terminal device receives the NAS SMC message, the terminal device detects the source of the NAS SMC message. When the NAS SMC message is from the second AMF, because the latest (or latest) authentication request message in the first receiving order record is from the second AMF, the UE stores the second intermediate key Kausf-2 in response to the NAS SMC message. The foregoing method can ensure that the intermediate key (Kausf-2) stored on the UE is consistent with the intermediate key (Kausf-2) stored on the network device side, avoiding key out-of-synchronization.

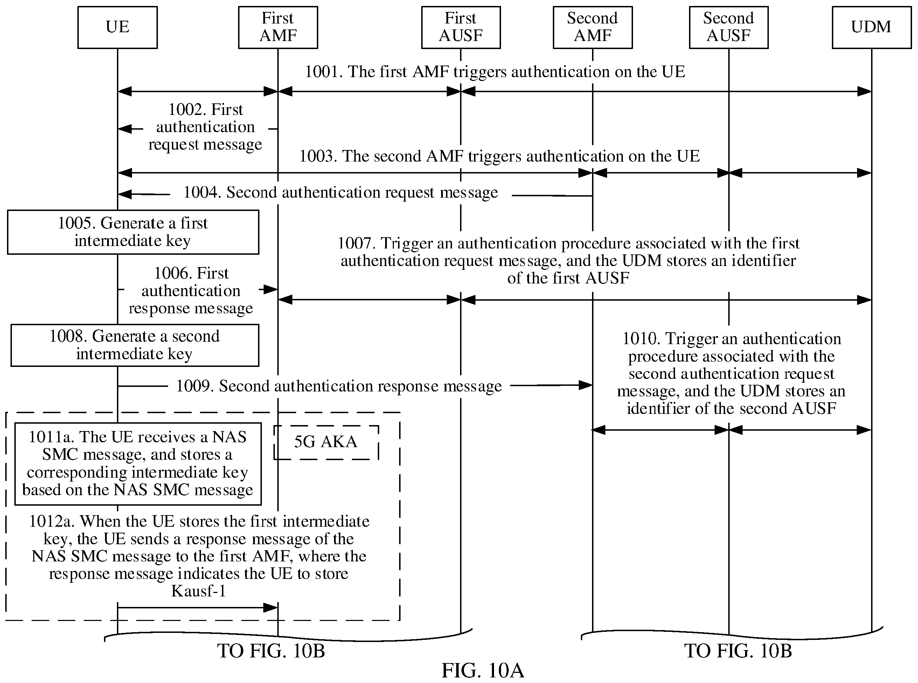

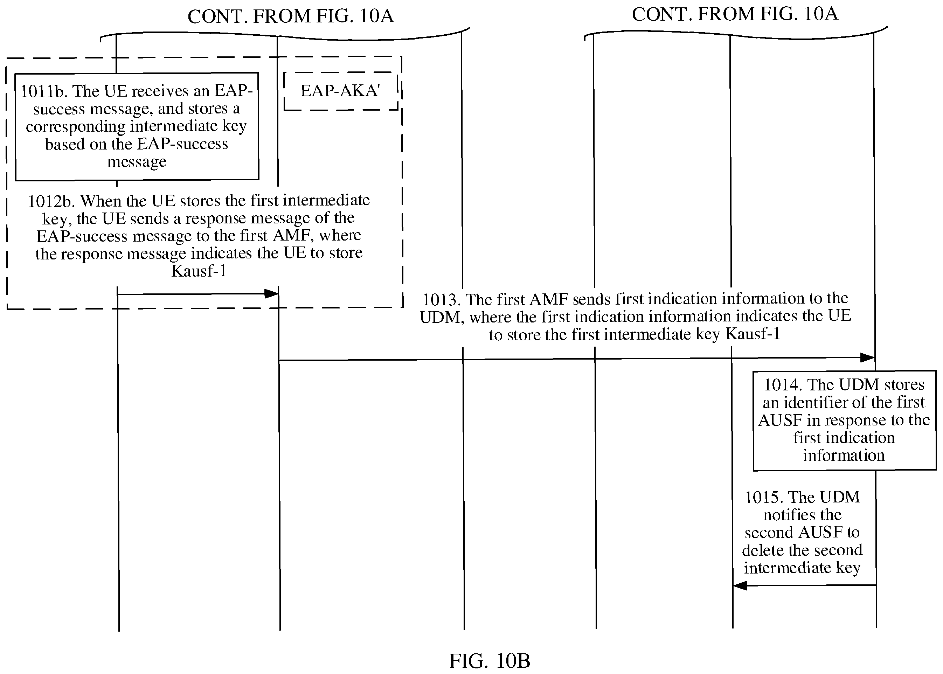

Based on the foregoing embodiment, refer to FIG. 10A and FIG. 10B. FIG. 10A and FIG. 10B are a schematic diagram of an embodiment of a communication method according to an embodiment of this application. In the embodiment shown in FIG. 10A and FIG. 10B, after a terminal device receives a NAS SMC message (or an EAP-success message), the terminal device stores an intermediate key Kausf corresponding to the NAS SMC message (or the EAP-success message). The terminal device sends a response message to an AMF that sends the NAS SMC message (or the EAP-success message), where the response message indicates the intermediate key Kausf stored in the terminal device. After receiving the response message, the AMF notifies a UDM to store an AUSF identifier corresponding to the intermediate key. The communication method provided in this embodiment of this application includes the following steps.

1001. The first AMF triggers authentication on the UE.

1002. The UE receives a first authentication request message from the first AMF.

1003. The second AMF triggers authentication on the UE.

1004. The UE receives a second authentication request message from the second AMF.

Steps 1001 to 1004 are similar to steps 801 to 804. Details are not described herein again.

1005. In response to the first authentication request message, the UE performs authentication verification on the first communication network and generates a first intermediate key Kausf-1.

Step 1005 is similar to step 806. Details are not described herein again.

1006. If the authentication verification succeeds, the UE sends a first authentication response message to the first AMF.

1007. Trigger an authentication procedure associated with the first authentication request message, and the UDM stores an identifier of the first AUSF.

Steps 1006 and 1007 are similar to steps 807 and 808. Details are not described herein again.

1008. In response to the second authentication request message, the UE performs authentication verification on a second communication network based on the second authentication request message and generates a second intermediate key Kausf-2.

1009. If the authentication verification succeeds, the UE sends a second authentication response message to the second AMF.

1010. Trigger an authentication procedure associated with the second authentication request message, and the UDM stores an identifier of the second AUSF.

In this step, it may be considered that the UDM finally stores the identifier of the second AUSF.

Steps 1008 to 1010 are similar to steps 811 to 813. Details are not described herein again.

The following separately describes a scenario (steps 1011a and 1012a) corresponding to a 5G AKA authentication method and a scenario (steps 1011b and 1012b) corresponding to an EAP-AKA' authentication method.

First, the 5G AKA authentication method is described.

1011a. The UE receives a NAS SMC message, and stores a corresponding intermediate key based on the NAS SMC message.

In step 1011a, the UE sequentially receives two NAS SMC messages, and stores an intermediate key Kausf corresponding to a last arrived NAS SMC message. Specifically, the UE stores, in a second storage space (long-term storage space), Kausf that is buffered in a first storage space based on the NAS SMC message.

The following describes a processing procedure by using an example in which the last arrived NAS SMC message is from the first AMF. It may be understood that, when the last arrived NAS SMC message is from the second AMF, the processing procedure is similar to that when the NAS SMC message is from the first AMF. Details are not described herein again.

It may be understood that, in another possible implementation, the UE stores the corresponding second intermediate key Kausf-2 based on the NAS SMC message only after receiving the NAS SMC message from the second AMF.

1012a. When the UE stores the first intermediate key Kausf-1, the UE sends a response message of the NAS SMC message to the first AMF, where the response message carries indication information, and the indication information indicates that the UE finally stores Kausf-1.

In step 1012a, after responding to the first NAS SMC message, the UE stores, in the long-term storage space, the first intermediate key Kausf-1 that is stored in the first storage space (the buffer area). In this embodiment of this application, the long-term storage space of the terminal device is referred to as a second storage space. For example, the second storage space may be ME in the terminal device.

After the UE stores the first intermediate key Kausf-1 in the second storage space, the UE sends a response message of the first NAS SMC message to the first AMF. The response message may be "NAS Security Mode Complete". The response message carries indication information, and the indication information indicates that the UE finally stores the first intermediate key Kausf-1.

For example, the response message carries an identifier of the first intermediate key, or the response message carries indication information, and the indication information indicates that the UE stores the first intermediate key Kausf-1.

It may be understood that the UE may further notify, by using other information (a message or signaling), the first AMF that an intermediate key stored by the terminal device in the second storage space is the first intermediate key. This is not limited herein.

Step 1013 is performed after step 1012a.

Then, the EAP-AKA' authentication method is described.

1011b. The UE receives an EAP-success message, and stores a corresponding intermediate key based on the EAP-success message.

In step 1011b, the UE sequentially receives two EAP-success messages, and stores an intermediate key Kausf corresponding to a last arrived EAP-success message. Specifically, the UE stores, in a second storage space (long-term storage space), Kausf that is buffered in a first storage space based on the EAP-success message.

The following describes a processing procedure by using an example in which the last arrived EAP-success message is from the first AMF. It may be understood that, when the last arrived EAP-success message is from the second AMF, the processing procedure is similar to that when the EAP-success message is from the first AMF. Details are not described herein again.

It may be understood that, in another possible implementation, the UE stores the corresponding second intermediate key Kausf-2 based on the EAP-success message only after receiving the EAP-success message from the second AMF.

1012b. When the UE stores the first intermediate key Kausf-1, the UE sends a response message of the EAP-success message to the first AMF, where the response message carries indication information, and the indication information indicates that the UE finally stores Kausf-1.

In step 1012b, after responding to the first EAP-success message, the UE stores, in a long-term storage space, the first intermediate key Kausf-1 that is stored in the first storage space (the buffer area). In this embodiment of this application, the long-term storage space of the terminal device is referred to as a second storage space. For example, the second storage space may be ME in the terminal device.

After the UE stores the first intermediate key Kausf-1 in the second storage space, the UE sends a response message of the first EAP-success message to the first AMF. The response message carries indication information, and the indication information indicates that the UE finally stores the first intermediate key Kausf-1.

In a possible implementation, the first EAP-success message is an information element of the NAS SMC message. To be specific, the first AMF sends the first EAP-success message to the UE in the NAS SMC message. After the UE stores the first intermediate key Kausf-2 in the second storage space, the UE sends a response message of the first EAP-success message to the first AMF. The response message may be "NAS Security Mode Complete".

It may be understood that the UE may further notify, by using other information (a message or signaling), the first AMF that an intermediate key stored by the terminal device in the second storage space is the first intermediate key. This is not limited herein.

For example, the response message carries an identifier of the first intermediate key, or the response message carries indication information, and the indication information indicates that the UE stores the first intermediate key Kausf-1.

Step 1013 is performed after step 1012b.

1013. The first AMF sends first indication information to the UDM, where the first indication information indicates the UE to store the first intermediate key Kausf-1.

In a possible implementation (corresponding to the 5G AKA authentication method, steps 1011a and 1012a), in step 1013, the first AMF sends the first indication information to the UDM in response to the response message of the first NAS SMC message, where the first indication information indicates the UE to store the first intermediate key Kausf-1.

In another possible implementation (corresponding to the EAP-AKA' authentication method, steps 1011b and 1012b), in step 1013, the first AMF sends the first indication information to the UDM in response to the response message of the first NAS SMC message, where the first indication information indicates the UE to store the first intermediate key Kausf-1.

Step 1013 may alternatively be that the first AMF sends the indication information to the first AUSF, and the first AUSF sends the indication information to the UDM.

1014. The UDM stores the identifier of the first AUSF in response to the first indication information.

In step 1014, in a possible implementation, when the UDM already stores the identifier of the second AUSF, the UDM deletes the identifier of the second AUSF, and stores the identifier of the first AUSF.

1015. The UDM notifies the second AUSF to delete the second intermediate key.

In step 1015, the UDM notifies, in response to the first indication information, the second AUSF to delete the second intermediate key Kausf-2. In this way, it is ensured that the network device side stores only the first intermediate key Kausf-1, thereby ensuring that the intermediate key stored on the terminal device is consistent with the intermediate key stored on the network device side.

An execution sequence of step 1014 and step 1015 is not limited herein.

In this embodiment of this application, after the terminal device receives the NAS SMC message (or the EAP-success message), the terminal device stores the intermediate key in response to the NAS SMC message (or the EAP-success message). After the terminal device stores the intermediate key, the terminal device notifies the AMF that sends the NAS SMC message (or the EAP-success message) of an intermediate key stored in the terminal device. Further, the AMF notifies a UDM to store an identifier of an AUSF corresponding to the intermediate key. The UDM indicates another AUSF to delete the intermediate key. The foregoing method can ensure that the intermediate key (Kausf-2) stored on the UE is consistent with the intermediate key (Kausf-2) stored on the network device side, avoiding key out-of-synchronization.

The foregoing mainly describes the solutions provided in embodiments of this application from the perspective of the methods. It may be understood that, to implement the foregoing functions, a communication apparatus includes corresponding hardware structures and/or software modules for performing the functions. A person of ordinary skill in the art should easily be aware that, in combination with the examples described in embodiments disclosed in this specification, modules, algorithms and steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one transceiver module. The integrated module may be implemented in a form of hardware, or may be implemented in a form of a software functional module. It should be noted that, in embodiments of this application, module division is an example, and is merely a logical function division. In actual implementation, another division manner may be used.

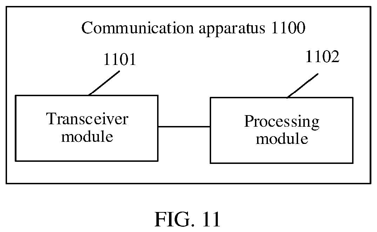

The following describes in detail a communication apparatus in this application. Refer to FIG. 11. FIG. 11 is a schematic diagram of an embodiment of the communication apparatus according to an embodiment of this application. The communication apparatus may be deployed in a network device, a chip, or a chip system. The communication apparatus may alternatively be deployed in a terminal device, a chip, or a chip system. The communication apparatus 1100 includes:
a transceiver module 1101, configured to receive a plurality of authentication vector obtaining request messages from one or more authentication server functions for a same terminal device, where the plurality of authentication vector obtaining request messages are for obtaining authentication vectors corresponding to the terminal device; and
a processing module 1102, configured to sequentially process the plurality of authentication vector obtaining request messages.

In a possible implementation, the transceiver module 1101 is further configured to send a first authentication vector to a first authentication server function in response to a first authentication vector obtaining request message.

The processing module 1102 is further configured to: before a first authentication result confirmation request message for the first authentication vector is received, suspend processing of a second authentication vector obtaining request message, where the first authentication result confirmation request message includes an identifier of the first authentication server function, and a time point at which the unified data management receives the first authentication vector obtaining request message is earlier than a time point of receiving the second authentication vector obtaining request message.

In a possible implementation, the transceiver module 1101 is further configured to receive the first authentication result confirmation request message.

The processing module 1102 is further configured to store the identifier of the first authentication server function in response to the first authentication result confirmation request message.

In a possible implementation,
the transceiver module 1101 is further configured to send a second authentication vector to a second authentication server function in response to the second authentication vector obtaining request message.

The transceiver module 1101 is further configured to receive a second authentication result confirmation request message for the second authentication vector, where the second authentication result confirmation request message includes an identifier of the second authentication server function.

The processing module 1102 is further configured to store the identifier of the second authentication server function in response to the second authentication result confirmation request message.

In a possible implementation,
the processing module 1102 is specifically configured to replace the identifier of the first authentication server function with the identifier of the second authentication server function.

In a possible implementation,
the processing module 1102 is specifically configured to sequentially process the plurality of authentication vector obtaining request messages in response to an authentication method of the terminal device being 5G AKA.

In a possible implementation,
the processing module 1102 is further configured to determine, based on subscription information of the terminal device, that the authentication method corresponding to the terminal device is 5G AKA.

In another example, the communication apparatus includes:
a transceiver module 1101, configured to receive a first authentication request message from a first access and mobility management function entity in a first communication network and a second authentication request message from a second access and mobility management function entity in a second communication network; and
a processing module 1102, configured to sequentially process the first authentication request message and the second authentication request message.

In a possible implementation,
the processing module 1102 is specifically configured to: in response to the first authentication request message, perform authentication verification on the first communication network and generate a first intermediate key Kausf-1.

The transceiver module 1101 is specifically configured to: when the authentication verification performed by the terminal device succeeds, send, to the first access and mobility management function entity, a first authentication response message indicating that the authentication verification succeeds.

The transceiver module 1101 is specifically configured to receive a first non-access stratum security mode command NAS SMC message from the first access and mobility management function, where the first NAS SMC message is associated with the first authentication request message.

The processing module 1102 is specifically configured to: store the first intermediate key Kausf-1 in response to the first NAS SMC message, and perform authentication verification on the second communication network based on the second authentication request message and generate a second intermediate key Kausf-2.

The transceiver module 1101 is specifically configured to receive a second non-access stratum security mode command NAS SMC message from the second access and mobility management function, where the second NAS SMC message is associated with the second authentication request message.

The processing module 1102 is specifically configured to replace the stored first intermediate key Kausf-1 with the second intermediate key Kausf-2 in response to the second NAS SMC message.

In a possible implementation,
the processing module 1102 is specifically configured to determine, after the first NAS SMC message is received, whether the first NAS SMC message is associated with the first authentication request message.

The transceiver module 1101 is specifically configured to: when the first NAS SMC message is associated with the first authentication request message, store the first intermediate key Kausf-1 from a first storage space to a second storage space.

In a possible implementation,
the processing module 1102 is further configured to suspend processing of the second authentication request message.

In a possible implementation,
the processing module 1102 is further configured to determine that an authentication method used by the terminal device to perform authentication verification on the first communication network/the second communication network is 5G authentication and key agreement 5G AKA.

In a possible implementation, the processing module 1102 is specifically configured to: in response to the first authentication request message, perform authentication verification on the first communication network and generate a first intermediate key Kausf-1.

The transceiver module 1101 is specifically configured to: when the authentication verification performed by the terminal device succeeds, send, to the first access and mobility management function entity, a first authentication response message indicating that the authentication verification succeeds.

The transceiver module 1101 is specifically configured to receive a first extensible authentication protocol success EAP-success message from the first access and mobility management function, where the first EAP-success message is associated with the first authentication request message.

The processing module 1102 is specifically configured to: store the first intermediate key Kausf-1 in response to the first EAP-success message, and perform authentication verification on the second communication network based on the second authentication request message and generate a second intermediate key Kausf-2.

The transceiver module 1101 is specifically configured to receive a second extensible authentication protocol success EAP-success message from the second access and mobility management function, where the second EAP-success message is associated with the second authentication request message.

The processing module 1102 is specifically configured to replace the stored first intermediate key Kausf-1 with the second intermediate key Kausf-2 in response to the second EAP-success message.

In a possible implementation, the processing module 1102 is specifically configured to determine, after the first EAP-success message is received, whether the first EAP-success message is associated with the first authentication request message.

The transceiver module 1101 is specifically configured to: when the first EAP-success message is associated with the first authentication request message, store the first intermediate key Kausf-1 from a first storage space to a second storage space.

In a possible implementation, the processing module 1102 is further configured to suspend processing of the second authentication request message.

In a possible implementation, the processing module 1102 is further configured to determine that an authentication method used by the terminal device to perform authentication verification on the first communication network/the second communication network is an improved extensible authentication protocol method for 3rd generation authentication and key agreement EAP-AKA'.

In a possible implementation,
the transceiver module 1101 is specifically configured to access the first communication system by using a first access technology.

The transceiver module 1101 is specifically configured to access the second communication network by using a second access technology.

The first access technology is a 3GPP access technology and the second access technology is a non-3GPP access technology; or the first access technology is a non-3GPP access technology and the second access technology is a 3GPP access technology.

In another example, the communication apparatus includes:
a transceiver module 1101, configured to receive a first authentication request message from a first access and mobility management function in a first communication network and a second authentication request message from a second access and mobility management function in a second communication network; and
a processing module 1102, configured to sequentially process the first authentication request message and the second authentication request message.

In a possible implementation, the processing module 1102 is configured to generate a first receiving order record, where the first receiving order record indicates that the first authentication request message is earlier than the second authentication request message.

The processing module 1102 is further configured to: in response to the first authentication request message, perform authentication verification on the first communication network and generate a first intermediate key Kausf-1.

The transceiver module 1101 is further configured to: when the authentication verification succeeds, send, to the first access and mobility management function, a first authentication response message indicating that the authentication verification succeeds.

The processing module 1102 is further configured to: in response to the second authentication request message, perform authentication verification on the second communication network and generate a second intermediate key Kausf-2.

The transceiver module 1101 is further configured to: when the authentication verification succeeds, send, by the terminal device, to the second access and mobility management function, a second authentication response message indicating that the authentication verification succeeds.

The transceiver module 1101 is further configured to receive a non-access stratum security mode command NAS SMC message.

The processing module 1102 is further configured to: detect a source of the NAS SMC message based on the first receiving order record;
if the source of the NAS SMC message is the first access and mobility management function, skip storing the first intermediate key Kausf-1 in response to the NAS SMC message; and
if the source of the NAS SMC message is the second access and mobility management function, store, by the terminal device, the second intermediate key Kausf-2 in response to the NAS SMC message.

In a possible implementation, that the terminal device stores the second intermediate key Kausf-2 in response to the NAS SMC message includes:
the transceiver module 1101 is further configured to determine, after receiving the NAS SMC message, whether the NAS SMC message is associated with the second authentication request message.

The processing module 1102 is further configured to: when the NAS SMC message is associated with the second authentication request message, store the second intermediate key Kausf-2 from a first storage space to a second storage space, where the second storage space is a long-term storage space.

In a possible implementation,
the transceiver module 1101 is further configured to: access the first communication system by using a first access technology, and access the second communication network by using a second access technology.

The first access technology is a 3GPP access technology and the second access technology is a non-3GPP access technology; or the first access technology is a non-3GPP access technology and the second access technology is a 3GPP access technology.

In another example, the communication apparatus includes:
a transceiver module 1101, configured to receive a first authentication request message from a first access and mobility management function in a first communication network and a second authentication request message from a second access and mobility management function in a second communication network; and
a processing module 1102, configured to: in response to the first authentication request message, perform authentication verification on the first communication network and generate a first intermediate key Kausf-1.

The transceiver module 1101 is further configured to: when the authentication verification succeeds, send, to the first access and mobility management function, a first authentication response message indicating that the authentication verification succeeds.

The processing module 1102 is further configured to: in response to the second authentication request message, perform authentication verification on the second communication network and generate a second intermediate key Kausf-2.

The transceiver module 1101 is further configured to: when the authentication verification succeeds, send, to the second access and mobility management function, a second authentication response message indicating that the authentication verification succeeds.

The transceiver module 1101 is further configured to receive a non-access stratum security mode command NAS SMC message.

The processing module 1102 is further configured to store, in response to the NAS SMC message, the first intermediate key Kausf-1 or the second intermediate key Kausf-2 corresponding to the NAS SMC message.

The transceiver module 1101 is further configured to send a response message of the NAS SMC message, where the response message of the NAS SMC message indicates the terminal device to store the first intermediate key Kausf-1 or the second intermediate key Kausf-2.

In a possible implementation,
the transceiver module 1101 is further configured to determine, after receiving the NAS SMC message, whether the NAS SMC message is associated with the second authentication request message.

The processing module 1102 is further configured to: when the NAS SMC message is associated with the second authentication request message, store the second intermediate key Kausf-2 from a first storage space to a second storage space, where the second storage space is a long-term storage space.

In a possible implementation,
the processing module 1102 is further configured to store, in response to the NAS SMC message by the terminal device, the first intermediate key or the second intermediate key Kausf-2 from the first storage space to the second storage space, where the second storage space is a long-term storage space.

In a possible implementation, the terminal device accesses the first communication system by using a 3GPP access technology, and the terminal device accesses the second communication network by using a non-3GPP access technology.

The communication apparatus in the foregoing embodiments may be a network device, or may be a chip used in the network device, or another combined part, component, or the like that can implement a function of the network device. When the communication apparatus is a network device, the transceiver module may be a transceiver. The transceiver may include an antenna, a radio frequency circuit, and the like. The processing module may be a processor, for example, a baseband chip. When the communication apparatus is a component that has a function of the network device, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit (central processing unit, CPU).

The communication apparatus in the foregoing embodiments may be a terminal device, or may be a chip used in the terminal device, or another combined part, component, or the like that can implement a function of the terminal device. When the communication apparatus is a terminal device, the transceiver module may be a transceiver. The transceiver may include an antenna, a radio frequency circuit, and the like. The processing module may be a processor, for example, a baseband chip. When the communication apparatus is a component that has a function of the terminal device, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit.

It should be noted that content such as information exchange and an execution process between modules/components of the communication apparatus is based on a same concept as the method embodiments corresponding to FIG. 7A and FIG. 7B to FIG. 10A and FIG. 10B in this application. For specific content, refer to the descriptions in the foregoing method embodiments of this application. Details are not described herein again.

It should be noted that, for a specific implementation of the communication apparatus and beneficial effects brought by the communication apparatus, refer to the descriptions in the method embodiments corresponding to FIG. 7A and FIG. 7B to FIG. 10A and FIG. 10B. Details are not described herein again.

An embodiment of this application further provides a processing apparatus. The processing apparatus includes a processor and an interface. The processor is configured to perform the communication method according to any one of the foregoing method embodiments.

It should be understood that the processing apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

Herein, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an application-specific integrated circuit (application-specific integrated circuit, ASIC) or a programmable logic device (programmable logic device, PLD). The PLD may further include a field programmable gate array (field programmable gate array, FPGA), a complex programmable logic device (complex programmable logic device, CPLD), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a SoPC (system-on-a-programmable-chip, system-on-a-programmable-chip).

This application further provides a communication system, including at least one or more of a transmitter, a receiver, and an intermediate node.

An embodiment of this application further provides a computer-readable storage medium, including instructions. When the instructions are run on a computer, the computer controls a network apparatus to perform any implementation shown in the foregoing method embodiments.

An embodiment of this application further provides a computer program product. The computer program product includes computer program code. When the computer program code is run on a computer, the computer performs any implementation shown in the foregoing method embodiments.

An embodiment of this application further provides a chip system, including a memory and a processor. The memory is configured to store a computer program, and the processor is configured to invoke the computer program from the memory and run the computer program, so that a chip performs any implementation shown in the foregoing method embodiments.

An embodiment of this application further provides a chip system, including a processor. The processor is configured to invoke and run a computer program, so that a chip performs any implementation shown in the foregoing method embodiments.

In addition, it should be noted that the described apparatus embodiment is merely an example. The units described as separate parts may or may not be physically separate, and parts displayed as units may or may not be physical units, in other words, may be located in one position, or may be distributed on a plurality of network units. Some or all of the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk, a ROM, a RAM, a magnetic disk, or an optical disc, and includes several instructions for instructing a computer to perform the methods described in embodiments of this application.

All or a part of the foregoing embodiments may be implemented by using software, hardware, firmware, or any combination thereof. When software is used to implement the foregoing embodiments, all or a part of the foregoing embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

It should be understood that "one embodiment" or "an embodiment" mentioned in the whole specification does not mean that particular features, structures, or characteristics related to the embodiment are included in at least one embodiment of this application. Therefore, "in one embodiment" or "in an embodiment" appearing throughout the specification does not refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected according to actual needs to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application.

## Claims

1. A communication method, comprising:
receiving (703), by a unified data management, a first authentication vector obtaining request message from a first authentication server function, wherein the first authentication vector obtaining request message is for obtaining an authentication vector corresponding to a terminal device;
receiving (706), by the unified data management, a second authentication vector obtaining request message from a second authentication server function, wherein the second authentication vector obtaining request message is for obtaining an authentication vector corresponding to the terminal device; and
sequentially processing, by the unified data management, the first authentication vector obtaining request message and the second authentication vector obtaining request message; **characterized in that** the sequentially processing, by the unified data management, the first authentication vector obtaining request message and the second authentication vector obtaining request message comprises:
sending (708), by the unified data management, a first authentication vector to the first authentication server function in response to the first authentication vector obtaining request message; and
sending (716), by the unified data management, a second authentication vector to the second authentication server function in response to the second authentication vector obtaining request message after receiving (714), by the unified data management, a first authentication result confirmation request message for the first authentication vector;
wherein a time point at which the unified data management receives the first authentication vector obtaining request message is earlier than a time point of receiving the second authentication vector obtaining request message
wherein before the receiving (714), by the unified data management, the first authentication result confirmation request message for the first authentication vector, the method further comprises:
suspending, by the unified data management, processing of the second authentication vector obtaining request message.

2. The method according to claim 1, wherein the first authentication result confirmation request message comprises an identifier of the first authentication server function and the method further comprises:
storing, by the unified data management, the identifier of the first authentication server function in response to the first authentication result confirmation request message.

3. The method according to claim 2, wherein after the sending (716), by the unified data management, the second authentication vector to the second authentication server function in response to the second authentication vector obtaining request message, the method further comprises:
receiving (722), by the unified data management, a second authentication result confirmation request message for the second authentication vector, wherein the second authentication result confirmation request message comprises an identifier of the second authentication server function; and
storing, by the unified data management, the identifier of the second authentication server function in response to the second authentication result confirmation request message;
wherein the storing, by the unified data management, the identifier of the second authentication server function in response to the second authentication result confirmation request message comprises:
replacing, by the unified data management, the identifier of the first authentication server function with the identifier of the second authentication server function.

4. The method according to any one of claims 1 to 3, wherein the sequentially processing, by the unified data management, the first authentication vector obtaining request message and the second authentication vector obtaining request message comprises:
sequentially processing, by the unified data management, the first authentication vector obtaining request message and the second authentication vector obtaining request message in response to an authentication method corresponding to the terminal device being 5th generation authentication and key agreement;
wherein before the sequentially processing, by the unified data management, the first authentication vector obtaining request message and the second authentication vector obtaining request message, the method further comprises:
determining, by the unified data management based on subscription information of the terminal device, that the authentication method corresponding to the terminal device is 5th generation authentication and key agreement.

5. A communication method, comprising:
receiving (802; 804), by a terminal device, a first authentication request message from a first access and mobility management function entity in a first communication network and a second authentication request message from a second access and mobility management function entity in a second communication network; and
sequentially processing, by the terminal device, the first authentication request message and the second authentication request message;
**characterized in that**
the sequentially processing, by the terminal device, the first authentication request message and the second authentication request message comprises:
in response to the first authentication request message, performing (805), by the terminal device, authentication verification on the first communication network and generating (806) a first intermediate key;
when the authentication verification performed by the terminal device succeeds, sending (807), by the terminal device to the first access and mobility management function entity, a first authentication response message indicating that the authentication verification succeeds;
receiving (809), by the terminal device, a first non-access stratum security mode command message from the first access and mobility management function entity, wherein the first non-access stratum security mode command message is associated with the first authentication request message;
in response to the first non-access stratum security mode command message, storing (810), by the terminal device, the first intermediate key, performing, by the terminal device, authentication verification on the second communication network based on the second authentication request message, and generating (811), by the terminal device, a second intermediate key;
receiving (814), by the terminal device, a second non-access stratum security mode command non-access stratum security mode command message from the second access and mobility management function entity, wherein the second non-access stratum security mode command message is associated with the second authentication request message; and
replacing (815), by the terminal device, the stored first intermediate key with the second intermediate key in response to the second non-access stratum security mode command message;
wherein before the receiving (809), by the terminal device, the first non-access stratum security mode command message, the method further comprises:
suspending, by the terminal device, processing of the second authentication request message.

6. The method according to claim 5,
wherein before the suspending, by the terminal device, the processing of the second authentication request message, the method further comprises:
determining, by the terminal device, that an authentication method used by the terminal device to perform the authentication verification on the first communication network is 5th generation authentication and key agreement.

7. The method according to claim 5, wherein the sequentially processing, by the terminal device, the first authentication request message and the second authentication request message comprises:
in response to the first authentication request message, performing (805), by the terminal device, authentication verification on the first communication network and generating (806) a first intermediate key;
when the authentication verification performed by the terminal device succeeds, sending (807), by the terminal device to the first access and mobility management function entity, a first authentication response message indicating that the authentication verification succeeds;
receiving (816), by the terminal device, a first extensible authentication protocol success message from the first access and mobility management function entity, wherein the first extensible authentication protocol success message is associated with the first authentication request message;
in response to the first extensible authentication protocol success message, storing (817), by the terminal device, the first intermediate key, performing, by the terminal device, authentication verification on the second communication network based on the second authentication request message, and generating (818), by the terminal device, a second intermediate key;
receiving (821), by the terminal device, a second extensible authentication protocol success message from the second access and mobility management function entity, wherein the second extensible authentication protocol success message is associated with the second authentication request message; and
replacing (822), by the terminal device, the stored first intermediate key with the second intermediate key in response to the second extensible authentication protocol -success message.

8. The method according to claim 7, wherein before the receiving, by the terminal device, a first extensible authentication protocol success message, the method further comprises:
suspending, by the terminal device, processing of the second authentication request message;
wherein before the suspending, by the terminal device, processing of the second authentication request message, the method further comprises:
determining, by the terminal device, that an authentication method used by the terminal device to perform authentication verification on the first communication network is an improved extensible authentication protocol method for 3rd generation authentication and key agreement.

9. The method according to any one of claims 5 to 8, wherein the terminal device accesses the first communication system by using a first access technology, and the terminal device accesses the second communication network by using a second access technology.

10. A communication apparatus (1100), wherein the communication apparatus is configured to perform the method according to any one of claims 1 to 4.

11. A communication apparatus (1100), wherein the communication apparatus is configured to perform the method according to any one of claims 5 to 9.

12. A computer-readable storage medium, wherein the computer-readable storage medium has program instructions; and when the program instructions are directly or indirectly executed, the method according to any one of claims 1 to 4 or claims 5 to 9 is implemented.

## Patentansprüche

1. Kommunikationsverfahren, umfassend:
Empfangen (703), durch eine einheitliche Datenverwaltung, einer ersten Authentifizierungsvektorerlangungsanforderungsnachricht von einer ersten Authentifizierungsserverfunktion, wobei die erste Authentifizierungsvektorerlangungsanforderungsnachricht zum Erlangen eines Authentifizierungsvektors, der einem Endgerät entspricht, dient;
Empfangen (706), durch die einheitliche Datenverwaltung, einer zweiten
Authentifizierungsvektorerlangungsanforderungsnachricht von einer zweiten Authentifizierungsserverfunktion, wobei die zweite Authentifizierungsvektorerlangungsanforderungsnachricht zum Erlangen eines Authentifizierungsvektors, der dem Endgerät entspricht, dient; und
sequentielles Verarbeiten, durch die einheitliche Datenverwaltung, der ersten Authentifizierungsvektorerlangungsanforderungsnachricht und der zweiten
Authentifizierungsvektorerlangungsanforderungsnachricht;
**dadurch gekennzeichnet, dass** das sequentielle Verarbeiten, durch die einheitliche Datenverwaltung, der ersten Authentifizierungsvektorerlangungsanforderungsnachricht und der zweiten
Authentifizierungsvektorerlangungsanforderungsnachricht Folgendes umfasst:
Senden (708), durch die einheitliche Datenverwaltung, eines ersten Authentifizierungsvektors an die erste Authentifizierungsserverfunktion als Reaktion auf die erste Authentifizierungsvektorerlangungsanforderungsnachricht; und
Senden (716), durch die einheitliche Datenverwaltung, eines zweiten Authentifizierungsvektors an die zweite Authentifizierungsserverfunktion als Reaktion auf die zweite Authentifizierungsvektorerlangungsanforderungsnachricht nach einem Empfangen (714), durch die einheitliche Datenverwaltung,
einer ersten Authentifizierungsergebnisbestätigungsanforderungsnachricht für den ersten Authentifizierungsvektor;
wobei ein Zeitpunkt, zu dem die einheitliche Datenverwaltung die erste Authentifizierungsvektorerlangungsanforderungsnachricht empfängt, vor einem Zeitpunkt des Empfangens der zweiten Authentifizierungsvektorerlangungsanforderungsnachricht liegt,
wobei das Verfahren vor dem Empfangen (714), durch die einheitliche Datenverwaltung, der ersten Authentifizierungsergebnisbestätigungsanforderungsnachricht für den ersten Authentifizierungsvektor ferner Folgendes umfasst:
Aussetzen, durch die einheitliche Datenverwaltung, des Verarbeitens der zweiten Authentifizierungsvektorerlangungsanforderungsnachricht.

2. Verfahren nach Anspruch 1, wobei die erste Authentifizierungsergebnisbestätigungsanforderungsnachricht eine Kennung der ersten Authentifizierungsserverfunktion umfasst und das Verfahren ferner Folgendes umfasst:
Speichern, durch die einheitliche Datenverwaltung, der Kennung der ersten Authentifizierungsserverfunktion als Reaktion auf die erste
Authentifizierungsergebnisbestätigungsanforderungsnachricht.

3. Verfahren nach Anspruch 2, wobei das Verfahren nach dem Senden (716), durch die einheitliche Datenverwaltung, des zweiten Authentifizierungsvektors an die zweite Authentifizierungsserverfunktion als Reaktion auf die zweite Authentifizierungsvektorerlangungsanforderungsnachricht ferner Folgendes umfasst:
Empfangen (722), durch die einheitliche Datenverwaltung, einer zweiten
Authentifizierungsergebnisbestätigungsanforderungsnachricht für den zweiten Authentifizierungsvektor, wobei die zweite Authentifizierungsergebnisbestätigungsanforderungsnachricht eine Kennung der zweiten Authentifizierungsserverfunktion umfasst; und
Speichern, durch die einheitliche Datenverwaltung, der Kennung der zweiten Authentifizierungsserverfunktion als Reaktion auf die zweite Authentifizierungsergebnisbestätigungsanforderungsnachricht;
wobei das Speichern, durch die einheitliche Datenverwaltung, der Kennung der zweiten Authentifizierungsserverfunktion als Reaktion auf die zweite Authentifizierungsergebnisbestätigungsanforderungsnachricht Folgendes umfasst:
Ersetzen, durch die einheitliche Datenverwaltung, der Kennung der ersten Authentifizierungsserverfunktion durch die Kennung der zweiten Authentifizierungsserverfunktion.

4. Verfahren nach einem der Ansprüche 1 bis 3, wobei das sequentielle Verarbeiten, durch die einheitliche Datenverwaltung, der ersten Authentifizierungsvektorerlangungsanforderungsnachricht und der zweiten Authentifizierungsvektorerlangungsanforderungsnachricht Folgendes umfasst:
sequentielles Verarbeiten, durch die einheitliche Datenverwaltung, der ersten Authentifizierungsvektorerlangungsanforderungsnachricht und der zweiten
Authentifizierungsvektorerlangungsanforderungsnachricht als Reaktion darauf, dass ein Authentifizierungsverfahren, das dem Endgerät entspricht, eine Authentifizierung und Schlüsselübereinstimmung der 5. Generation ist;
wobei das Verfahren vor dem sequentiellen Verarbeiten, durch die einheitliche Datenverwaltung, der ersten Authentifizierungsvektorerlangungsanforderungsnachricht und der zweiten
Authentifizierungsvektorerlangungsanforderungsnachricht ferner Folgendes umfasst:
Bestimmen, durch die einheitliche Datenverwaltung, basierend auf Abonnementinformationen des Endgeräts, dass das Authentifizierungsverfahren, das dem Endgerät entspricht, eine Authentifizierung und Schlüsselübereinstimmung der 5. Generation ist.

5. Kommunikationsverfahren, umfassend:
Empfangen (802; 804), durch ein Endgerät, einer ersten Authentifizierungsanforderungsnachricht von einer ersten Zugriffs- und Mobilitätsverwaltungsfunktionseinheit in einem ersten Kommunikationsnetz und einer zweiten Authentifizierungsanforderungsnachricht von einer zweiten Zugriffs- und Mobilitätsverwaltungsfunktionseinheit in einem zweiten Kommunikationsnetz; und
sequentielles Verarbeiten, durch das Endgerät, der ersten Authentifizierungsanforderungsnachricht und der zweiten Authentifizierungsanforderungsnachricht;
**dadurch gekennzeichnet, dass** das sequentielle Verarbeiten, durch das Endgerät, der ersten Authentifizierungsanforderungsnachricht und der zweiten Authentifizierungsanforderungsnachricht Folgendes umfasst:
als Reaktion auf die erste Authentifizierungsanforderungsnachricht, Durchführen (805), durch das Endgerät, einer Authentifizierungsverifikation an dem ersten Kommunikationsnetz und Erzeugen (806) eines ersten Zwischenschlüssels;
wenn die Authentifizierungsverifikation, die durch das Endgerät durchgeführt wird, erfolgreich ist, Senden (807), durch das Endgerät an die erste Zugriffs- und Mobilitätsverwaltungsfunktionseinheit, einer ersten Authentifizierungsantwortnachricht, die anzeigt, dass die Authentifizierungsverifikation erfolgreich ist;
Empfangen (809), durch das Endgerät, einer ersten Non-Access-Stratum-Sicherheitsmodusbefehlsnachricht von der ersten Zugriffs- und Mobilitätsverwaltungsfunktionseinheit, wobei die erste Non-Access-Stratum-Sicherheitsmodusbefehlsnachricht der ersten Authentifizierungsanforderungsnachricht zugeordnet ist; als Reaktion auf die erste Non-Access-Stratum-Sicherheitsmodusbefehlsnachricht, Speichern (810), durch das Endgerät, des ersten Zwischenschlüssels, Durchführen, durch das Endgerät, einer Authentifizierungsverifikation an dem zweiten Kommunikationsnetz basierend auf der zweiten Authentifizierungsanforderungsnachricht und Erzeugen (811), durch das Endgerät, eines zweiten Zwischenschlüssels;
Empfangen (814), durch das Endgerät, einer zweiten Non-Access-Stratum-Sicherheitsmodusbefehls Non-Access-Stratum-Sicherheitsmodusbefehlsnachricht von der zweiten Zugriffs- und Mobilitätsverwaltungsfunktionseinheit, wobei die zweite Non-Access-Stratum-Sicherheitsmodusbefehlsnachricht der zweiten Authentifizierungsanforderungsnachricht zugeordnet ist; und
Ersetzen (815), durch das Endgerät, des gespeicherten ersten Zwischenschlüssels durch den zweiten Zwischenschlüssel als Reaktion auf die zweite Non-Access-Stratum-Sicherheitsmodusbefehlsnachricht;
wobei das Verfahren vor dem Empfangen (809), durch das Endgerät, der ersten Non-Access-Stratum-Sicherheitsmodusbefehlsnachricht ferner Folgendes umfasst:
Aussetzen, durch das Endgerät, des Verarbeitens der zweiten Authentifizierungsanforderungsnachricht.

6. Verfahren nach Anspruch 5,
wobei das Verfahren vor dem Aussetzen, durch das Endgerät, des Verarbeitens der zweiten Authentifizierungsanforderungsnachricht ferner Folgendes umfasst:
Bestimmen, durch das Endgerät, dass ein Authentifizierungsverfahren, das durch das Endgerät dazu verwendet wird, die Authentifizierungsverifikation an dem ersten Kommunikationsnetz durchzuführen, eine Authentifizierung und Schlüsselübereinstimmung der 5. Generation ist.

7. Verfahren nach Anspruch 5, wobei das sequentielle Verarbeiten, durch das Endgerät, der ersten Authentifizierungsanforderungsnachricht und der zweiten Authentifizierungsanforderungsnachricht Folgendes umfasst:
als Reaktion auf die erste Authentifizierungsanforderungsnachricht, Durchführen (805), durch das Endgerät, einer Authentifizierungsverifikation an dem ersten Kommunikationsnetz und Erzeugen (806) eines ersten Zwischenschlüssels;
wenn die Authentifizierungsverifikation, die durch das Endgerät durchgeführt wird, erfolgreich ist, Senden (807), durch das Endgerät an die erste Zugriffs- und Mobilitätsverwaltungsfunktionseinheit, einer ersten Authentifizierungsantwortnachricht, die anzeigt, dass die Authentifizierungsverifikation erfolgreich ist;
Empfangen (816), durch das Endgerät, einer ersten Erfolgsnachricht eines erweiterbaren Authentifizierungsprotokolls von der ersten Zugriffs- und Mobilitätsverwaltungsfunktionseinheit, wobei die erste Erfolgsnachricht eines erweiterbaren Authentifizierungsprotokolls der ersten Authentifizierungsanforderungsnachricht zugeordnet ist;
als Reaktion auf die erste Erfolgsnachricht eines erweiterbaren Authentifizierungsprotokolls, Speichern (817), durch das Endgerät, des ersten Zwischenschlüssels, Durchführen, durch das Endgerät, einer Authentifizierungsverifikation an dem zweiten Kommunikationsnetz basierend auf der zweiten Authentifizierungsanforderungsnachricht und Erzeugen (818), durch das Endgerät, eines zweiten Zwischenschlüssels;
Empfangen (821), durch das Endgerät, einer zweiten Erfolgsnachricht eines erweiterbaren Authentifizierungsprotokolls von der zweiten Zugriffs- und Mobilitätsverwaltungsfunktionseinheit, wobei die zweite Erfolgsnachricht eines erweiterbaren Authentifizierungsprotokolls der zweiten Authentifizierungsanforderungsnachricht zugeordnet ist; und
Ersetzen (822), durch das Endgerät, des gespeicherten ersten Zwischenschlüssels mit dem zweiten Zwischenschlüssel als Reaktion auf die zweite Erfolgsnachricht eines erweiterbaren Authentifizierungsprotokolls.

8. Verfahren nach Anspruch 7, wobei das Verfahren vor dem Empfangen, durch das Endgerät, einer ersten Erfolgsnachricht eines erweiterbaren Authentifizierungsprotokolls ferner Folgendes umfasst:
Aussetzen, durch das Endgerät, des Verarbeitens der zweiten Authentifizierungsanforderungsnachricht;
wobei das Verfahren vor dem Aussetzen, durch das Endgerät, von Verarbeiten der zweiten Authentifizierungsanforderungsnachricht ferner Folgendes umfasst:
Bestimmen, durch das Endgerät, dass ein Authentifizierungsverfahren, das durch das Endgerät dazu verwendet wird, eine Authentifizierungsverifikation an dem ersten Kommunikationsnetz durchzuführen, ein verbessertes Verfahren eines erweiterbaren Authentifizierungsprotokolls für Authentifizierung und Schlüsselübereinstimmung der 3. Generation ist.

9. Verfahren nach einem der Ansprüche 5 bis 8, wobei das Endgerät unter Verwendung einer ersten Zugriffstechnologie auf das erste Kommunikationssystem zugreift und das Endgerät unter Verwendung einer zweiten Zugriffstechnologie auf das zweite Kommunikationsnetz zugreift.

10. Kommunikationsvorrichtung (1100), wobei die Kommunikationsvorrichtung dazu konfiguriert ist, das Verfahren nach einem der Ansprüche 1 bis 4 durchzuführen.

11. Kommunikationsvorrichtung (1100), wobei die Kommunikationsvorrichtung dazu konfiguriert ist, das Verfahren nach einem der Ansprüche 5 bis 9 durchzuführen.

12. Computerlesbares Speichermedium, wobei das computerlesbare Speichermedium Programmanweisungen aufweist; und, wenn die Programmanweisungen direkt oder indirekt ausgeführt werden, das Verfahren nach einem der Ansprüche 1 bis 4 oder der Ansprüche 5 bis 9 implementiert wird.

## Revendications

1. Procédé de communication, comprenant :
la réception (703), par une gestion unifiée de données, d'un premier message de requête d'obtention de vecteur d'authentification provenant d'une première fonction de serveur d'authentification, dans lequel le premier message de requête d'obtention de vecteur d'authentification sert à obtenir un vecteur d'authentification correspondant à un dispositif terminal ;
la réception (706), par la gestion unifiée de données, d'un second message de requête d'obtention de vecteur d'authentification provenant d'une seconde fonction de serveur d'authentification, dans lequel le second message de requête d'obtention de vecteur d'authentification sert à obtenir un vecteur d'authentification correspondant au dispositif terminal ; et
le traitement séquentiel, par la gestion unifiée de données, du premier message de requête d'obtention de vecteur d'authentification et du second message de requête d'obtention de vecteur d'authentification ;
**caractérisé en ce que** le traitement séquentiel, par la gestion unifiée de données, du premier message de requête d'obtention de vecteur d'authentification et du second message de requête d'obtention de vecteur d'authentification comprend :
l'envoi (708), par la gestion unifiée de données, d'un premier vecteur d'authentification à la première fonction de serveur d'authentification en réponse au premier message de requête d'obtention de vecteur d'authentification ; et
l'envoi (716), par la gestion unifiée de données, d'un second vecteur d'authentification à la seconde fonction de serveur d'authentification en réponse au second message de requête d'obtention de vecteur d'authentification après la réception (714), par la gestion unifiée de données, d'un premier message de requête de confirmation de résultat d'authentification pour le premier vecteur d'authentification ;
dans lequel un instant auquel la gestion unifiée de données reçoit le premier message de requête d'obtention de vecteur d'authentification est antérieur à un instant de réception du second message de requête d'obtention de vecteur d'authentification
dans lequel, avant la réception (714), par la gestion unifiée de données, du premier message de requête de confirmation de résultat d'authentification pour le premier vecteur d'authentification, le procédé comprend en outre :
la suspension, par la gestion unifiée de données, du traitement du second message de requête d'obtention de vecteur d'authentification.

2. Procédé selon la revendication 1, dans lequel le premier message de requête de confirmation de résultat d'authentification comprend un identifiant de la première fonction de serveur d'authentification et le procédé comprend en outre :
le stockage, par la gestion unifiée de données, de l'identifiant de la première fonction de serveur d'authentification en réponse au premier message de requête de confirmation de résultat d'authentification.

3. Procédé selon la revendication 2, dans lequel, après l'envoi (716), par la gestion unifiée de données, du second vecteur d'authentification à la seconde fonction de serveur d'authentification en réponse au second message de requête d'obtention de vecteur d'authentification, le procédé comprend en outre :
la réception (722), par la gestion unifiée de données, d'un second message de requête de confirmation de résultat d'authentification pour le second vecteur d'authentification, dans lequel le second message de requête de confirmation de résultat d'authentification comprend un identifiant de la seconde fonction de serveur d'authentification ; et
le stockage, par la gestion unifiée de données, de l'identifiant de la seconde fonction de serveur d'authentification en réponse au second message de requête de confirmation de résultat d'authentification ;
dans lequel le stockage, par la gestion unifiée de données, de l'identifiant de la seconde fonction de serveur d'authentification en réponse au second message de requête de confirmation de résultat d'authentification comprend :
le remplacement, par la gestion unifiée de données, de l'identifiant de la première fonction de serveur d'authentification par l'identifiant de la seconde fonction de serveur d'authentification.

4. Procédé selon l'une quelconque des revendications 1 à 3, dans lequel le traitement séquentiel, par la gestion unifiée de données, du premier message de requête d'obtention de vecteur d'authentification et du second message de requête d'obtention de vecteur d'authentification comprend :
le traitement séquentiel, par la gestion unifiée de données, du premier message de requête d'obtention de vecteur d'authentification et du second message de requête d'obtention de vecteur d'authentification en réponse au fait qu'un procédé d'authentification correspondant au dispositif terminal est une authentification et un accord de clé de 5^{ème} génération ;
dans lequel, avant le traitement séquentiel, par la gestion unifiée de données, du premier message de requête d'obtention de vecteur d'authentification et du second message de requête d'obtention de vecteur d'authentification, le procédé comprend en outre :
la détermination, par la gestion unifiée de données sur la base d'informations d'abonnement du dispositif terminal, du fait que le procédé d'authentification correspondant au dispositif terminal est une authentification et un accord de clé de 5^{ème} génération.

5. Procédé de communication, comprenant :
la réception (802 ; 804), par un dispositif terminal, d'un premier message de requête d'authentification provenant d'une première entité de fonction de gestion d'accès et de mobilité dans un premier réseau de communication et d'un second message de requête d'authentification provenant d'une seconde entité de fonction de gestion d'accès et de mobilité dans un second réseau de communication ; et
le traitement séquentiel, par le dispositif terminal, du premier message de requête d'authentification et du second message de requête d'authentification ;
**caractérisé en ce que** le traitement séquentiel, par le dispositif terminal, du premier message de requête d'authentification et du second message de requête d'authentification comprend :
en réponse au premier message de requête d'authentification, la réalisation (805), par le dispositif terminal, de la vérification d'authentification sur le premier réseau de communication et la génération (806) d'une première clé intermédiaire ;
lorsque la vérification d'authentification réalisée par le dispositif terminal réussit, l'envoi (807), par le dispositif terminal à la première entité de fonction de gestion d'accès et de mobilité, d'un premier message de réponse d'authentification indiquant que la vérification d'authentification a réussi ;
la réception (809), par le dispositif terminal, d'un premier message de commande de mode de sécurité de strate de non-accès provenant de la première entité de fonction de gestion d'accès et de mobilité, dans lequel le premier message de commande de mode de sécurité de strate de non-accès est associé au premier message de requête d'authentification ;
en réponse au premier message de commande de mode de sécurité de strate de non-accès, le stockage (810), par le dispositif terminal, de la première clé intermédiaire, la réalisation, par le dispositif terminal, de la vérification d'authentification sur le second réseau de communication sur la base du second message de requête d'authentification, et la génération (811), par le dispositif terminal, d'une seconde clé intermédiaire ;
la réception (814), par le dispositif terminal, d'un second message de commande de mode de sécurité de strate de non-accès de commande de mode de sécurité de strate de non-accès provenant de la seconde entité de fonction de gestion d'accès et de mobilité, dans lequel le second message de commande de mode de sécurité de strate de non-accès est associé au second message de requête d'authentification ; et
le remplacement (815), par le dispositif terminal, de la première clé intermédiaire stockée par la seconde clé intermédiaire en réponse au second message de commande de mode de sécurité de strate de non-accès ;
dans lequel, avant la réception (809), par le dispositif terminal, du premier message de commande de mode de sécurité de strate de non-accès, le procédé comprend en outre :
la suspension, par le dispositif terminal, du traitement du second message de requête d'authentification.

6. Procédé selon la revendication 5,
dans lequel, avant la suspension, par le dispositif terminal, du traitement du second message de requête d'authentification, le procédé comprend en outre :
la détermination, par le dispositif terminal, du fait que le procédé d'authentification utilisé par le dispositif terminal pour réaliser la vérification d'authentification sur le premier réseau de communication est une authentification et un accord de clé de 5^{ème} génération.

7. Procédé selon la revendication 5, dans lequel le traitement séquentiel, par le dispositif terminal, du premier message de requête d'authentification et du second message de requête d'authentification comprend :
en réponse au premier message de requête d'authentification, la réalisation (805), par le dispositif terminal, de la vérification d'authentification sur le premier réseau de communication et la génération (806) d'une première clé intermédiaire ;
lorsque la vérification d'authentification réalisée par le dispositif terminal réussit, l'envoi (807), par le dispositif terminal à la première entité de fonction de gestion d'accès et de mobilité, d'un premier message de réponse d'authentification indiquant que la vérification d'authentification a réussi ;
la réception (816), par le dispositif terminal, d'un premier message de succès de protocole d'authentification extensible provenant de la première entité de fonction de gestion d'accès et de mobilité, dans lequel le premier message de succès de protocole d'authentification extensible est associé au premier message de requête d'authentification ;
en réponse au premier message de succès de protocole d'authentification extensible, le stockage (817), par le dispositif terminal, de la première clé intermédiaire, la réalisation, par le dispositif terminal, de la vérification d'authentification sur le second réseau de communication sur la base du second message de requête d'authentification, et la génération (818), par le dispositif terminal, d'une seconde clé intermédiaire ;
la réception (821), par le dispositif terminal, d'un second message de succès de protocole d'authentification extensible provenant de la seconde entité de fonction de gestion d'accès et de mobilité, dans lequel le second message de succès de protocole d'authentification extensible est associé au second message de requête d'authentification ; et
le remplacement (822), par le dispositif terminal, de la première clé intermédiaire stockée par la seconde clé intermédiaire en réponse au second message de succès de protocole d'authentification extensible.

8. Procédé selon la revendication 7, dans lequel, avant la réception, par le dispositif terminal, d'un premier message de succès de protocole d'authentification extensible, le procédé comprend en outre :
la suspension, par le dispositif terminal, du traitement du second message de requête d'authentification ;
dans lequel, avant la suspension, par le dispositif terminal, du traitement du second message de requête d'authentification, le procédé comprend en outre :
la détermination, par le dispositif terminal, du fait qu'un procédé d'authentification utilisé par le dispositif terminal pour réaliser une vérification d'authentification sur le premier réseau de communication est un procédé de protocole d'authentification extensible amélioré pour une authentification et un accord de clé de 3^{ème} génération.

9. Procédé selon l'une quelconque des revendications 5 à 8, dans lequel le dispositif terminal accède au premier système de communication en utilisant une première technologie d'accès, et le dispositif terminal accède au second réseau de communication en utilisant une seconde technologie d'accès.

10. Appareil de communication (1100), dans lequel l'appareil de communication est configuré pour réaliser le procédé selon l'une quelconque des revendications 1 à 4.

11. Appareil de communication (1100), dans lequel l'appareil de communication est configuré pour réaliser le procédé selon l'une quelconque des revendications 5 à 9.

12. Support de stockage lisible par ordinateur, dans lequel le support de stockage lisible par ordinateur a des instructions de programme ; et lorsque les instructions de programme sont exécutées directement ou indirectement, le procédé selon l'une quelconque des revendications 1 à 4 ou les revendications 5 à 9 est mis en œuvre.
